(19) Europäisches Patentamt
European Patent Office
Office européen des brevets

(11) EP 1 375 611 A2

(12) # EUROPEAN PATENT APPLICATION

(43) Date of publication:
**02.01.2004 Bulletin 2004/01**

(21) Application number: **03014187.3**

(22) Date of filing: **24.06.2003**

(51) Int Cl.[7]: **C09D 11/00**, C09B 55/00, C09B 23/00, C08K 5/00, C08K 5/34

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **28.06.2002 JP 2002189751**
**18.11.2002 JP 2002333321**

(71) Applicant: **KONICA CORPORATION**
**Tokyo (JP)**

(72) Inventors:
- **Takahashi, Mari**
  **Hino-shi, Tokyo 191-8511 (JP)**
- **Ikesu, Satoru**
  **Hino-shi, Tokyo 191-8511 (JP)**
- **Suzuki, Takatugu**
  **Hino-shi, Tokyo 191-8511 (JP)**
- **Iwamoto, Kyoko**
  **Edogawa-ku, Tokyo 134-0084 (JP)**

(74) Representative: **Henkel, Feiler, Hänzel**
**Möhlstrasse 37**
**81675 München (DE)**

(54) **Colored particle dispersion, ink jet ink, dye, and ink jet recording method**

(57) A colored dispersion comprising a polymer and a dye represented by General Formula (1):

General Formula (1)

X = D-B

wherein X is a group represented by General Formulas (1-1) to (1-15); D is a nitrogen atom or $=CR_1-$, $R_1$ being a hydrogen atom or a substituent; and B is a group represented by General Formulas (2-1) to (2-16).

EP 1 375 611 A2

## Description

### TECHNICAL FIELD

The present invention relates to a colored fine particle dispersion comprising the specified dyes, an ink jet ink, a dye, and an ink jet recording method.

### BACKGROUND

In recent years, instead of using organic solvents, the use of water has been demanded for recording materials and inking materials which are used for printers, printing presses, markers and general writing means. Specifically, increasingly employed as water based recording materials for ink jet recording are those which are comprised mainly of an aqueous solution of water-soluble dyes or are mainly comprised of a fine pigment particle dispersion.

Water based ink, employing water-soluble dyes, is prepared by adding glycols and alkanolamines as a moisturizing agent, surfactants to adjust the surface tension, and if desired, thickeners to an aqueous solution of dyes which are classified mainly to acidic dyes, direct dyes and some food dyes. Such water based ink, employing water-soluble dyes, is most commonly employed due to the fact that clogging rarely occurs in fountain pens as well as printers. However, the aforesaid water based ink tends to result in bleeding on recording paper. As a result, its use has been limited and recording quality is at times degraded. Watersoluble dyes in ink are subjected to penetration in recording paper and drying so as to remain in the paper. As a result, it is difficult to assume that the aforesaid dyes are subjected to "dying", resulting in very low weather resistance.

On the other hand, in order to overcome drawbacks of water based ink, employing water-soluble dyes, exhibiting poor water resistance as well as poor light fastness, an ink jet ink has been proposed in which water dispersible resins are dyed with oil-soluble or hydrophobic dyes. For example, proposed are emulsion polymerization particles which are dyed with oil-soluble dyes, or ink using dispersed polymerization particles (refer to, for example, Patent Publications 1 through 7 cited below).

However, the aforesaid ink, employing polymerization particles, tends to suffer from coagulation of particles followed by precipitation, resulting in insufficient stability of the aforesaid ink. In addition, problems have occurred in which the tone of printed images is unsatisfactory and printing density is not high enough.

In addition, disclosed are inks which are prepared by dispersing colored fine particles comprised of the specified oil-soluble dyes and oil-soluble polymers in water based medium (refer to, for example, Patent Publications 8 through 14). These inks somewhat overcome the aforesaid drawbacks, such as particle coagulation followed by precipitation, degradation of image tone, and insufficient density. However, the resulting improvements are unsatisfactory. Further, the light fastness of printed images is not at all sufficient and pronounced improvement in the light fastness has been sought.

Further, disclosed is an ink jet recording liquid comprising the specified dyes (refer to, for example, Patent Publication 15). However, light fastness of images printed with the aforesaid liquid has been found to be still insufficient and further improvements have been demanded.

(Patent Publication 1)
Japanese Patent Application Open to Public Inspection No. 55-1394721
(Patent Publication 2)
Japanese Patent Application Open to Public Inspection No. 58-45272
(Patent Publication 3)
Japanese Patent Application Open to Public Inspection No. 3-250069
(Patent Publication 4)
Japanese Patent Application Open to Public Inspection No. 8-253720 (claims and examples)
(Patent Publication 5)
Japanese Patent Application Open to Public Inspection No. 8-92513 (claims and examples)
(Patent Publication 6)
Japanese Patent Application Open to Public Inspection No. 8-183920 (claims and examples)
(Patent Publication 7)
Japanese Patent Application Open to Public Inspection No. 2001-11347 (claims and examples)
(Patent Publication 8)
Japanese Patent Application Open to Public Inspection No. 2001-181547 (claims and examples)
(Patent Publication 9)
Japanese Patent Application Open to Public Inspection No. 2001-240763 (claims and examples)
(Patent Publication 10)

Japanese Patent Application Open to Public Inspection No. 2001-271002 (claims and examples)
(Patent Publication 11)
Japanese Patent Application Open to Public Inspection No. 2001-271002 (claims and examples)
(Patent Publication 12)
Japanese Patent Application Open to Public Inspection No. 2001-294770 (claims and examples)
(Patent Publication 13)
Japanese Patent Application Open to Public Inspection No. 2001-294771 (claims and examples)
(Patent Publication 14)
Japanese Patent Application Open to Public Inspection No. 2001-261990 (claims and examples)
(Patent Publication 15)
Japanese Patent Application Open to Public Inspection No. 2000-80295 (claims and Example 2)

## SUMMARY

An object of the present invention is to provide a colored fine particle dispersion which results in excellent light fastness of color images, exhibits excellent dispersion stability, and results in high density as well as excellent color reproduction (tone), an ink jet ink employing the same, which results in excellent color reproduction as well as ejection stability, dyes, and an ink jet recording method thereof.

The aforesaid object of the present invention was achieved employing the embodiments described below.

One structure of the present invention is a colored dispersion comprising a polymer and a dye represented by General Formula (1):

General Formula (1)

$$X = D\text{-}B$$

wherein X is a group represented by General Formulas (1-1) to (1-15); D is a nitrogen atom or $=CR_1$-, $R_1$ being a hydrogen atom or a substituent; and B is a group represented by General Formulas (2-1) to (2-16):

**General Formula (1-1)**

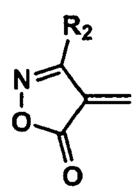

**General Formula (1-2)**

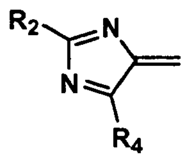

**General Formula (1-3)**

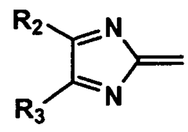

**General Formula (1-4)**

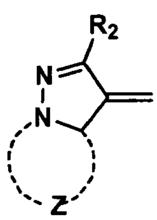

**General Formula (1-5)**

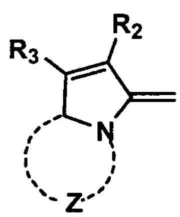

**General Formula (1-6)**

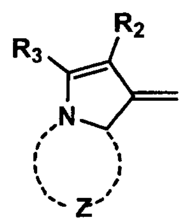

General Formula (1-7)

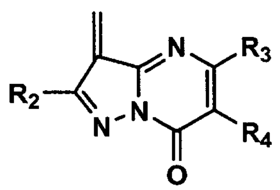

General Formula (1-8)

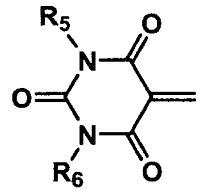

General Formula (1-9)

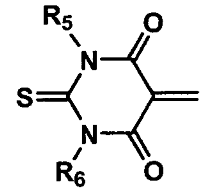

General Formula (1-10)

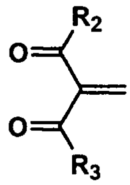

General Formula (1-11)

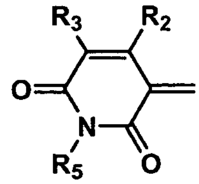

General Formula (1-12)

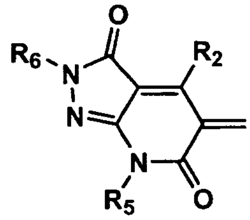

General Formula (1-13)

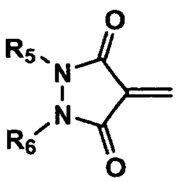

General Formula (1-14)

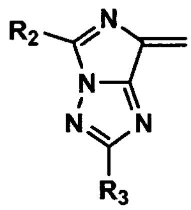

General Formula (1-15)

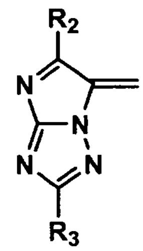

General Formula (2-1)

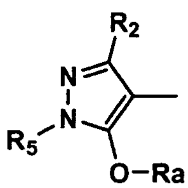

General Formula (2-2)

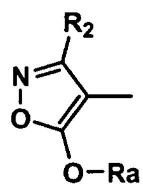

General Formula (2-3)

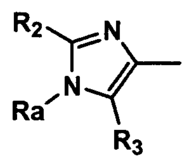

General Formula (2-4)

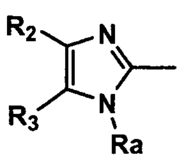

General Formula (2-5)

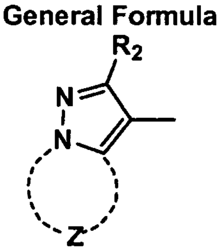

General Formula (2-6)

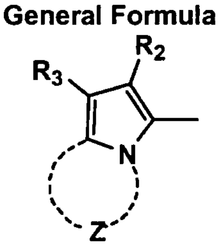

**General Formula (2-7)**

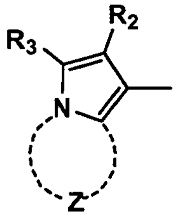

**General Formula (2-8)**

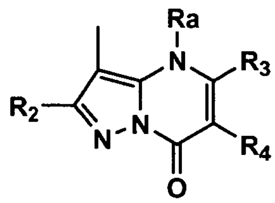

**General Formula (2-9)**

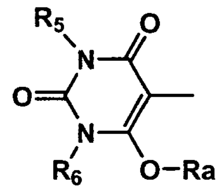

**General Formula (2-10)**

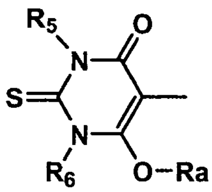

**General Formula (2-11)**

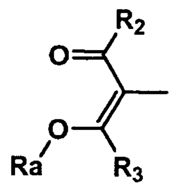

**General Formula (2-12)**

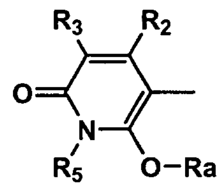

**General Formula (2-13)**

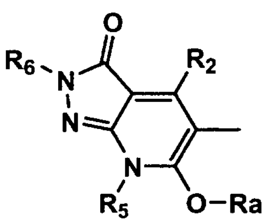

**General Formula (2-14)**

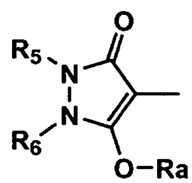

**General Formula (2-15)**

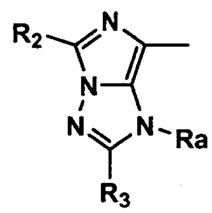

**General Formula (2-16)**

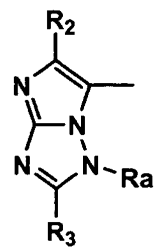

wherein $R_2$, $R_3$, $R_4$, $R_5$, $R_6$, and $R_a$ each is a hydrogen atom or a substituent, provided that $R_2$, $R_3$, $R_4$, $R_5$, $R_6$, or $R_a$ may be jointed together to form a ring; and Z is a group of atoms which forms a 5- or 6-membered heterocyclic ring containing a nitrogen atom in the heterocyclic ring, provided that the heterocyclic ring may have a substituent or may be further condensed with a ring.

Another structure of the present invention is the colored dispersion, wherein the dye is represented by General Formula (2):

General Formula (2)

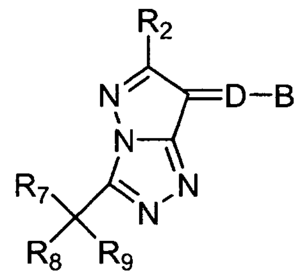

wherein $R_2$ is a hydrogen atom or a substituent; D is a nitrogen atom or $=CR_1$-, $R_1$ being a hydrogen atom or a substituent; B is a group represented by General Formulas (2-1) to (2-16) ; $R_7$ and $R_8$ each being a substituent; and $R_9$ being a hydrogen atom or a substituent.

Another structure of the present invention is a colored dispersion comprising a polymer and a dye represented by General Formula (3):

General Formula (3)

$$A\{L\text{-}G)_q$$

wherein A is a residue of a dye represented by General Formula (1); L is a divalent linking group or a single bond; G is a group comprising a fade preventing group for the dye residue; and q is an integer of 1 or 2, provided that when q is 2, each -L-G may be the same or different.

Another structure of the present invention is the colored dispersion, wherein G in General Formula (3) is a residue of a compound selected from the group consisting of General Formulas (4) to (9), the residue being a part of the compound which is eliminated a hydrogen atom from the compound:

**Genaral Formula (4)**

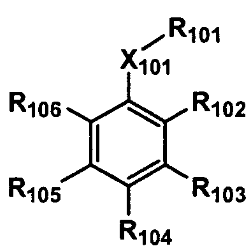

**Genaral Formula (5)**

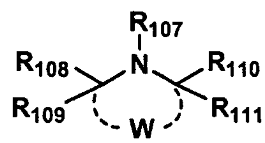

**Genaral Formula (6)**

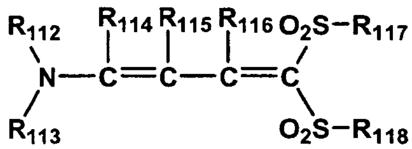

**Genaral Formula (7)**

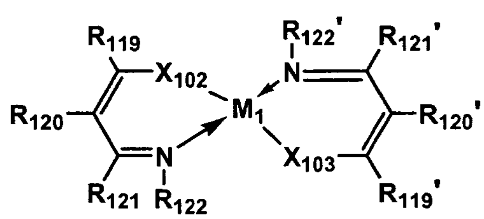

**Genaral Formula (8)**

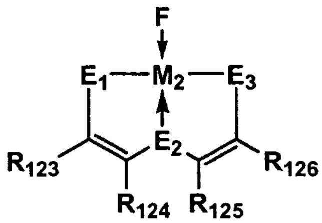

**Genaral Formula (9)**

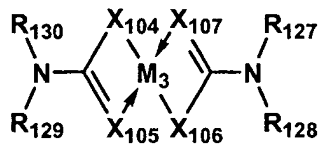

wherein $R_{101}$ represents a hydrogen atom, an alkyl group, an alkenyl group, an aryl group, a heterocyclic group, a silyl group, or a phosphino group; $X_{101}$ represents -O-, -S-, or -($NR_d$)-, wherein $R_d$ represents a hydrogen atom, an alkyl group, or an aryl group; $R_{102}$, $R_{103}$, $R_{104}$, $R_{105}$, and $R_{106}$ each represents a hydrogen atom or a non-metallic substituent and substituents at the ortho position of $R_{102}$ through $R_{106}$ can be joined together to form a 5- to 7-membered ring; $R_{107}$ represents a hydrogen atom, an alkyl group, an alkenyl group, an aryl group, a hydroxyl group, an acyl group, a sulfonyl group, or a sulfinyl group; W represents a group of non-metallic atoms necessary to form a 5- to 7-membered ring having either an oxygen atom or a nitrogen atom; $R_{108}$, $R_{109}$, $R_{110}$, and $R_{111}$ each represents a hydrogen atom or a non-metallic substituent; $R_{112}$, $R_{113}$, $R_{114}$, $R_{115}$, $R_{116}$, $R_{117}$, and $R_{118}$ each represents a non-metallic substituent exhibiting an ultraviolet ray absorbing function; $M_1$ and $M_2$ each represents copper, cobalt, nickel, palladium, or platinum; $M_3$ represents nickel, cobalt, or iron; $R_{119}$, $R_{120}$, $R_{121}$, $R_{119}'$ , $R_{120}'$, and $R_{121}'$ each represents a hydrogen atom, an alkyl group, or an aryl group; $R_{122}$ and $R_{122}'$ each represents a hydrogen atom, an alkyl group, an aryl group, a hydroxyl group, an alkoxy group, or an aryloxy group; $X_{102}$ and $X_{103}$ each represents -O-, or -S-; each substituent of $R_{119}$ through $R_{122}$ and $R_{119}'$ through $R_{122}'$ can be joined together with an adjacent group to form an aromatic ring or a 5- to 8-membered ring; $E_1$ and $E_3$ each independently represents -O-, -S-, or -N ($R_{131}$) -; an $E_1$-$M_2$ bond or an $E_3$-$M_2$ bond may be a coordinate bond and in such cases, $E_1$ and $E_2$ each represents a hydroxyl group, a mercapto group, an alkoxy group, an alkylthio group, or -N ($R_{131}$) ($R_{132}$), wherein $R_{131}$ and $R_{132}$ each represents a hydrogen atom, an alkyl group, an aryl group, or a hydroxyl group; $E_2$ represents -O-, -S-, or -N($R_{133}$)-, wherein $R_{133}$ represents a hydrogen atom or an aryl group; $R_{123}$ through $R_{126}$ each independently represents a hydrogen atom, an alkyl group or an aryl group; herein at least two substituents selected from the group consisting of $R_{123}$ and $R_{124}$, $R_{125}$ and $R_{126}$, and $R_{124}$ and $R_{125}$ can be joined together to form a 5- to 8-membered ring; F represents a compound which is capable of coordinating to $M_2$, and the number of coordination positions of the compound is 1 to 5; $R_{127}$ through $R_{130}$ each independently represents a hydrogen atom, an alkyl group, an aryl group, or a heterocyclic group; $X_{104}$ through $X_{107}$ each represents -S-, or -O- ; $M_3$ represents nickel, cobalt, or iron; $R_{127}$ and $R_{128}$ or $R_{129}$ and $R_{130}$, can be joined together to form a ring structure.

Another structure of the present invention is an ink-jet ink comprising the above-described colored particle dispersion.

Another structure of the present invention is a method for recording an image comprising a step of:

jetting a droplet of the above-described ink-jet ink onto a surface of a recording sheet.

Another structure of the present invention is a dye represented by General Formula (1), wherein X or B in General Formula (1) is substituted with at least one hydrogen bonding group selected from the group consisting of -OH, -$NHSO_2Rb$, -NHCOORb, -NHCONHRb, or -NHCORc, Rb being a substituent and Rc being an aryl group, a heterocyclic group, or a branched alkyl group.

Another structure of the present invention is the above-described dye, wherein the dye is further represented by General Formula (2):

General Formula (2)

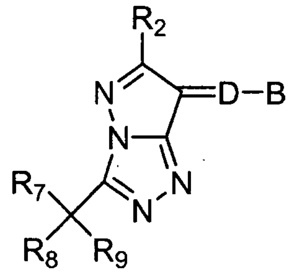

wherein $R_2$ is a hydrogen atom or a substituent; D is a nitrogen atom or $=CR_1-$, $R_1$ being a hydrogen atom or a substituent; B is a group represented by General Formulas (2-1) to (2-16) ; $R_7$ and $R_8$ each being a substituent; and $R_9$ being a hydrogen atom or a substituent.

Another structure of the present invention is a dye represented by General Formula (3).

Another structure of the present invention is the dye, wherein G in General Formula (3) is selected from the group consisting of General Formulas (4) to (9).

## BRIEF DESCRIPTION OF THE DRAWINGS

Fig. 1 shows absorption spectra in the visible region of an acetone solution of Dye D-211 of the present invention.
Fig. 2 shows NMR spectra of Dye D-211 of the present invention.

## DESCRIPTION OF THE PREFERRED EMBODIMENTS

The present invention will now be detailed. Initially, dyes according to the present invention are described in detail. In General Formula (1), X represents aforesaid General Formulas (1-1) through (1-15), and B represents aforesaid General Formulas (2-1) through (2-16).

$R_2$, $R_3$, $R_4$, $R_5$, $R_6$, and $R_a$ each represents a hydrogen atom or a substituent. Listed as substituents are a halogen atom, an alkyl group (an alkyl group having from 1 to 12 carbon atoms such as a methyl group, an ethyl group, a butyl group, an isopropyl group, a t-butyl group, a hydroxyethyl group, a methoxyethyl group, a cyanoethyl group, a trifluoromethyl group, a 3-sulfopropyl group, and a 4-sulfobutyl group), a cycloalkyl group (e.g., a cyclohexyl group and a cyclopentyl group), an aralkyl group (e.g., a benzyl group and a 2-phentyl group), an aryl group (e.g., a phenyl group, a p-tolyl group, a p-methoxyphenyl group, an o-chlorophenyl group, and an m-(3-sulfopropylamino)phenyl group), a heterocyclic group (e.g., a 2-pyridyl group, a 2-thienyl group, and a 2-furyl group), an alkoxy group (an alkoxy group having from 1 to 12 carbon atoms, such as a methoxy group, an ethoxy group, an isopropoxy group, a methoxyethoxy group, a hydroxyethoxy group, and a 3-carboxypropoxy group), an aryloxy group (e.g., a phenoxy group, a p-methoxyphenyl group, and an o-methoxyphenoxy group), an acylamino group (e.g., an acetylamino group, a propionylamino group, a benzoylamino group, and a 3,5-disulfobenzoylamino group), a sulfonylamino group (e.g., a methanesulfonylamino group, a benzenesulfonylamino group, and a 3-carboxybenzenesulfonylamino group), an ureido group (e.g., a 3-methylureido group, a 3,3-dimethylureido group, and a 3-phenylureido group), an alkylthio group (e.g., a methylthio group and an ethylthio group), an arylthio group (e.g., a phenylthio group and a p-tolylthio group), an alkoxycarbonyl group (e.g., a methoxycarbonyl group and an ethoxycarbonyl group), a carbamoyl group (e.g., a methylcarbamoyl group and a dimethylcarbamoyl group), a sulfamoyl group (e.g., a dimethylsulfamoyl group and a di-(2-hydroxyethyl) sulfamoyl group), a sulfonyl group (e.g., a methanesulfonyl group and a phenylsulfamoyl group), an acyl group (e.g., an acetyl group and a benzoyl group), a cyano group, an amino group (e.g., a methylamino group and a diethylamino group), a sulfonic acid group (or salts thereof), and a carboxylic acid group (or salts thereof). All of these may have a substituent.

Z represents a group of atoms forming a nitrogen containing heterocyclic ring which may have a 5- or 6-membered substituent. Listed as specific examples of the aforesaid heterocyclic rings may be pyrrole, pyrazole, imidazole, triazole, thiadiazole, oxazole, thiazole, pyran, pyridine, pyridazine, pyrazine, triazine, indole, benzothiophene, benzimidazole, benzothiazole, benzoxazole, purine, quinoline, isoquinoline, coumarin, chromone, 3H-pyrrole, 3H-pyrolidine, oxazolidine, imidazolidine, thiazolidine, 3H-indole, indandione, barubiture, pyrazoloazole, imidazole, and pyrroloazole. Of these, preferably listed are pyridine, pyrimidine, pyrazole, triazole, imidazole, oxazole, pyrrole, and 3H-indole. These rings may form a condensed ring with another carbon ring (such as a benzene ring) and a heterocyclic ring (such as a pyridine ring). Listed as substituents which may have a ring may be those groups as defined above, but preferably listed are an alkyl group, an aryl group, a heterocyclic group, an acyl group, an amino group, a nitro group, a cyano group, an acylamino group, an alkoxy group, a hydroxyl group, an alkoxycarbonyl group, a sulfonic acid group, a carboxylic acid group, and a halogen atom. These groups may be further substituted.

X preferably represents General Formula (1-2), General Formula (1-4), General Formula (1-5), or General Formula (1-6), more preferably represents General Formula (1-2) or General Formula (1-4), and most preferably represents General Formula (1-4).

B preferably represents General Formula (2-3), General Formula (2-4), General Formula (2-5), General Formula (2-6), or General Formula (2-7), more preferably represents General Formula (2-3) or General Formula (2-5), and most preferably represents General Formula (2-3).

D represents either a nitrogen atom or $=CR_1-$, but preferably represents the aforesaid nitrogen atom.

It is particularly preferred when X represents General Formula (1-2) or General Formula (1-4), D represents a nitrogen atom, and D represents General Formula (2-3), General Formula (2-5), General Formula (2-6), or General Formula (2-7).

The group represented by General Formula (2-3) according to the present invention can have the structure represented by General Formula (2-3a) described below which is an isomer of General Formula (2-3).

General Formula (2-3a)

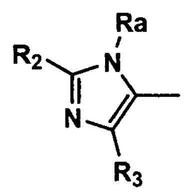

wherein $R_2$, $R_3$, and $R_a$ are as defined above for $R_2$, $R_3$, and $R_a$ in aforesaid General Formula (2-3).

The hydrogen bonding group, as described in the present invention, represents at least one substituent selected from the group consisting of -OH, $-NHSO_2Rb$ (wherein Rb represents a substituent), -NHCOORb (wherein Rb is as defined above), -NHCONHRb (wherein Rb is as defined above), and -NHCORc (wherein Rc represents an aryl group, a heterocyclic group, or a branched alkyl group).

Rc represents an aryl group, a heterocyclic group, or a branched alkyl group, preferably represents an aryl group or a heterocyclic group, and more preferably represents an aryl group.

The hydrogen bonding group preferably represents -OH, $-NHSO_2Rb$, -NHCOORb, -NHCONHRb, or -NHCORb, more preferably represents -OH or $-NHSO_2Rb$.

In General Formula (2), $R_2$ and $R_9$ each represents a hydrogen atom or a substituent, and $R_7$ and $R_8$ each represents a substituent which is defined as above.

D represents a nitrogen atom or $=CR_1-$, wherein $R_1$ represents a hydrogen atom or a substituent which is defined as above.

B represents the group represented by aforesaid General Formulas (2-1) through (2-16). Of these, B preferably represents General Formula (2-3), (2-4), (2-5), (2-6), or (2-7), represents more preferably General Formula (2-3) or (2-5), and represents most preferably General Formula (2-3).

In General Formula (3), A represents a dye residue group represented by aforesaid General Formula (1); L represents a divalent linking group or a simple bonding means; and G represents a group comprised of a atomic group which retards fading or a group substituted with the group having the aforesaid atomic group. q represents 1 or 2, and when q represents 2, two -L-G-s may be the same or different.

In General Formula (3), the linking group, represented by L, is preferably $-N(R_b')-$ (wherein $R_b'$ represents a hydrogen atom, a substituted or unsubstituted alkyl group, or a substituted or unsubstituted aryl group), $-SO_2-$, -C(=O)-, a substituted or unsubstituted alkylene group, a substituted or unsubstituted phenylene group, a substituted or unsubstituted naphthylene group, -O-, -S-, and a linking group which is formed by joining at least two of these.

Of these, more preferred are groups represented by $-NR_b'$, $-SO_2-$, $-NR_b'-CO-$, and $-R_c'-(L')_k-(R_d')_l-$.

$R_c'$ and $R_d'$ each represents an alkylene group, a phenylene group or a naphthylene group; L' represents -O-, -CO-, -SO-, $-SO_2-$, $-SO_2NH-$, $-NHSO_2-$, -CONH- or -NHCO-; k represents 0 or 1; and when k = 1, l represents 1, while when k = 0, l represents 1 or 0. Further, those formed by combining with $-NR_b-SO_2-$, $-NR_b'-CO-$, and $R_c'-(L')_k-(R_d')_l-$

are also preferred.

Preferred examples of $R_b$' include a hydrogen atom or a substituted or unsubstituted alkyl group having from 1 to 6 carbon atoms.

Preferred examples of $R_c$' and $R_d$' include a substituted or unsubstituted alkylene group having from 1 to 6 carbon atoms (herein, listed as substituents are, for example, an alkyl group, an alkoxy group, a hydroxyl group, a halogen atom, and a cyano group), a substituted or unsubstituted phenylene group (including ortho, meta, and para and listed as substituents are an alkyl group, an alkoxy group, a halogen atom, a hydroxyl group, a carboxyl group, a sulfamoyl group, an alkylsulfonylamino group, and a sulfamido group), and a substituted or unsubstituted naphthylene group (listed as substituents are substituents of the aforesaid phenylene group).

Further, L represents a simple bonding means, -N-, or - C($R_1$)=, and $R_1$ represents a hydrogen atom or a substituent, which may be joined with L via $R_1$. $R_1$ is preferably an alkyl group which may be substituted or an aryl group (being preferably a phenyl group) which may be substituted.

When L is a simple linking means, it is critical that the atomic group represented by the group represented by G does not eliminate effects to retard dye discoloration.

Specifically, when the group represented by G is one which is formed by removing a hydrogen atom from the bonding position in which at least one of the compounds selected from the group represented by aforesaid General Formulas (4), (6), (7), (8) and (9) can be combined with L, it is undesirable that the resulting group is directly conjugated with the chromogenic system (being a $\pi$ conjugated system) of dyes.

However, in the following case, it may be permitted to describe that the direct conjugation results. A bulky substituent is introduced into a portion adjacent to the joining portion of the group represented by A and the group represented by G with the group represented by L, whereby the conjugated system of the group represented by A and the conjugated system of the group represented by G are twisted three-dimensionally, and thereby are substantially isolated from the conjugated system.

The atomic group (being a group of atoms) exhibiting anti-fading effects of compounds represented by General Formula (3) of the present invention will now be further detailed.

In the present invention, anti-fading effects refer specifically to lightfastness enhancing effects. In General Formula (4), $R_{101}$ represents a hydrogen atom, an alkyl group, an alkenyl group, an aryl group, a heterocyclic group, a silyl group, and a phosphino group. Of these, preferred are a hydrogen atom, an alkyl group (having from 1 to 6 carbon atoms, such as a methyl group, an ethyl group, and a propyl group), and an aryl group (e.g., a phenyl group).

$X_{101}$ represents -O-, -S-, or -N($R_a$)-, wherein $R_a$ represents a hydrogen atom, an alkyl group, or an aryl group. Of these, -O- is preferred.

$R_{102}$, $R_{103}$, $R_{104}$, $R_{105}$, and $R_{106}$ each represents a hydrogen atom or a non-metallic substituent. Specific examples include a hydrogen atom, -$X_{101}$-$R_{101}$, an alkyl group, an alkenyl group, an aryl group, a heterocyclic group, an alkyloxycarbonyl group, an aryloxycarbonyl group, a halogen atom, an acyl group, an acylamino group, a sulfonyl group, a carbamoyl group, a sulfamoyl group, a cyano group, a nitro group, a sulfo group, or a carboxyl group.

$R_{102}$ through $R_{106}$ each preferably represents a hydrogen atom, -O-$R_{101}$, -S-$R_{101}$, -N (Ra) -$R_{101}$, an alkyl group (having from 1 to 6 carbon atoms, such as a methyl group, an ethyl group, or a t-butyl group), a halogen atom (e.g., an F and Cl atom), an acyl group (e.g., an acetyl group), an acylamino group (e.g., an acetylamino group), and an alkoxycarbonyl group (e.g., a methoxycarbonyl group).

$R_{101}$ through $R_{105}$ each can be joined with a substituent at the ortho position to form a 5- to 7-membered ring.

In General Formula (4), it is more preferable that $X_{101}$ represents -O-; $R_{101}$ represents an alkyl group; and at least one of $R_{102}$ or $R_{104}$ represents -O-$R_{101}$ (wherein $R_{101}$ represents an alkyl group) or -N($R_a$) -$R_{101}$ (wherein $R_{101}$ represents an alkyl group).

Further, of compounds represented by General Formula (4), the compounds represented by General Formula (2 - $\alpha$), (2 - $\beta$), (2 - $\gamma$) , or (2 - $\delta$) are most preferred.

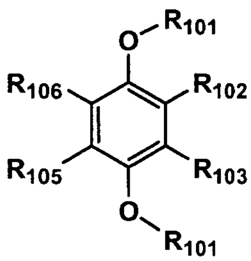

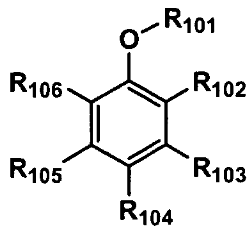

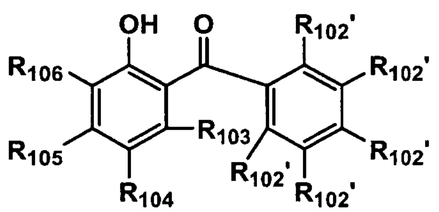

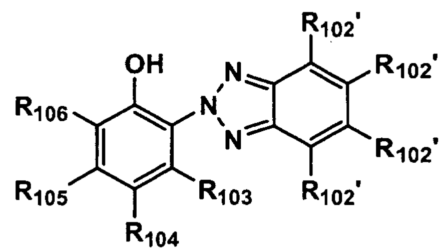

In General Formulas (2 - α) , (2 - β), (2 - γ) , and (2 - δ), $R_{101}$ represents an alkyl group, and $R_{101}$ through $R_{106}$ each is as defined for $R_{102}$ through $R_{106}$ described in aforesaid General Formula (4) which are also preferred. $R_{102}'$ is as defined above for $R_{102}$.

In General Formula (5), $R_{107}$ represents a hydrogen atom, an alkyl group, an aryl group, a hydroxyl group, a sulfonyl group, or a sulfinyl group.

Of these, it is preferable that $R_{107}$ represents a hydrogen atom, an alkyl group having from 1 to 6 carbon atoms (e.g., a methyl group, an ethyl group, and a t-butyl group), and an acyl group having from 1 to 7 carbon atoms (e.g., an acetyl group, a propionyl group, and an acryloyl group).

W represents a group of non-metallic atoms necessary for forming a 5- to 7-membered ring containing an oxygen atom or a nitrogen atom. Of these, groups are preferred which are represented by General Formulas (3 - α) and (3 - β) while including the combined carbon atom.

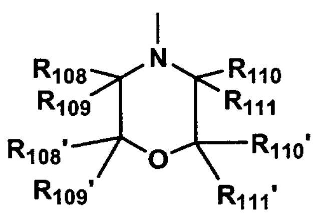

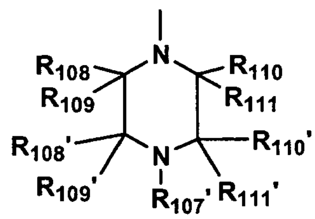

$R_{108}$, $R_{109}$, $R_{110}$, and $R_{111}$ each may be the same or different and represents a hydrogen atom or a non-metallic substituent. Those represented by each of $R_{108}'$ through $R_{111}'$ are preferably a hydrogen atom, an alkyl group, an alkoxy group, an acyloxy group, an alkylamino group, an arylamino group, or a sulfonamido group. Of groups represented by $R_{108}'$ through $R_{111}'$, those which are adjacent to each other can be joined together to form a 5- to 7-membered ring. $R_{107}'$ is as defined above for $R_{107}$.

Listed as specific examples of residues, which are formed by removing a hydrogen atom from the joining position of the compound represented by aforesaid General Formula (6) and the compound represented by L, are groups represented by General Formula (4 - α) describe below.

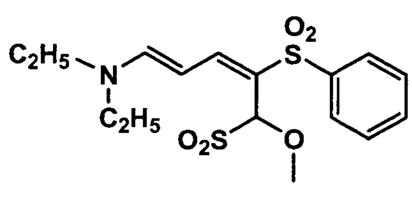

In aforesaid General Formulas (7), (8), and (9), $M_1$ and $M_2$ each represents copper, cobalt, nickel, palladium, or platinum, and $M_3$ represents nickel, cobalt or iron. Those represented by each of $M_1$, $M_2$, and $M_3$ are preferably nickel or cobalt.

In General Formulas (8), (9), (10), (23), and (24), $X_1$ represents a substituent, and specifically listed are, for example, residues of 5-pyrazolone, imidazole, pyrazolopyrrole, pyrazoloimidazole, pyrazolotriazole, pyrazolotetrazole, pyrazopyrimidine-7-one, barbituric acid, thiobarbituric acid, rhodanine, hydantoin, thiohydantoin, oxazolone, isoxazolone, indandione, pyrazolidinedione, oxazolidinedione, hydroxypyridone, pyrazolopyridone, and cyclohexadienone.

Specific examples of dyes represented by aforesaid General Formulas (1) through (3) are shown below. However, the present invention is not limited by these specific examples.

Table 1

| Dye Number | X | D | B |
|---|---|---|---|
| D-1 | 1-1 | 2-1 | 3-1 |
| D-2 | 1-2 | 2-1 | 3-4 |
| D-3 | 1-3 | 2-7 | 3-11 |
| D-4 | 1-4 | 2-1 | 3-15 |
| D-5 | 1-5 | 2-5 | 3-24 |
| D-6 | 1-6 | 2-1 | 3-36 |
| D-7 | 1-7 | 2-1 | 3-34 |
| D-8 | 1-8 | 2-1 | 3-52 |
| D-9 | 1-9 | 2-6 | 3-66 |
| D-10 | 1-10 | 2-1 | 3-77 |
| D-11 | 1-11 | 2-3 | 3-84 |
| D-12 | 1-12 | 2-1 | 3-14 |
| D-13 | 1-12 | 2-2 | 3-38 |
| D-14 | 1-12 | 2-1 | 3-54 |
| D-15 | 1-13 | 2-1 | 3-9 |
| D-16 | 1-13 | 2-1 | 3-19 |
| D-17 | 1-14 | 2-2 | 3-35 |
| D-18 | 1-14 | 2-1 | 3-10 |
| D-19 | 1-14 | 2-1 | 3-42 |
| D-20 | 1-14 | 2-1 | 3-81 |
| D-21 | 1-15 | 2-4 | 3-2 |
| D-22 | 1-15 | 2-1 | 3-27 |
| D-23 | 1-16 | 2-1 | 3-29 |
| D-24 | 1-16 | 2-1 | 3-75 |
| D-25 | 1-16 | 2-1 | 3-86 |
| D-26 | 1-17 | 2-1 | 3-26 |
| D-27 | 1-17 | 2-1 | 3-61 |
| D-28 | 1-17 | 2-1 | 3-64 |
| D-29 | 1-18 | 2-1 | 3-29 |
| D-30 | 1-18 | 2-1 | 3-67 |
| D-31 | 1-19 | 2-1 | 3-21 |
| D-32 | 1-19 | 2-1 | 3-33 |
| D-33 | 1-19 | 2-1 | 3-60 |
| D-34 | 1-20 | 2-1 | 3-20 |
| D-35 | 1-20 | 2-1 | 3-91 |
| D-36 | 1-21 | 2-1 | 3-8 |
| D-37 | 1-22 | 2-1 | 3-22 |

Table 1 (continued)

| Dye Number | X | D | B |
|---|---|---|---|
| D-38 | 1-22 | 2-1 | 3-46 |
| D-39 | 1-23 | 2-2 | 3-80 |
| D-40 | 1-23 | 2-1 | 3-69 |
| D-41 | 1-24 | 2-1 | 3-18 |
| D-42 | 1-24 | 2-1 | 3-31 |
| D-43 | 1-25 | 2-5 | 3-62 |
| D-44 | 1-25 | 2-1 | 3-78 |
| D-45 | 1-26 | 2-1 | 3-85 |
| D-46 | 1-26 | 2-1 | 3-92 |
| D-47 | 1-27 | 2-1 | 3-5 |
| D-48 | 1-27 | 2-1 | 3-25 |
| D-49 | 1-28 | 2-1 | 3-28 |
| D-50 | 1-29 | 2-1 | 3-44 |

Table 2

| Dye Number | X | D | B |
|---|---|---|---|
| D-51 | 1-30 | 2-1 | 3-82 |
| D-52 | 1-31 | 2-1 | 3-3 |
| D-53 | 1-31 | 2-1 | 3-30 |
| D-54 | 1-31 | 2-6 | 3-48 |
| D-55 | 1-32 | 2-1 | 3-49 |
| D-56 | 1-32 | 2-1 | 3-52 |
| D-57 | 1-32 | 2-1 | 3-57 |
| D-58 | 1-32 | 2-1 | 3-74 |
| D-59 | 1-33 | 2-2 | 3-86 |
| D-60 | 1-33 | 2-1 | 3-89 |
| D-61 | 1-33 | 2-1 | 3-16 |
| D-62 | 1-33 | 2-1 | 3-37 |
| D-63 | 1-34 | 2-1 | 3-14 |
| D-64 | 1-34 | 2-1 | 3-38 |
| D-65 | 1-34 | 2-1 | 3-90 |
| D-66 | 1-34 | 2-1 | 3-88 |
| D-67 | 1-35 | 2-1 | 3-17 |
| D-68 | 1-35 | 2-1 | 3-28 |
| D-69 | 1-35 | 2-1 | 3-23 |
| D-70 | 1-35 | 2-1 | 3-47 |
| D-71 | 1-35 | 2-1 | 3-51 |
| D-72 | 1-35 | 2-1 | 3-60 |

Table 2 (continued)

| Dye Number | X | D | B |
|---|---|---|---|
| D-73 | 1-36 | 2-1 | 3-73 |
| D-74 | 1-36 | 2-1 | 3-12 |
| D-75 | 1-36 | 2-1 | 3-17 |
| D-76 | 1-36 | 2-1 | 3-50 |
| D-77 | 1-36 | 2-1 | 3-65 |
| D-78 | 1-36 | 2-1 | 3-79 |
| D-79 | 1-36 | 2-1 | 3-55 |
| D-80 | 1-37 | 2-1 | 3-13 |
| D-81 | 1-37 | 2-1 | 3-40 |
| D-82 | 1-38 | 2-1 | 3-83 |
| D-83 | 1-38 | 2-1 | 3-76 |
| D-84 | 1-39 | 2-1 | 3-5 |
| D-85 | 1-39 | 2-7 | 3-65 |
| D-86 | 1-39 | 2-1 | 3-59 |
| D-87 | 1-40 | 2-1 | 3-79 |
| D-88 | 1-40 | 2-1 | 3-25 |
| D-89 | 1-40 | 2-1 | 3-43 |
| D-90 | 1-41 | 2-1 | 3-71 |
| D-91 | 1-41 | 2-1 | 3-73 |
| D-92 | 1-41 | 2-1 | 3-87 |
| D-93 | 1-42 | 2-1 | 3-7 |
| D-94 | 1-42 | 2-6 | 3-12 |
| D-95 | 1-42 | 2-1 | 3-16 |
| D-96 | 1-42 | 2-1 | 3-45 |
| D-97 | 1-43 | 2-1 | 3-56 |
| D-98 | 1-43 | 2-1 | 3-63 |
| D-99 | 1-44 | 2-1 | 3-71 |
| D-100 | 1-44 | 2-1 | 3-68 |

Table 3

| Dye Number | X | D | B |
|---|---|---|---|
| D-101 | 1-45 | 2-1 | 3-90 |
| D-102 | 1-45 | 2-1 | 3-9 |
| D-103 | 1-46 | 2-1 | 3-27 |
| D-104 | 1-47 | 2-1 | 3-32 |
| D-105 | 1-47 | 2-1 | 3-38 |
| D-106 | 1-47 | 2-1 | 3-79 |
| D-107 | 1-47 | 2-1 | 3-78 |

Table 3 (continued)

| Dye Number | X | D | B |
|---|---|---|---|
| D-108 | 1-48 | 2-1 | 3-83 |
| D-109 | 1-48 | 2-1 | 3-19 |
| D-110 | 1-48 | 2-1 | 3-39 |
| D-111 | 1-49 | 2-1 | 3-9 |
| D-112 | 1-49 | 2-1 | 3-14 |
| D-113 | 1-50 | 2-1 | 3-21 |
| D-114 | 1-50 | 2-2 | 3-30 |
| D-115 | 1-51 | 2-1 | 3-34 |
| D-116 | 1-51 | 2-1 | 3-51 |
| D-117 | 1-52 | 2-1 | 3-4 |
| D-118 | 1-52 | 2-1 | 3-17 |
| D-119 | 1-52 | 2-1 | 3-35 |
| D-120 | 1-52 | 2-1 | 3-52 |
| D-121 | 1-53 | 2-1 | 3-8 |
| D-122 | 1-54 | 2-3 | 3-38 |
| D-123 | 1-54 | 2-1 | 3-26 |
| D-124 | 1-54 | 2-1 | 3-54 |
| D-125 | 1-54 | 2-1 | 3-64 |
| D-126 | 1-55 | 2-1 | 3-6 |
| D-127 | 1-55 | 2-1 | 3-21 |
| D-128 | 1-55 | 2-1 | 3-44 |
| D-129 | 1-56 | 2-1 | 3-67 |
| D-130 | 1-56 | 2-1 | 3-48 |
| D-131 | 1-56 | 2-4 | 3-51 |
| D-132 | 1-56 | 2-1 | 3-77 |
| D-133 | 1-57 | 2-1 | 3-13 |
| D-134 | 1-57 | 2-1 | 3-18 |
| D-135 | 1-57 | 2-1 | 3-30 |
| D-136 | 1-58 | 2-1 | 3-58 |
| D-137 | 1-58 | 2-1 | 3-61 |
| D-138 | 1-58 | 2-1 | 3-89 |
| D-139 | 1-59 | 2-1 | 3-10 |
| D-140 | 1-59 | 2-1 | 3-14 |
| D-141 | 1-60 | 2-1 | 3-39 |
| D-142 | 1-60 | 2-2 | 3-60 |
| D-143 | 1-61 | 2-1 | 3-66 |
| D-144 | 1-61 | 2-1 | 3-22 |
| D-145 | 1-62 | 2-1 | 3-19 |

Table 3 (continued)

| Dye Number | X | D | B |
|---|---|---|---|
| D-146 | 1-62 | 2-1 | 3-72 |
| D-147 | 1-63 | 2-1 | 3-7 |
| D-148 | 1-63 | 2-1 | 3-16 |
| D-149 | 1-64 | 2-1 | 3-32 |
| D-150 | 1-64 | 2-3 | 3-36 |

Table 4

| Dye Number | X | D | B |
|---|---|---|---|
| D-151 | 1-65 | 2-1 | 3-41 |
| D-152 | 1-65 | 2-1 | 3-58 |
| D-153 | 1-66 | 2-1 | 3-63 |
| D-154 | 1-66 | 2-1 | 3-70 |
| D-155 | 1-67 | 2-1 | 3-67 |
| D-156 | 1-67 | 2-1 | 3-92 |
| D-157 | 1-68 | 2-1 | 3-11 |
| D-158 | 1-68 | 2-1 | 3-15 |
| D-159 | 1-69 | 2-1 | 3-27 |
| D-160 | 1-69 | 2-7 | 3-82 |
| D-161 | 1-70 | 2-1 | 3-85 |
| D-162 | 1-71 | 2-1 | 3-6 |
| D-163 | 1-72 | 2-1 | 3-20 |
| D-164 | 1-73 | 2-1 | 3-23 |
| D-165 | 1-74 | 2-1 | 3-42 |
| D-166 | 1-75 | 2-1 | 3-75 |
| D-167 | 1-76 | 2-1 | 3-24 |
| D-168 | 1-77 | 2-2 | 3-37 |
| D-169 | 1-78 | 2-1 | 3-78 |
| D-170 | 1-79 | 2-1 | 3-1 |
| D-171 | 1-80 | 2-1 | 3-33 |
| D-172 | 1-81 | 2-1 | 3-79 |
| D-173 | 1-82 | 2-1 | 3-92 |
| D-174 | 1-83 | 2-1 | 3-83 |
| D-175 | 1-84 | 2-4 | 3-28 |
| D-176 | 1-85 | 2-1 | 3-31 |
| D-177 | 1-86 | 2-2 | 3-50 |
| D-178 | 1-87 | 2-1 | 3-3 |
| D-179 | 1-88 | 2-2 | 3-29 |
| D-180 | 1-89 | 2-1 | 3-47 |

Table 4 (continued)

| Dye Number | X | D | B |
|---|---|---|---|
| D-181 | 1-89 | 2-1 | 3-60 |
| D-182 | 1-90 | 2-1 | 3-90 |
| D-183 | 1-91 | 2-1 | 3-6 |
| D-184 | 1-91 | 2-1 | 3-15 |
| D-185 | 1-91 | 2-1 | 3-46 |
| D-186 | 1-92 | 2-2 | 3-56 |
| D-187 | 1-92 | 2-1 | 3-86 |
| D-188 | 1-93 | 2-1 | 3-1 |
| D-189 | 1-93 | 2-4 | 3-13 |
| D-190 | 1-93 | 2-7 | 3-33 |
| D-191 | 1-93 | 2-1 | 3-120 |
| D-192 | 1-94 | 2-1 | 3-38 |
| D-193 | 1-94 | 2-1 | 3-34 |
| D-194 | 1-94 | 2-2 | 3-54 |
| D-195 | 1-35 | 2-1 | 3-96 |
| D-196 | 1-98 | 2-3 | 3-42 |
| D-197 | 1-15 | 2-1 | 3-120 |
| D-198 | 1-102 | 2-6 | 3-61 |
| D-199 | 1-16 | 2-1 | 3-81 |
| D-200 | 1-22 | 2-7 | 3-98 |
| D-201 | 1-23 | 2-5 | 3-114 |
| D-202 | 1-104 | 2-3 | 3-122 |
| D-203 | 1-24 | 2-1 | 3-99 |
| D-204 | 1-106 | 2-1 | 3-37 |

Table 5

| Dye Number | X | D | B |
|---|---|---|---|
| D-205 | 1-29 | 2-2 | 3-120 |
| D-206 | 1-108 | 2-1 | 3-52 |
| D-207 | 1-31 | 2-3 | 3-94 |
| D-208 | 1-38 | 2-1 | 3-105 |
| D-209 | 1-33 | 2-2 | 3-99 |
| D-210 | 1-34 | 2-1 | 3-105 |
| D-211 | 1-38 | 2-1 | 3-96 |
| D-212 | 1-36 | 2-4 | 3-110 |
| D-213 | 1-114 | 2-1 | 3-32 |
| D-214 | 1-115 | 2-3 | 3-116 |
| D-215 | 1-36 | 2-2 | 3-121 |

Table 5 (continued)

| Dye Number | X | D | B |
|---|---|---|---|
| D-216 | 1-113 | 2-1 | 3-59 |
| D-217 | 1-37 | 2-3 | 3-124 |
| D-218 | 1-112 | 2-1 | 3-129 |
| D-219 | 1-42 | 2-1 | 3-99 |
| D-220 | 1-46 | 2-1 | 3-103 |
| D-221 | 1-48 | 2-1 | 3-95 |
| D-222 | 1-116 | 2-1 | 3-105 |
| D-223 | 1-42 | 2-4 | 3-107 |
| D-224 | 1-45 | 2-2 | 3-109 |
| D-225 | 1-116 | 2-3 | 3-35 |
| D-226 | 1-118 | 2-1 | 3-52 |
| D-227 | 1-44 | 2-3 | 3-118 |
| D-228 | 1-119 | 2-2 | 3-53 |
| D-229 | 1-117 | 2-4 | 3-127 |
| D-230 | 1-52 | 2-1 | 3-93 |
| D-231 | 1-120 | 2-1 | 3-16 |
| D-232 | 1-53 | 2-2 | 3-108 |
| D-233 | 1-121 | 2-5 | 3-110 |
| D-234 | 1-57 | 2-3 | 3-115 |
| D-235 | 1-58 | 2-1 | 3-117 |
| D-236 | 1-122 | 2-1 | 3-22 |
| D-237 | 1-123 | 2-2 | 3-35 |
| D-238 | 1-59 | 2-3 | 3-117 |
| D-239 | 1-62 | 2-4 | 3-119 |
| D-240 | 1-124 | 2-1 | 3-68 |
| D-241 | 1-63 | 2-1 | 3-95 |
| D-242 | 1-64 | 2-1 | 3-101 |
| D-243 | 1-66 | 2-2 | 3-113 |
| D-244 | 1-68 | 2-4 | 3-117 |
| D-245 | 1-125 | 2-1 | 3-132 |
| D-246 | 1-71 | 2-5 | 3-112 |
| D-247 | 1-127 | 2-1 | 3-17 |
| D-248 | 1-73 | 2-2 | 3-118 |
| D-249 | 1-74 | 2-6 | 3-126 |
| D-250 | 1-78 | 2-7 | 3-109 |

Table 6

| Dye Number | X | D | B |
|---|---|---|---|
| D-251 | 1-128 | 2-3 | 3-33 |
| D-252 | 1-79 | 2-1 | 3-104 |
| D-253 | 1-81 | 2-2 | 3-111 |
| D-254 | 1-129 | 2-1 | 3-113 |
| D-255 | 1-130 | 2-1 | 3-66 |
| D-256 | 1-84 | 2-3 | 3-102 |
| D-257 | 1-87 | 2-1 | 3-115 |
| D-258 | 1-132 | 2-1 | 3-80 |
| D-259 | 1-91 | 2-2 | 3-116 |
| D-260 | 1-133 | 2-1 | 3-85 |

Table 6B

| Dye Number | X | D | B |
|---|---|---|---|
| D-261 | 1-142 | 2-1 | 3-96 |
| D-262 | 1-134 | 2-3 | 3-36 |
| D-263 | 1-137 | 2-4 | 3-120 |
| D-264 | 1-142 | 2-1 | 3-97 |
| D-265 | 1-139 | 2-1 | 3-79 |
| D-266 | 1-38 | 2-1 | 3-142 |
| D-267 | 1-141 | 2-3 | 3-126 |
| D-268 | 1-38 | 2-1 | 3-99 |
| D-269 | 1-142 | 2-1 | 3-105 |
| D-270 | 1-71 | 2-5 | 3-38 |
| D-271 | 1-142 | 2-1 | 3-145 |
| D-272 | 1-38 | 2-1 | 3-146 |
| D-273 | 1-142 | 2-1 | 3-99 |
| D-274 | 1-144 | 2-1 | 3-147 |
| D-275 | 1-142 | 2-1 | 3-147 |

Specific examples of the dyes represented by aforesaid General Formula (1) are illustrated below. However, the present invention is not limited by these examples.

1-1

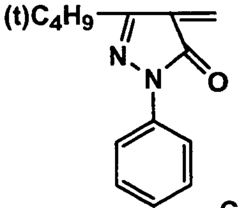

1-2

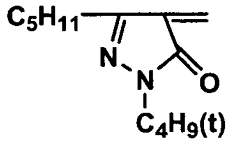

1-3

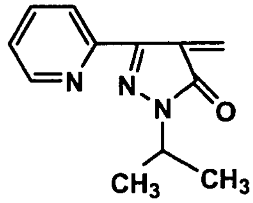

1-4

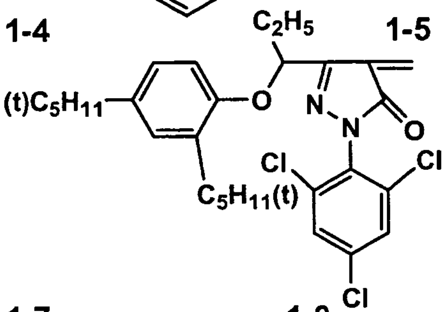

1-5

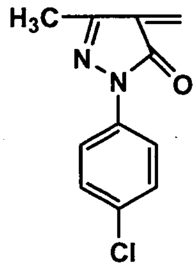

1-6

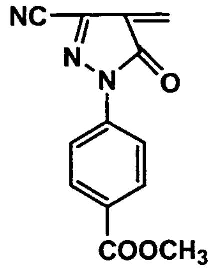

1-7

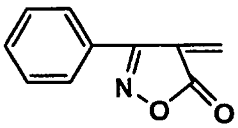

1-8

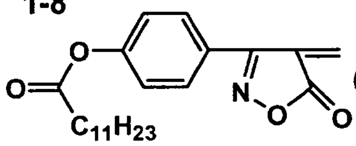

1-9

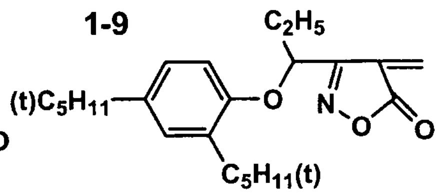

1-10

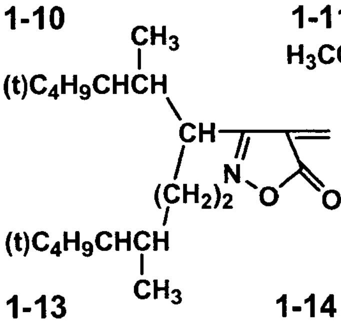

1-11

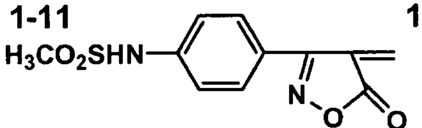

1-12

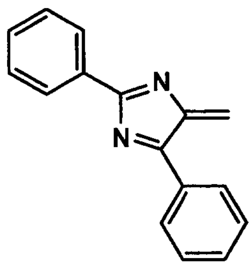

1-13

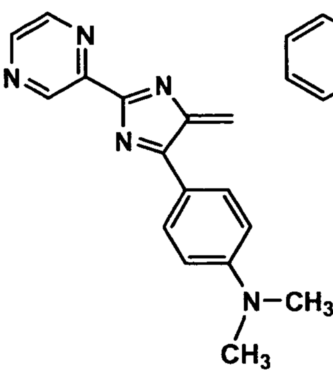

1-14

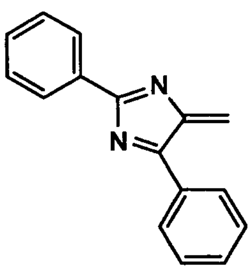

1-15

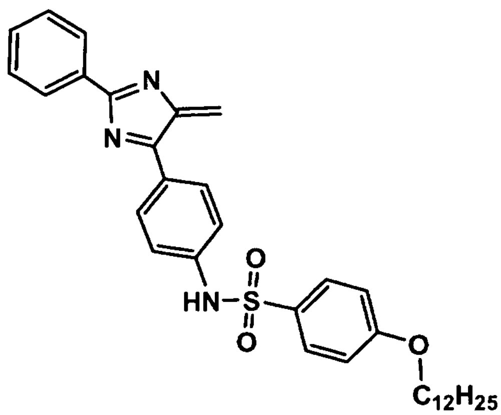

**1-16**

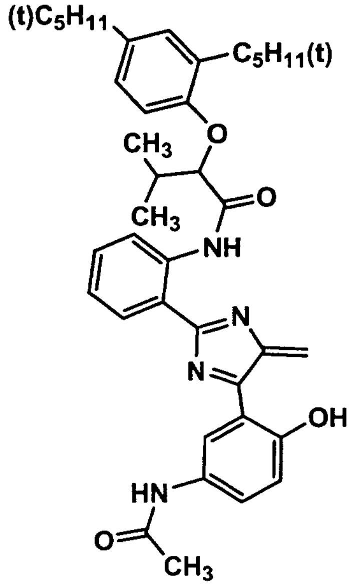

**1-17**

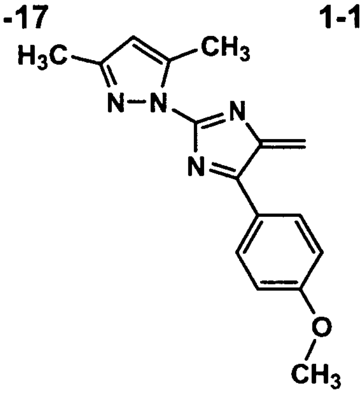

**1-18**

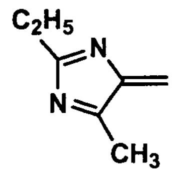

**1-19**

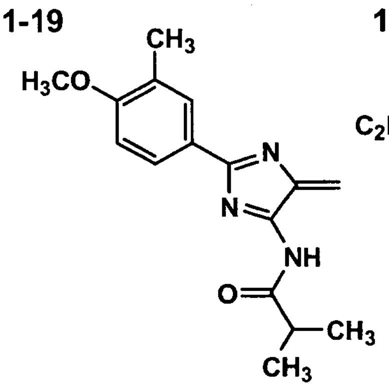

**1-20**

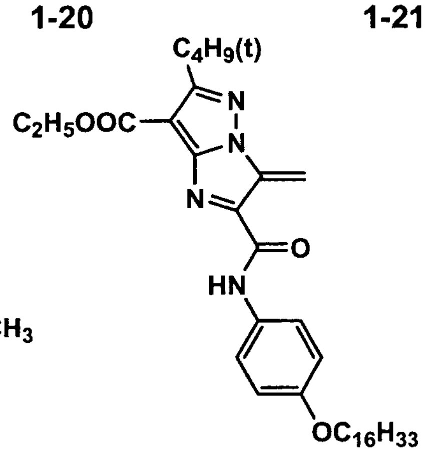

**1-21**

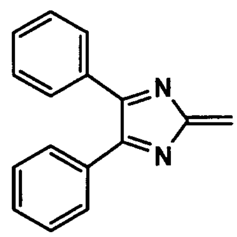

**1-22**

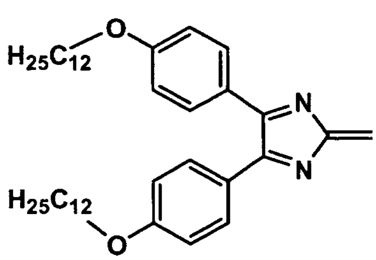

**1-23**

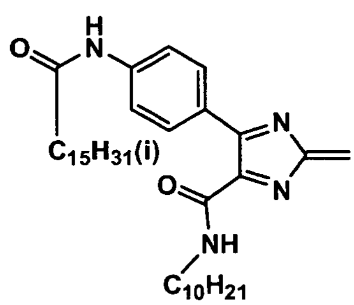

1-24

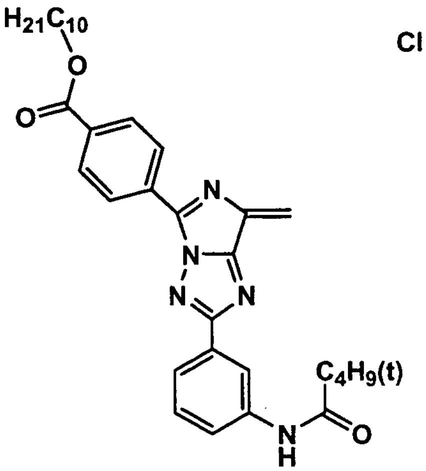

1-25

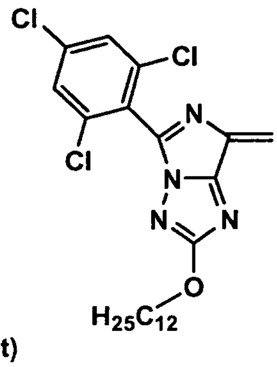

1-26

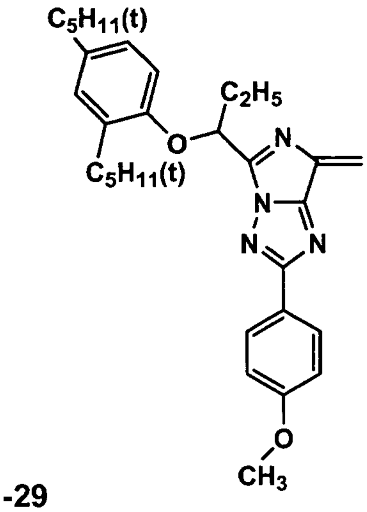

1-27

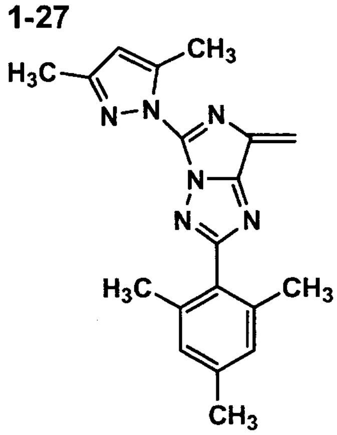

1-28

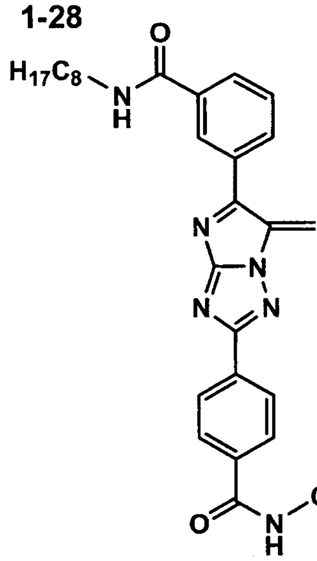

1-29

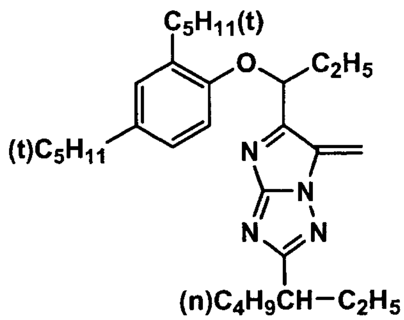

1-30

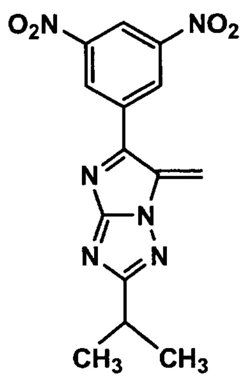

1-31

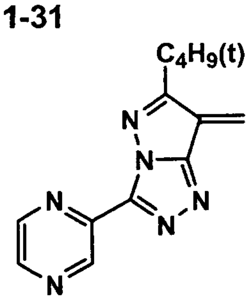

1-32

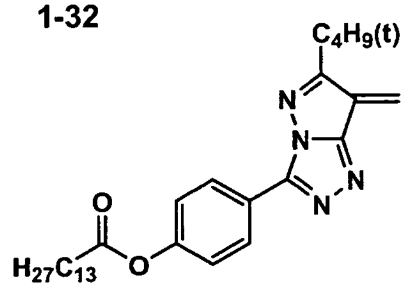

**1-33**

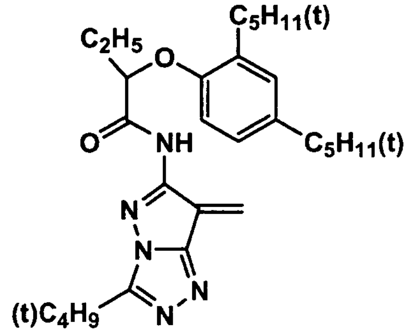

**1-34**

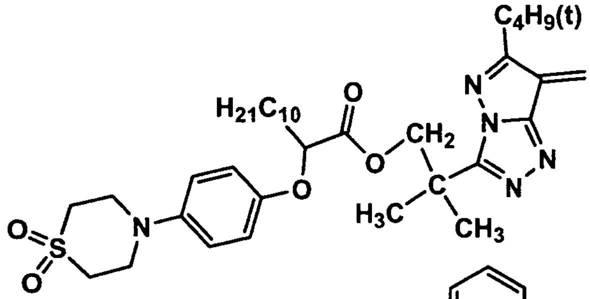

**1-35**

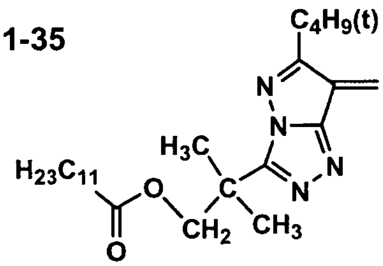

**1-36**

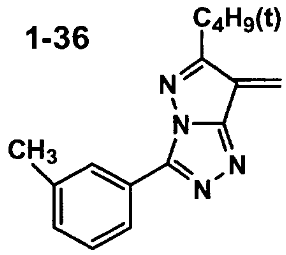

**1-37**

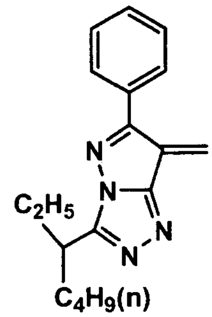

**1-38**

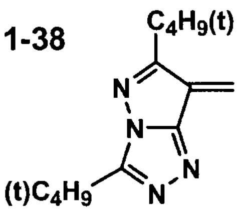

**1-39**

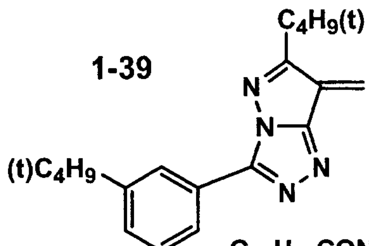

**1-40**

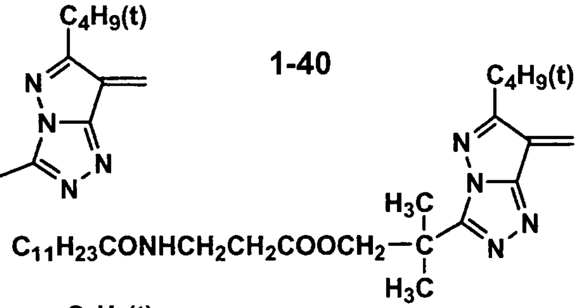

**1-41**

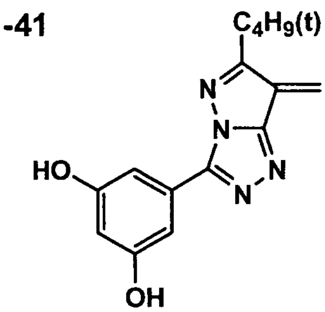

**1-42**

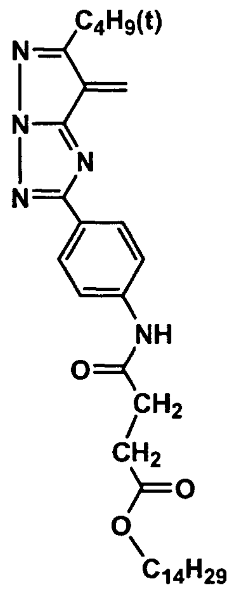

**1-43**

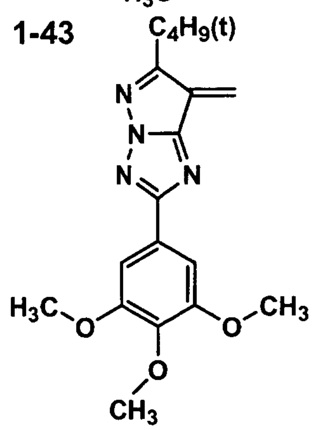

1-44

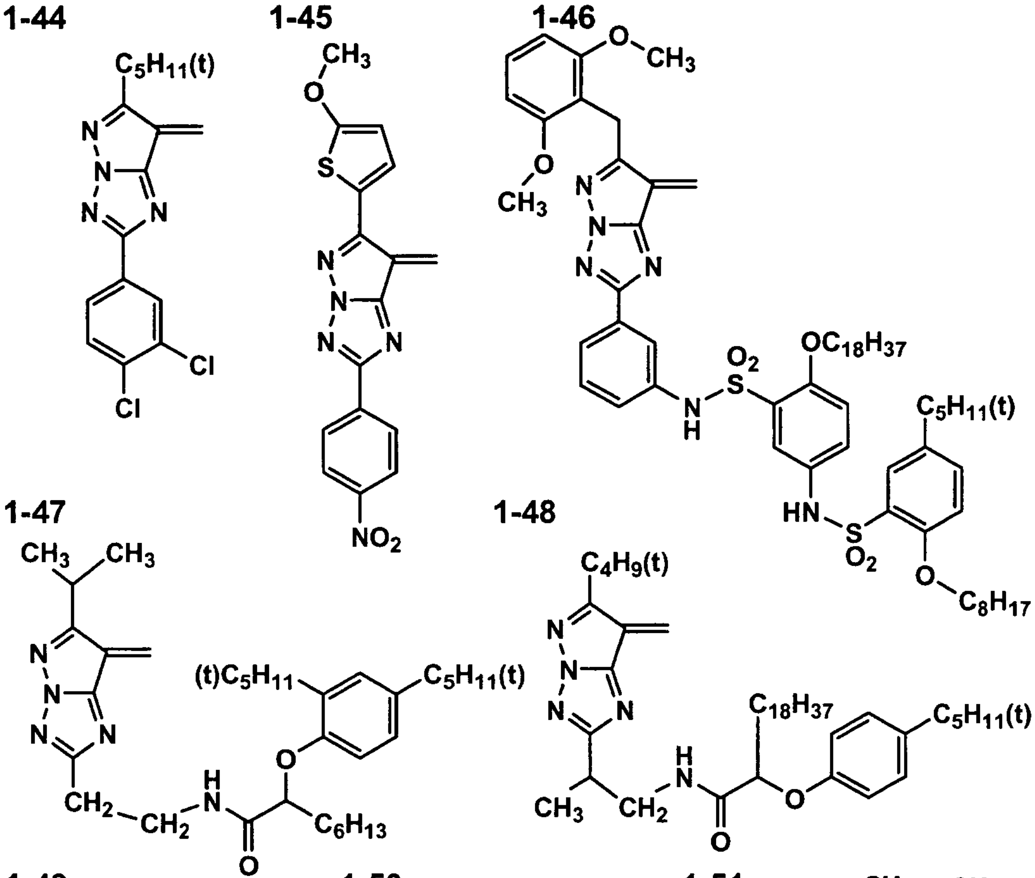

1-45

1-46

1-47

1-48

1-49

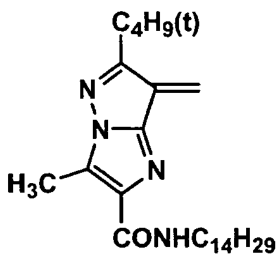

1-50

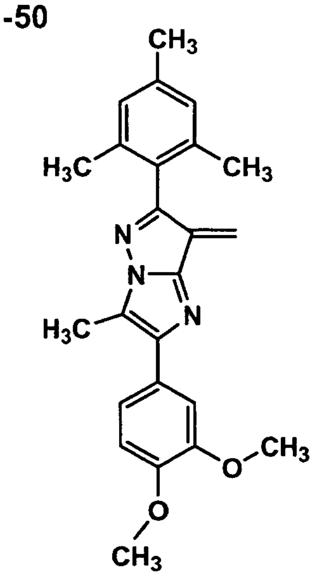

1-51

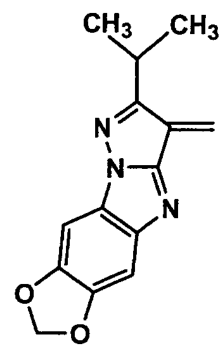

1-52

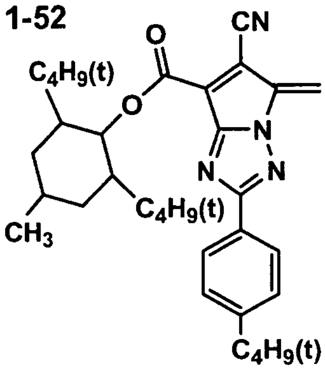

1-53

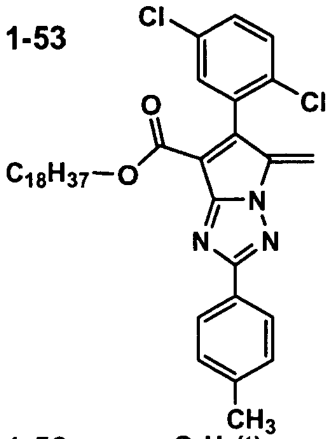

1-54

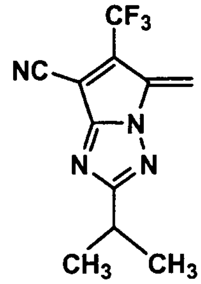

1-55

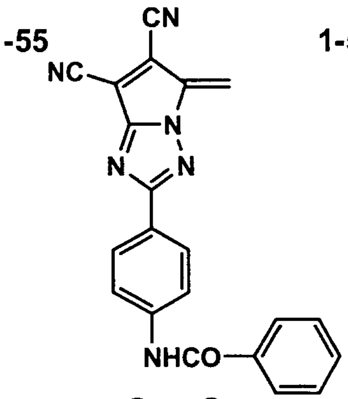

1-56

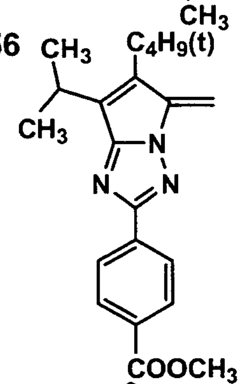

1-57

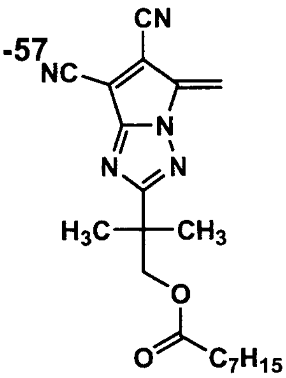

1-58

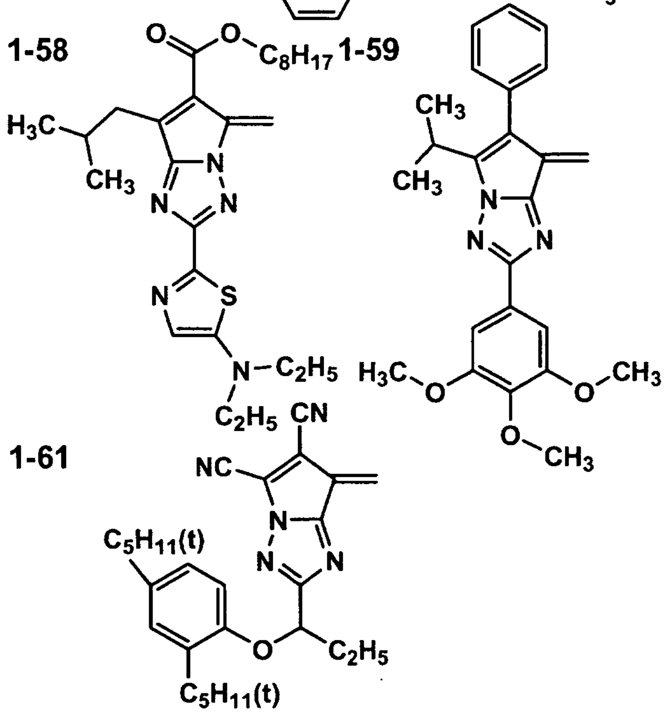

1-59

1-60

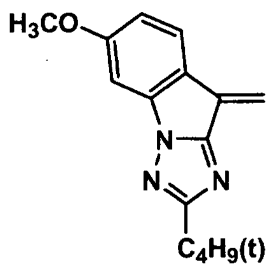

1-61

**1-62**

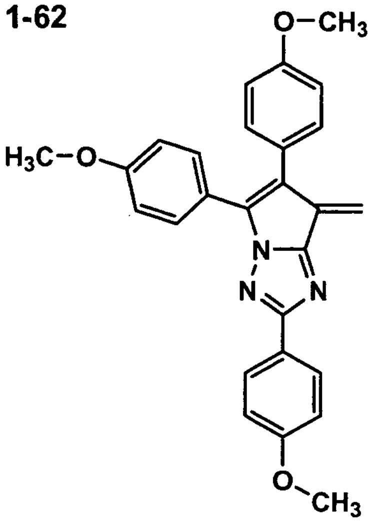

**1-63**

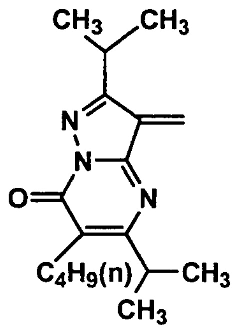

**1-64**

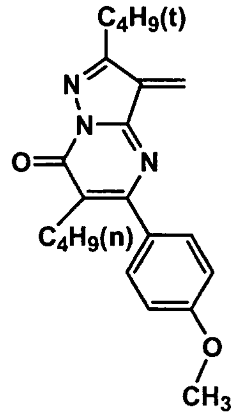

**1-65**

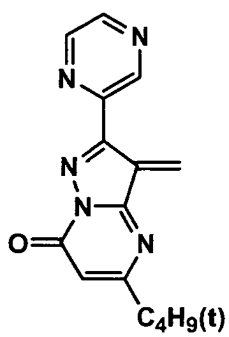

**1-66**

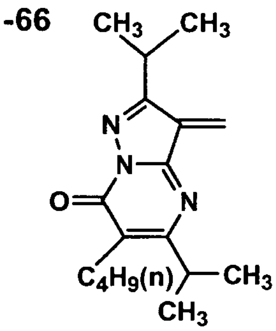

**1-67**

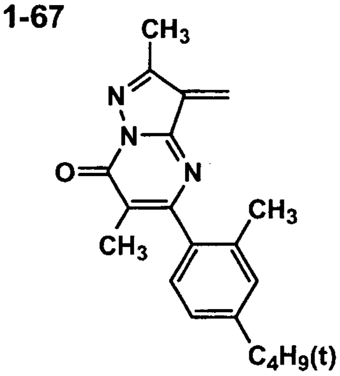

**1-68**

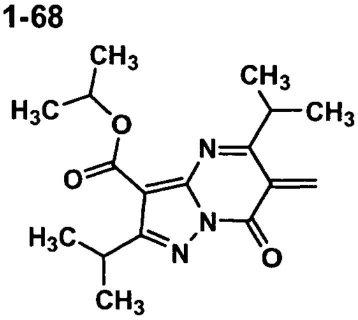

**1-69**

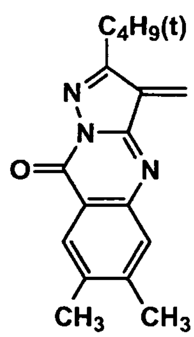

**1-70**

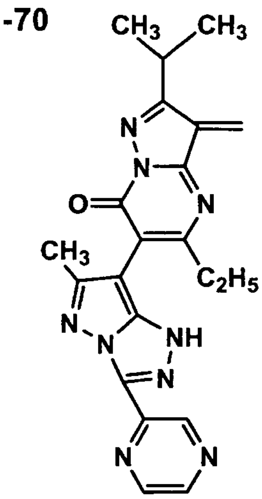

1-71
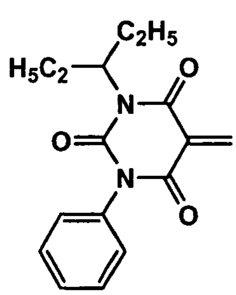

1-72
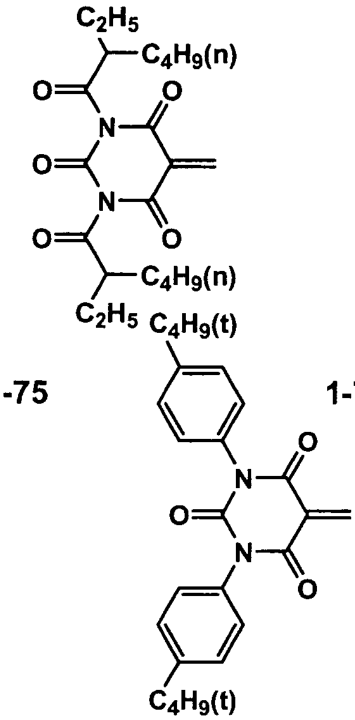

1-73
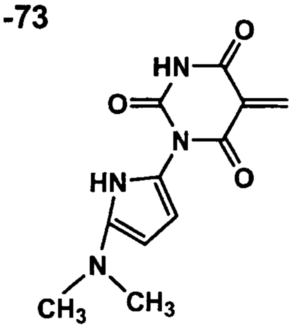

1-74
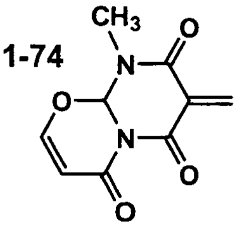

1-75

1-76
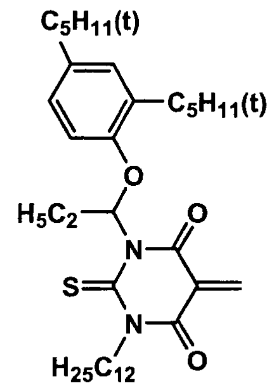

1-77
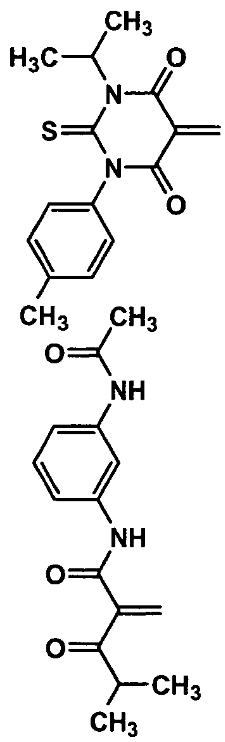

1-78
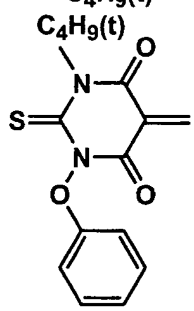

1-79
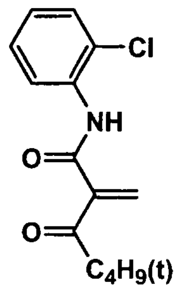

1-80

1-81
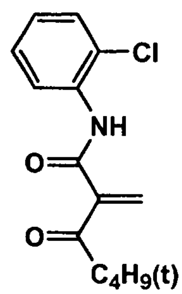

1-82
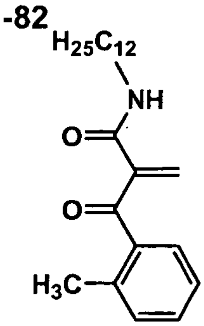

1-83

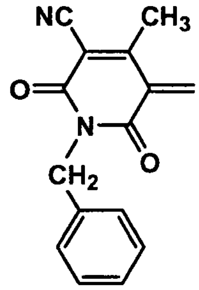

1-84

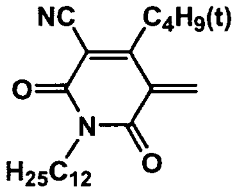

1-85

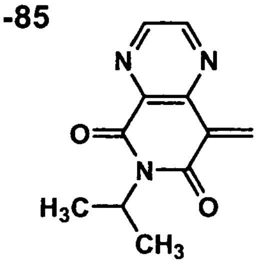

1-86

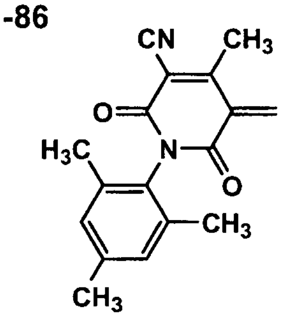

1-87

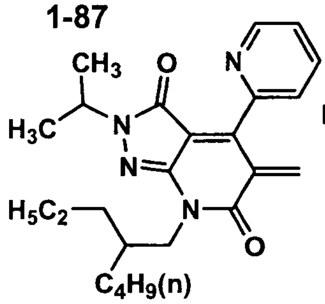

1-88

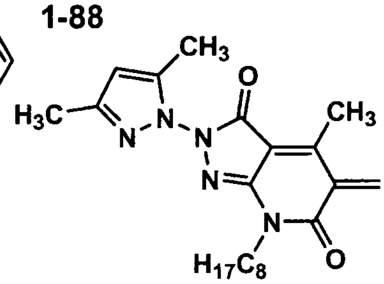

1-89

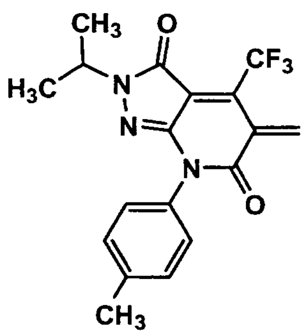

1-90

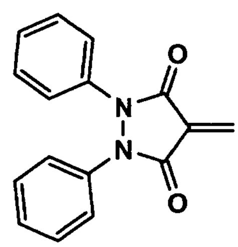

1-91

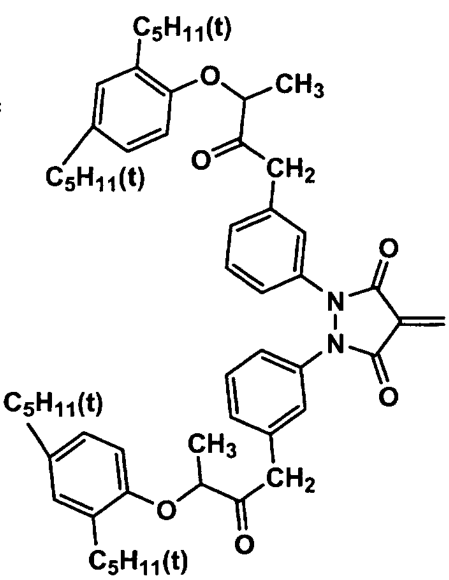

1-92

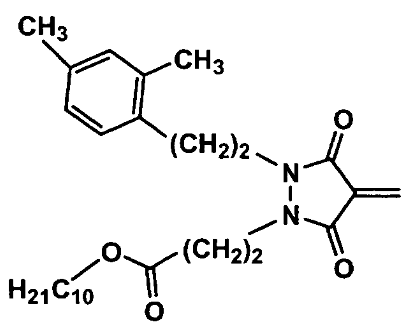

**1-93**

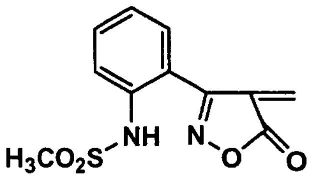

**1-94**

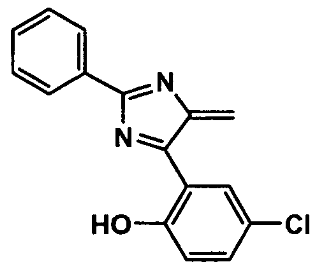

**1-95**

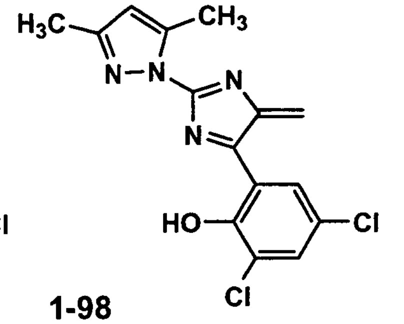

**1-96**

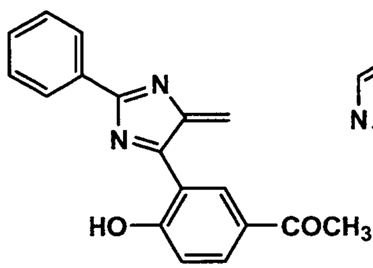

**1-97**

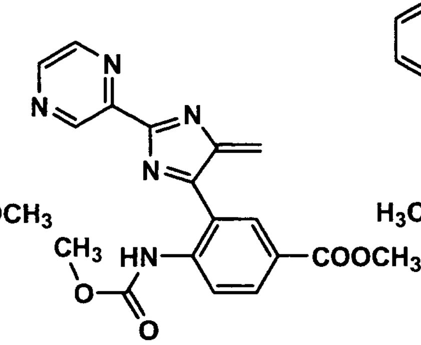

**1-98**

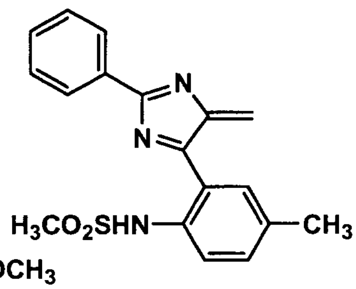

**1-99**

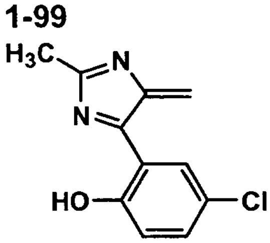

**1-100**

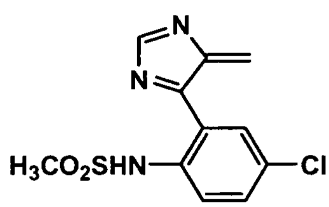

**1-101**

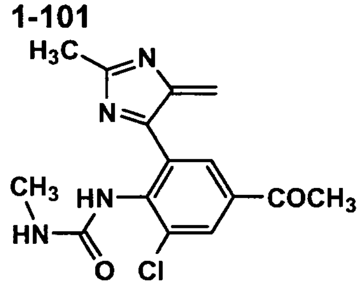

**1-102**

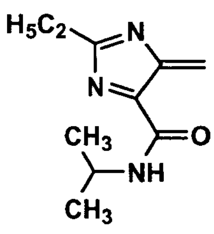

**1-103**

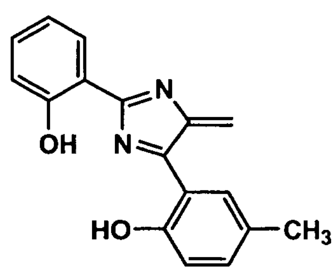

**1-104**

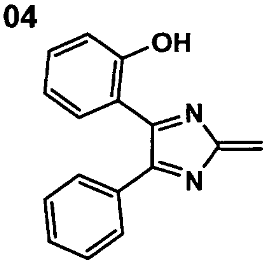

**1-105**

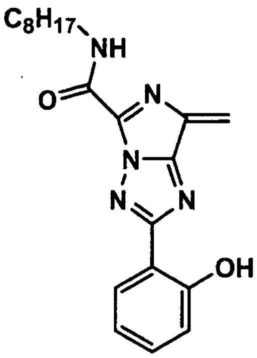

**1-106**

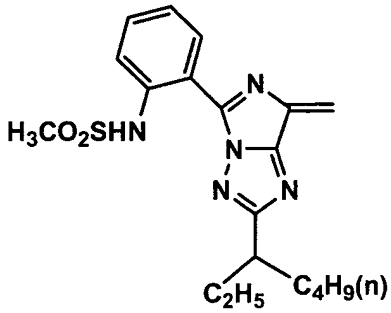

**1-107**

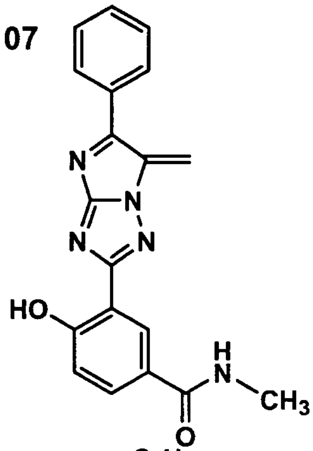

**1-108**

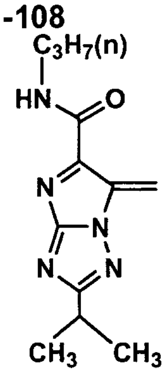

**1-109**

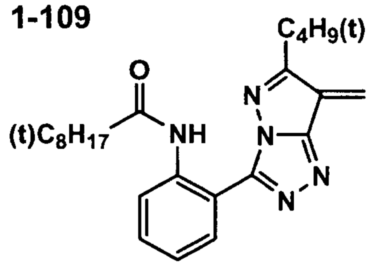

**1-110**

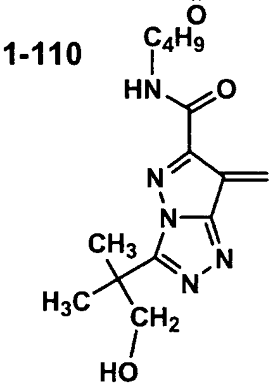

**1-111**

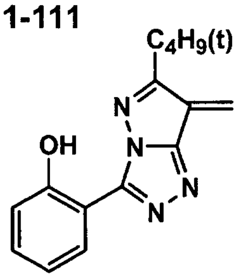

**1-112**

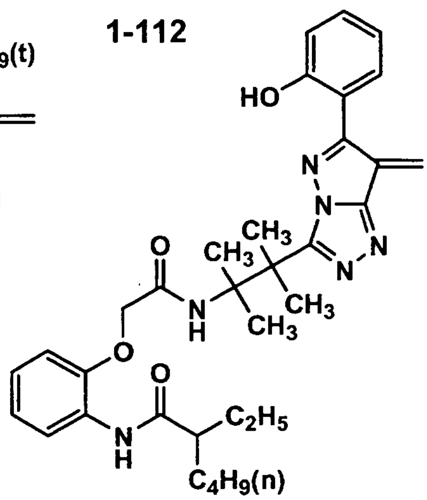

**1-113**

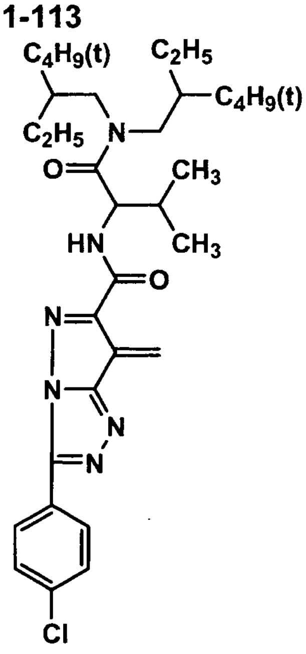

1-114

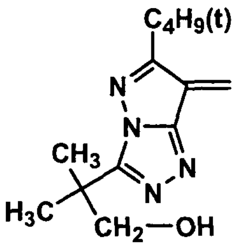

1-115

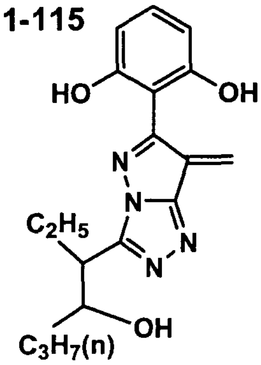

1-116

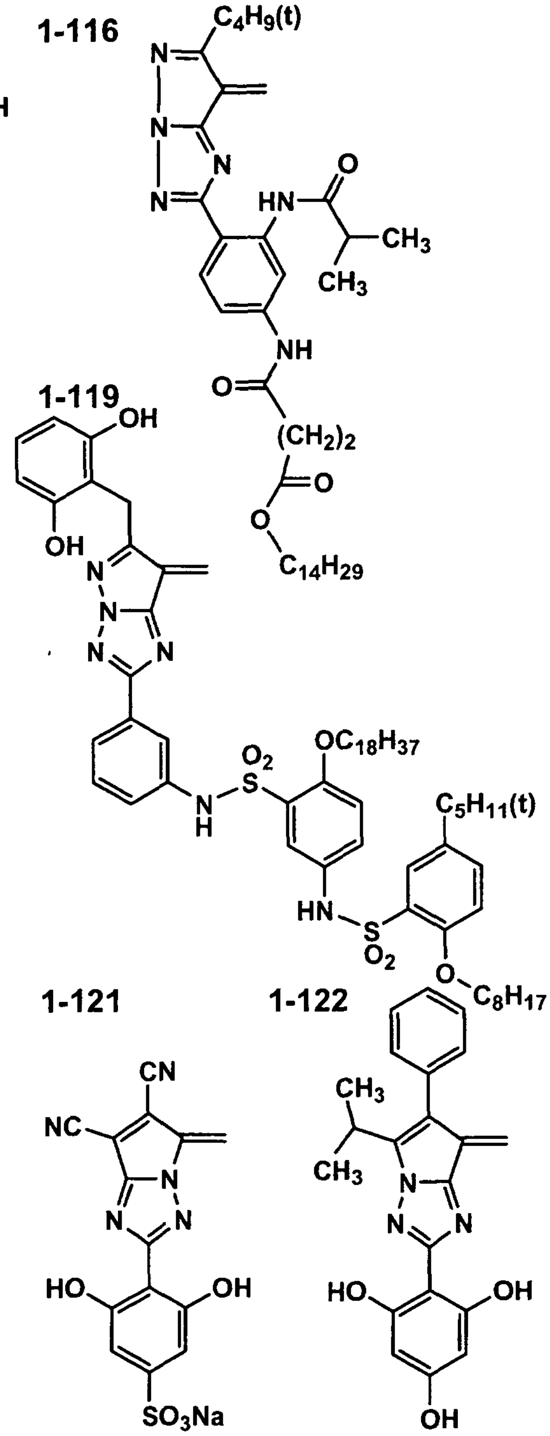

1-117

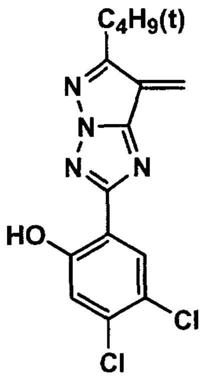

1-118

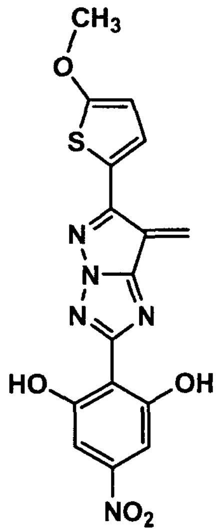

1-119

1-120

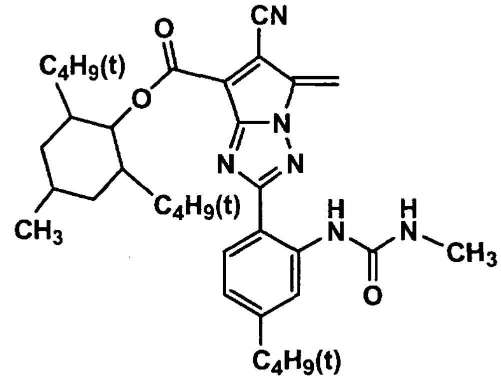

1-121

1-122

1-123

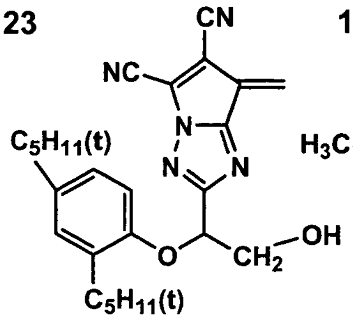

1-124

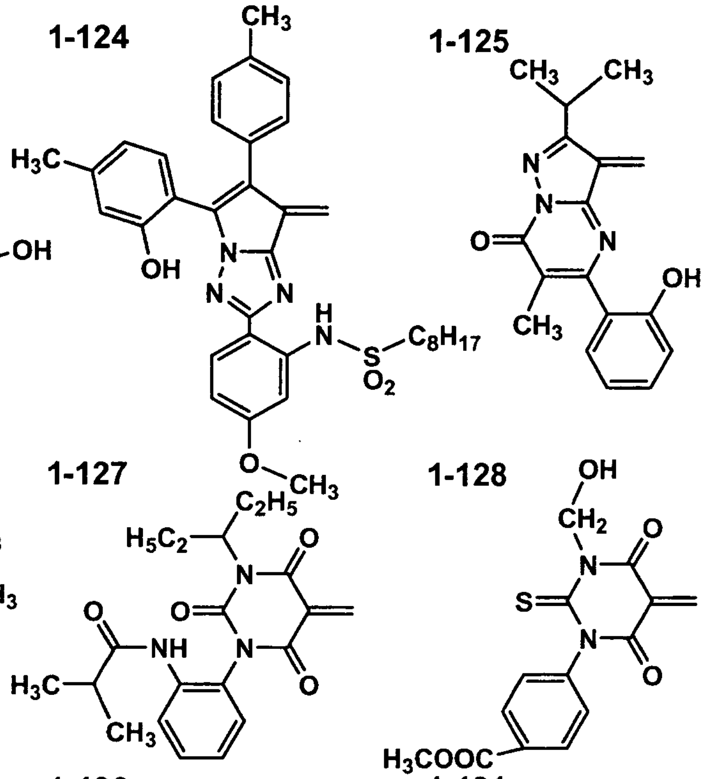

1-125

1-126

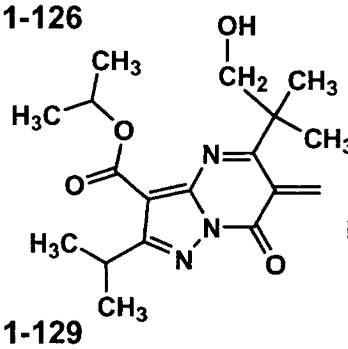

1-127

1-128

1-129

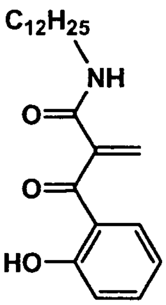

1-130

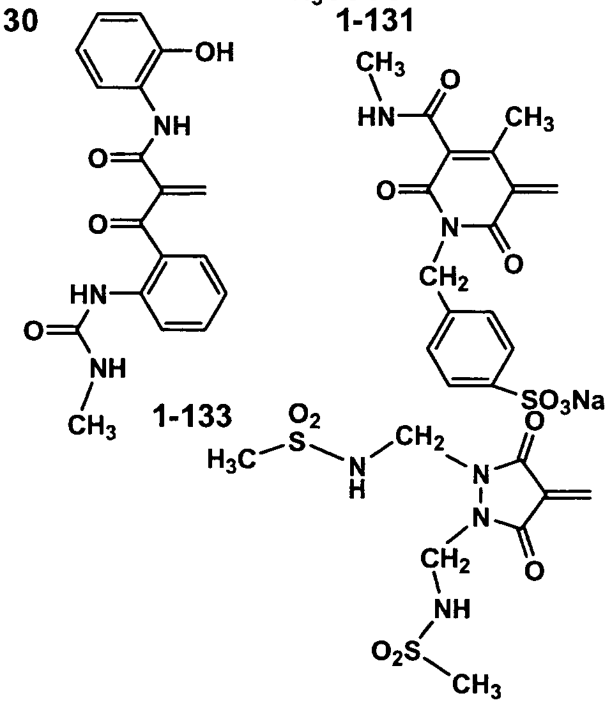

1-131

1-132

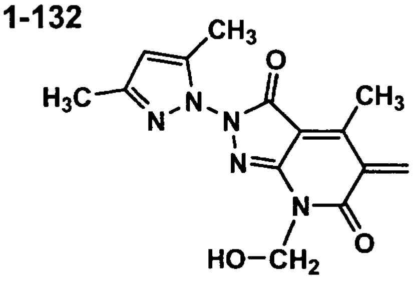

1-133

1-134

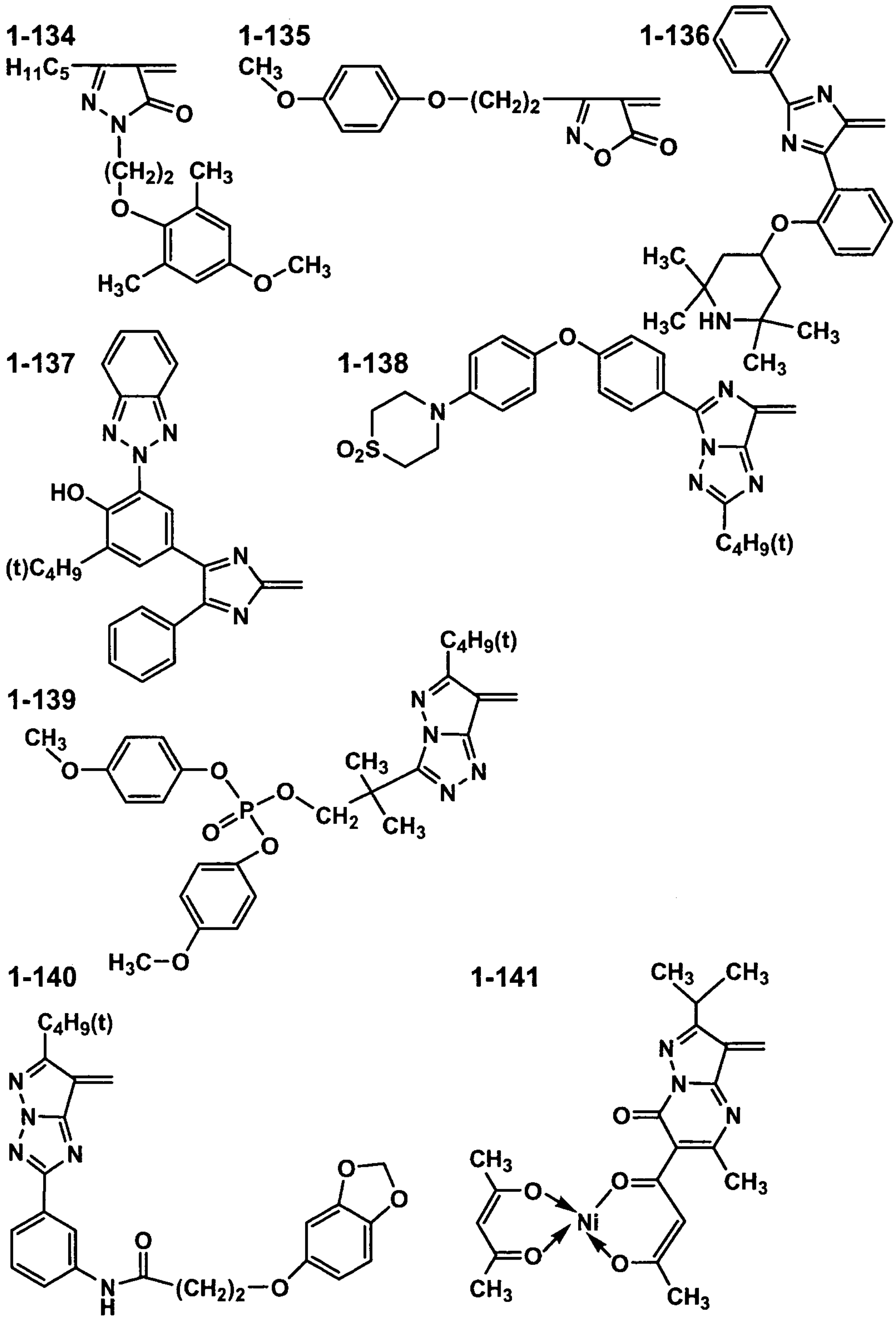

1-135

1-136

1-137

1-138

1-139

1-140

1-141

1-142

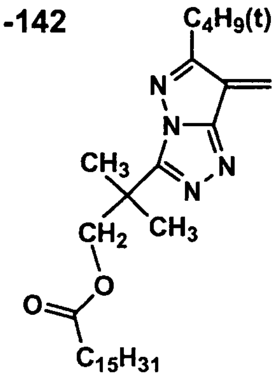

1-143

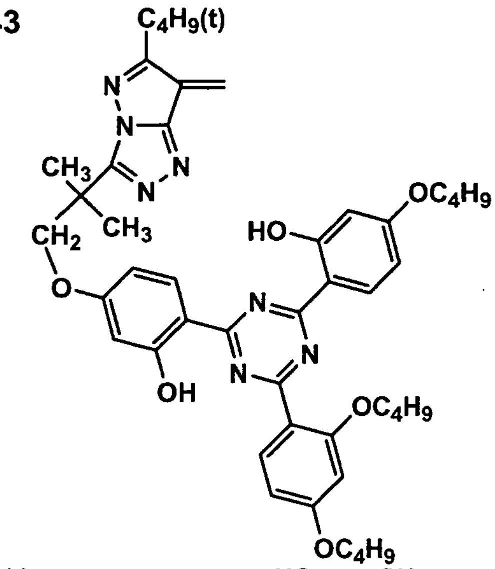

1-144

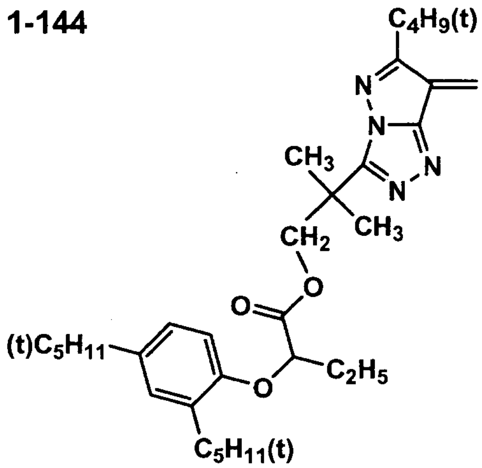

1-145

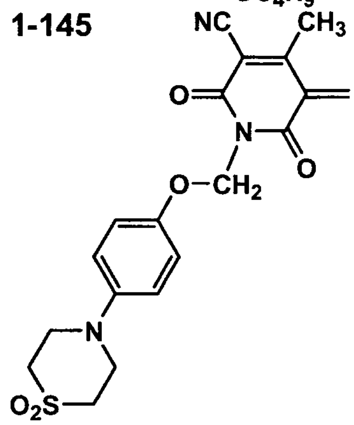

1-146

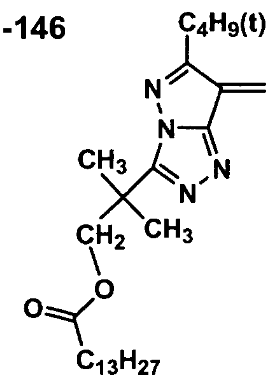

1-147

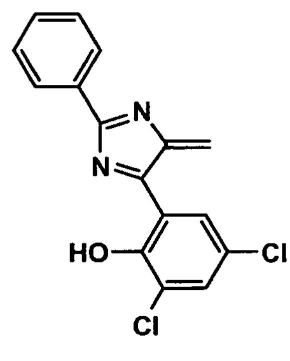

1-148

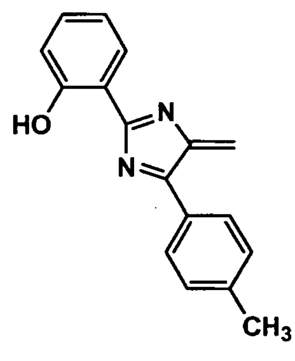

2-1

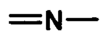

2-2

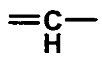

2-3

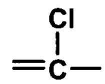

2-4

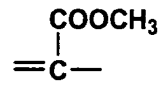

2-5

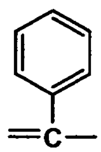

2-6

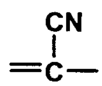

2-7

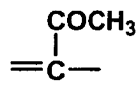

3-1

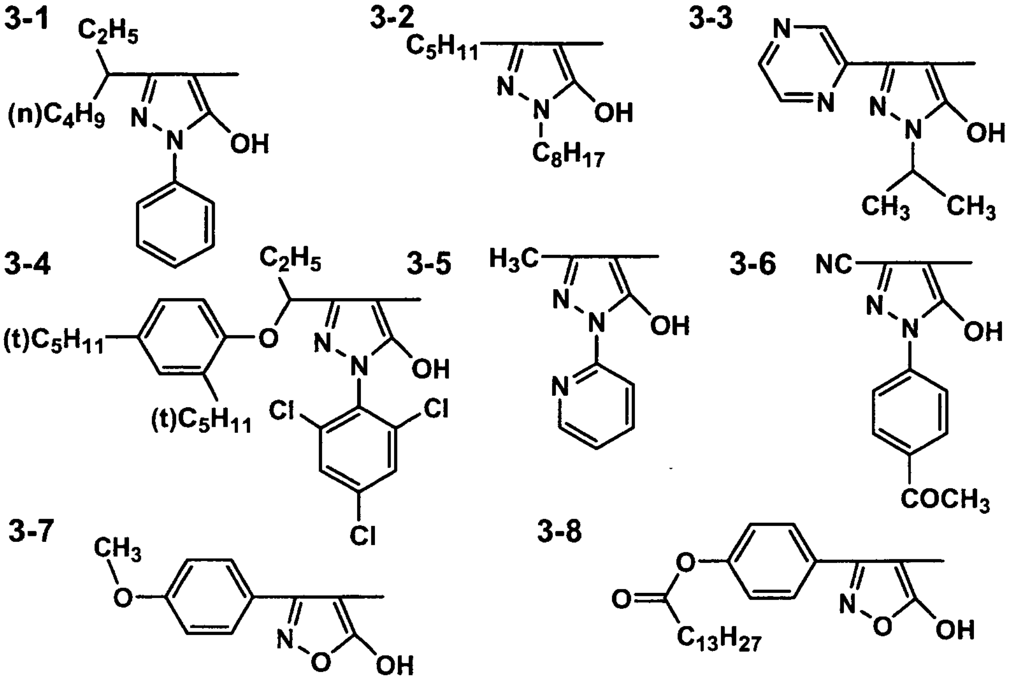

3-2

3-3

3-4

3-5

3-6

3-7

3-8

3-9

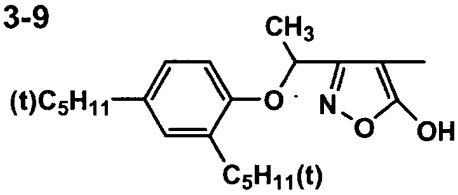

3-10

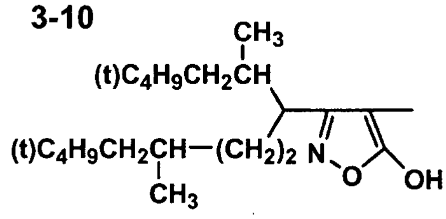

3-11

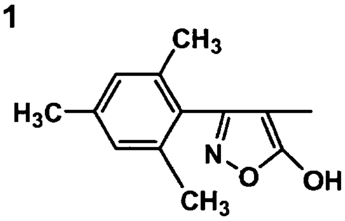

3-12

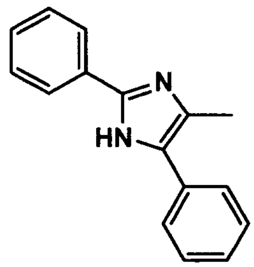

3-13

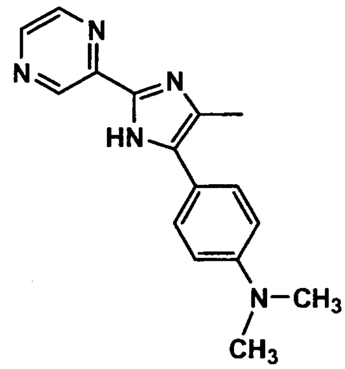

3-14

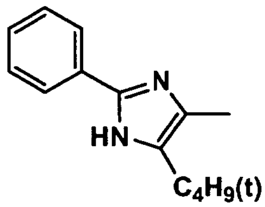

3-15

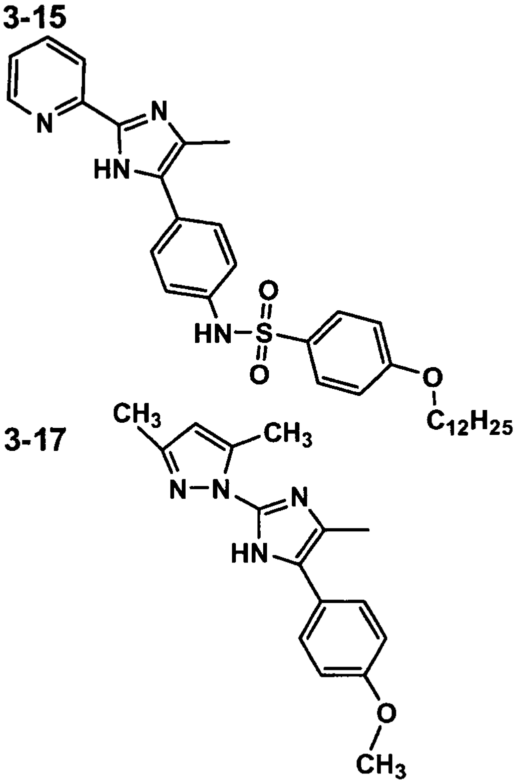

3-17

3-16

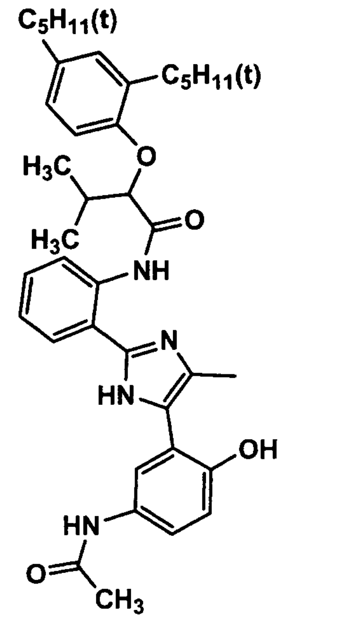

3-18

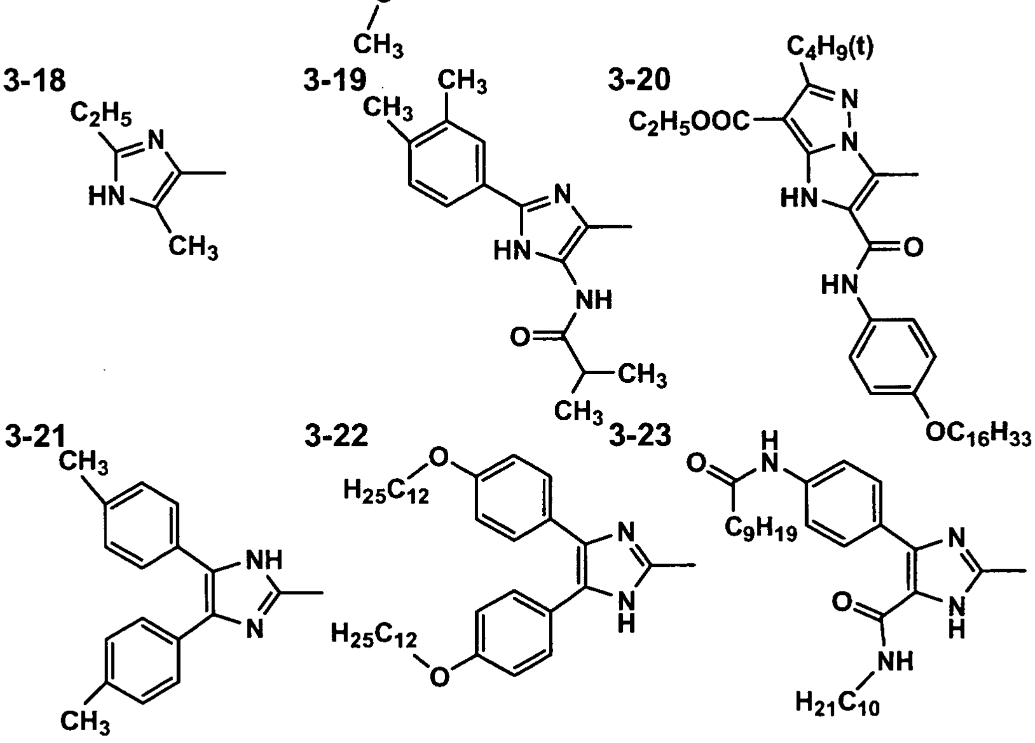

3-19

3-20

3-21

3-22

3-23

3-24

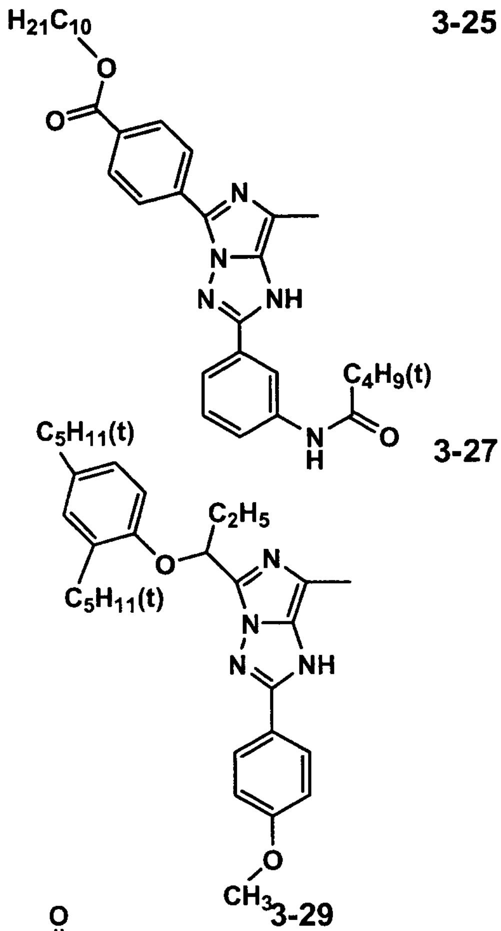

3-26

3-25

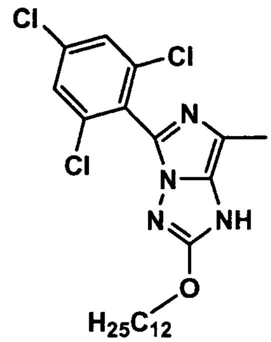

3-27

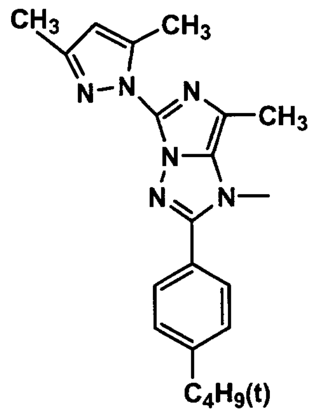

3-28

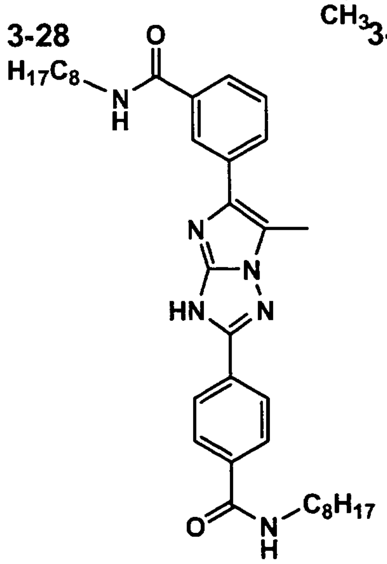

3-29

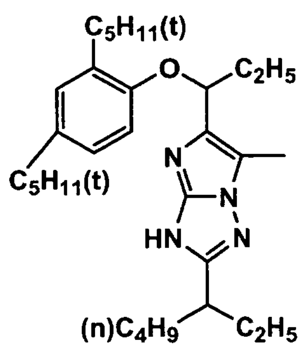

3-30

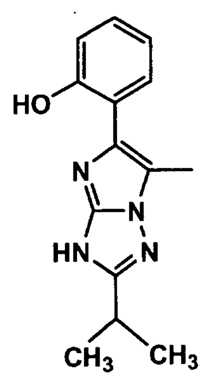

3-31

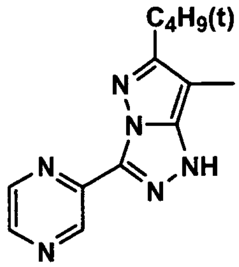

3-32

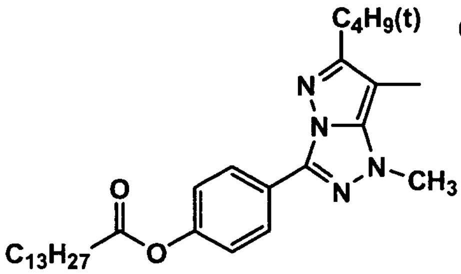

3-33

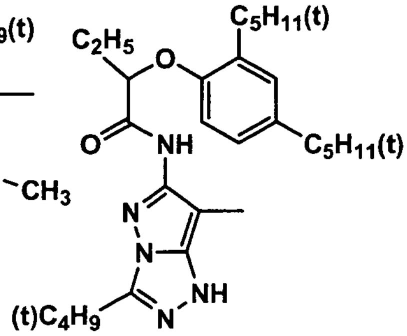

3-34

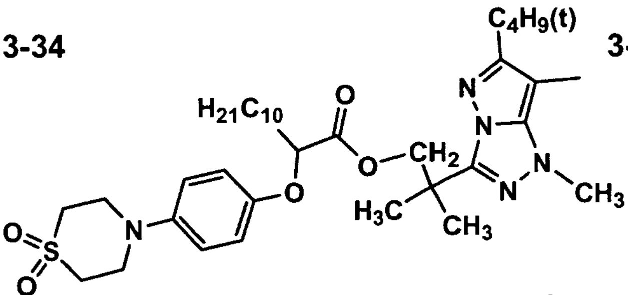

3-35

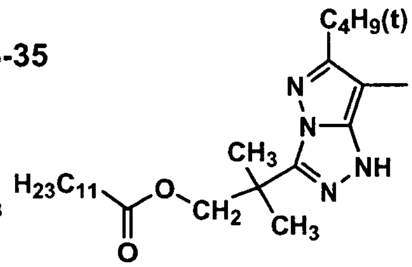

3-36

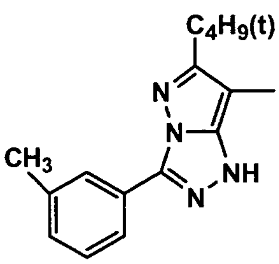

3-37

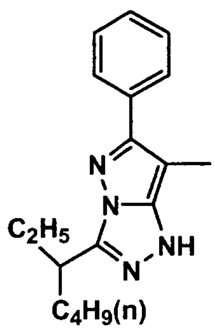

3-38

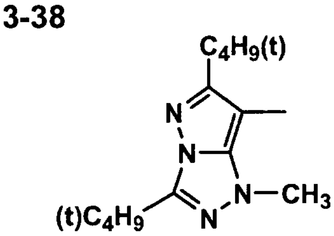

3-39

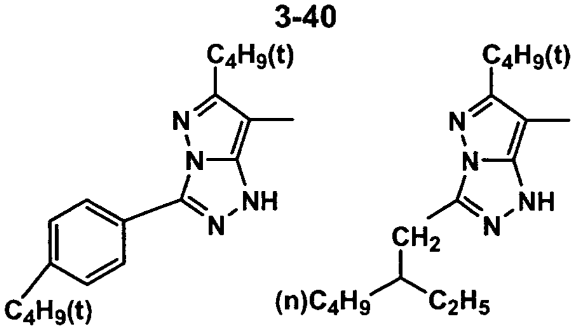

3-40

3-41

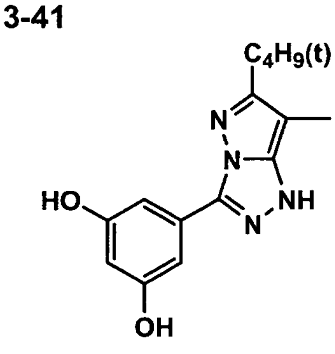

**3-42**

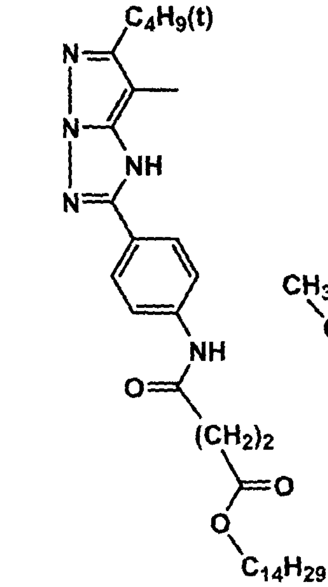

**3-43**

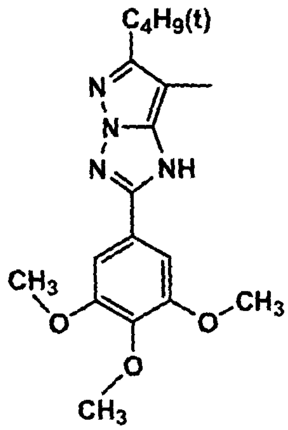

**3-44**

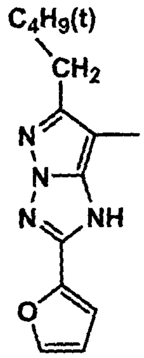

**3-45**

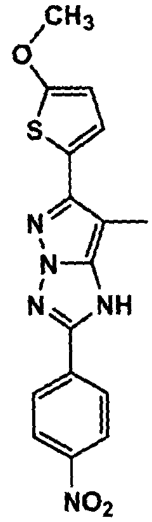

**3-46**

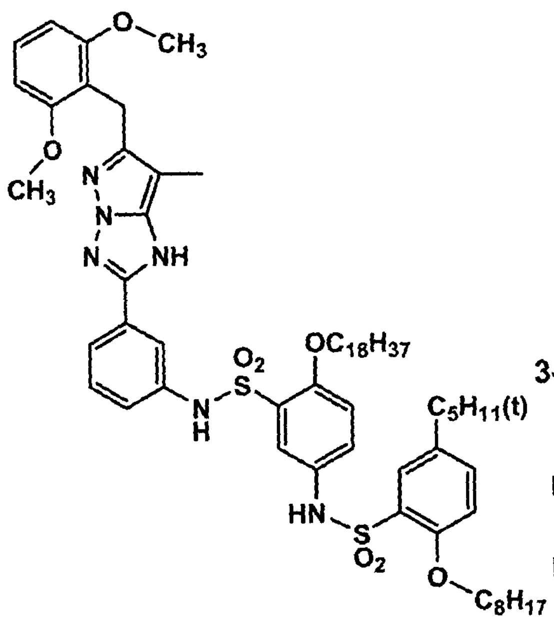

**3-47**

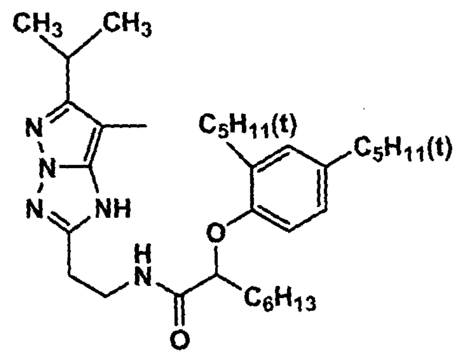

**3-48**

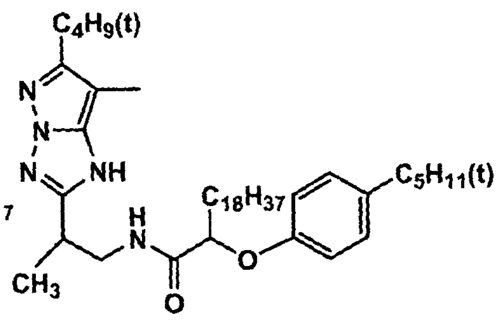

3-49

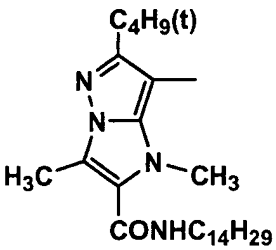

3-50

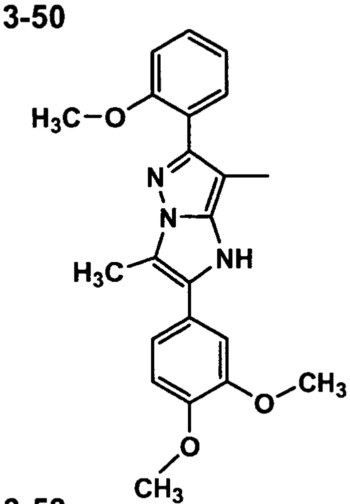

3-51

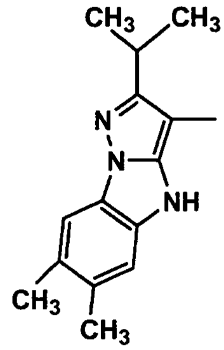

3-52

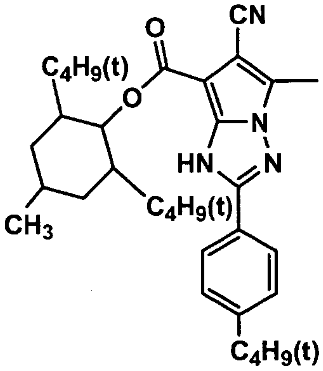

3-53

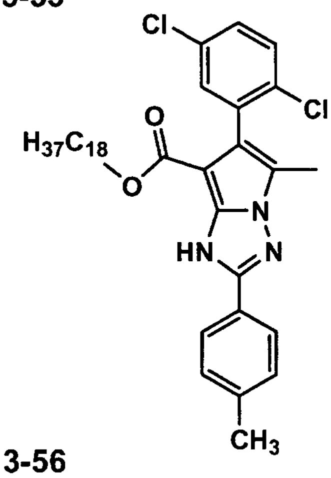

3-54

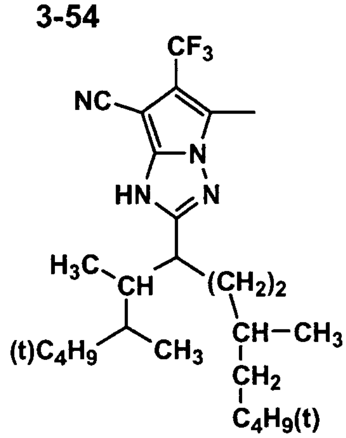

3-55

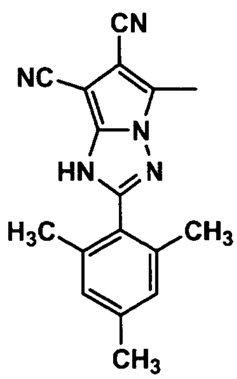

3-56

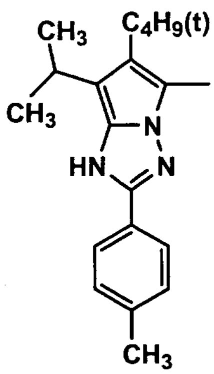

3-57

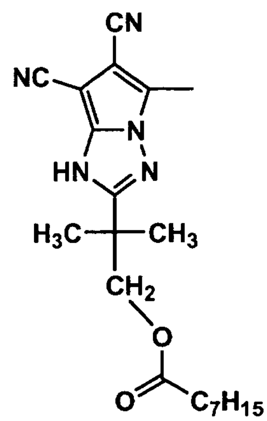

**3-58**

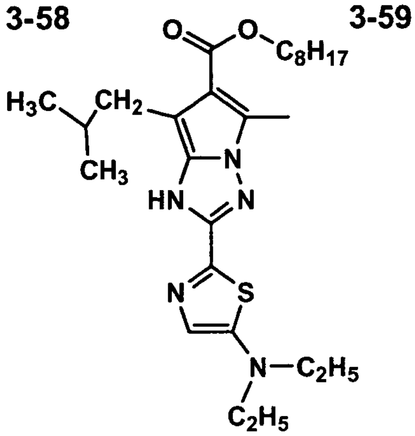

**3-59**

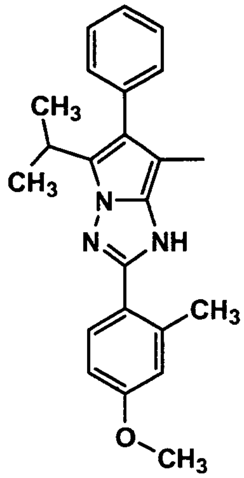

**3-60**

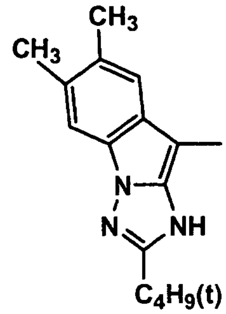

**3-61**

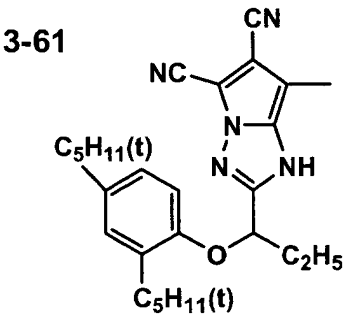

**3-62**

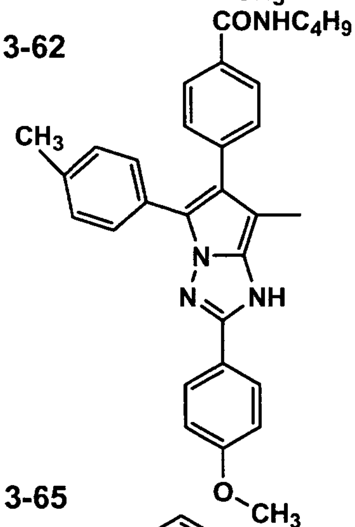

**3-63**

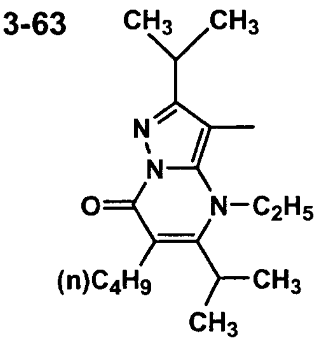

**3-64**

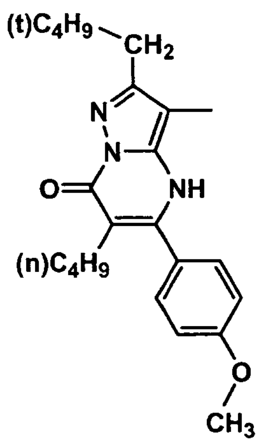

**3-65**

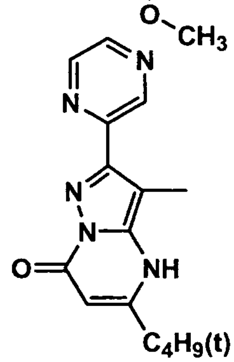

**3-66**

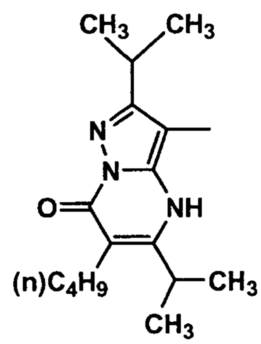

3-67

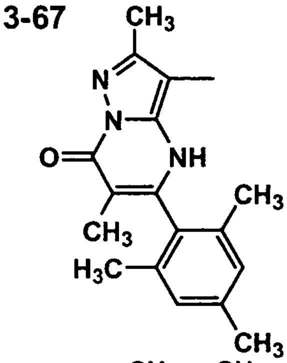

3-68

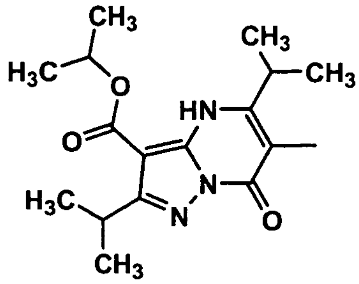

3-69

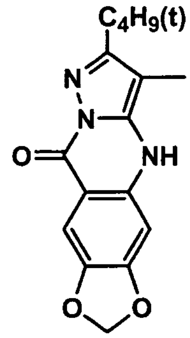

3-70

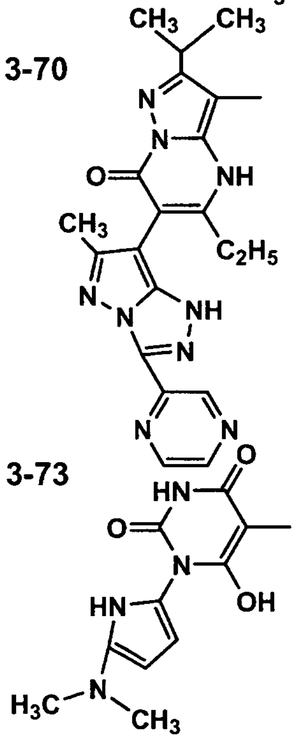

3-71

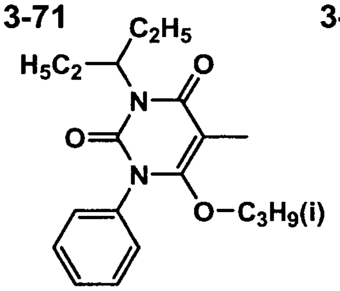

3-72

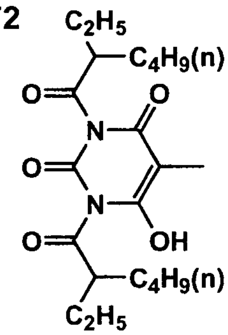

3-73

3-74

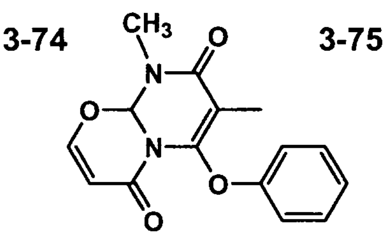

3-75

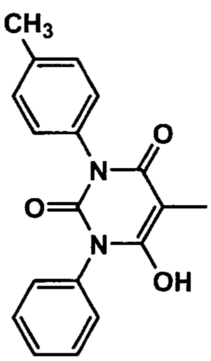

3-76

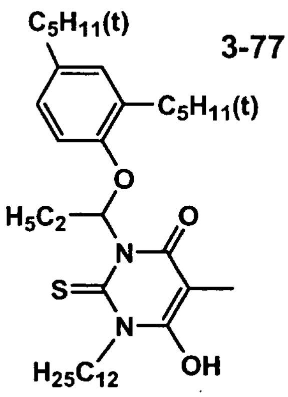

3-77

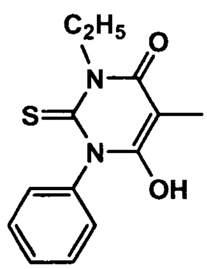

3-78

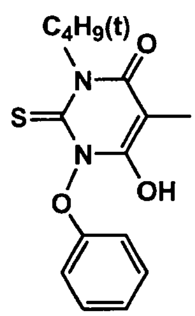

3-79 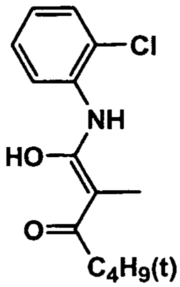

3-80 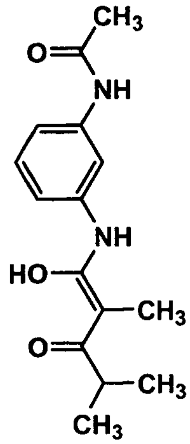

3-81 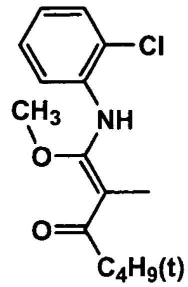

3-82 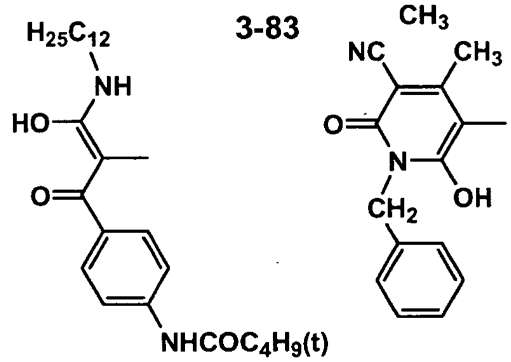

3-83

3-84 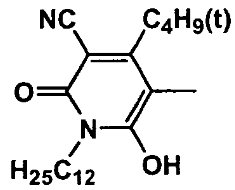

3-85 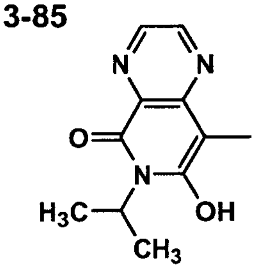

3-86 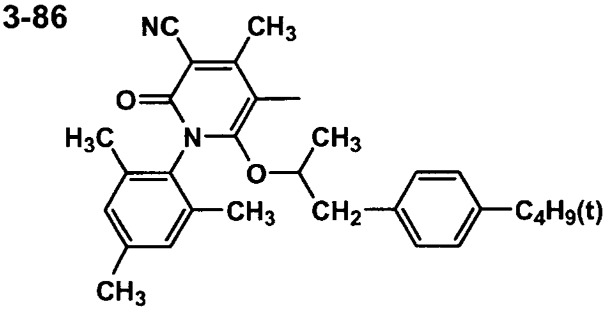

3-87 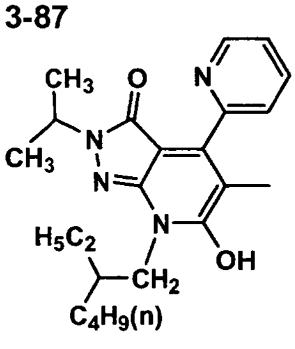

3-88 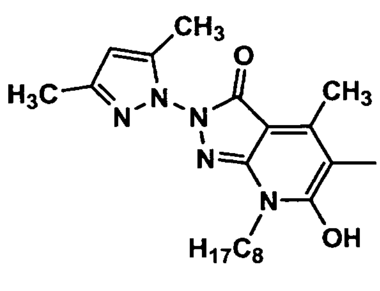

3-89 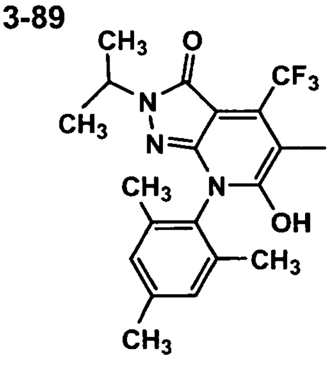

3-90

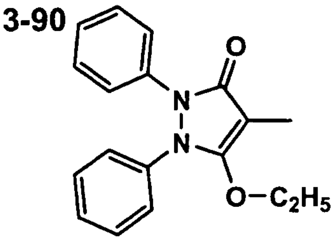

3-91

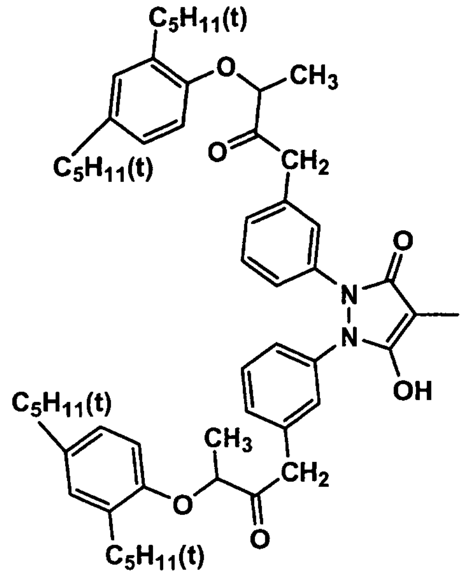

3-92

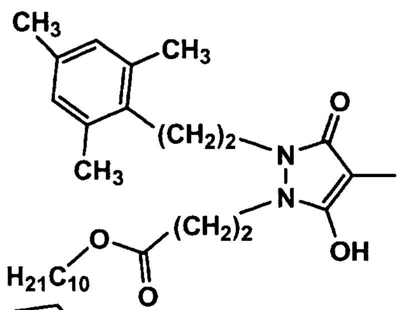

3-93

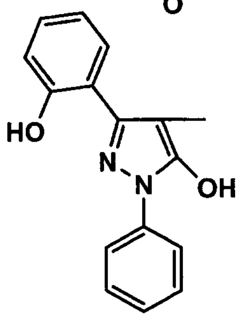

3-94

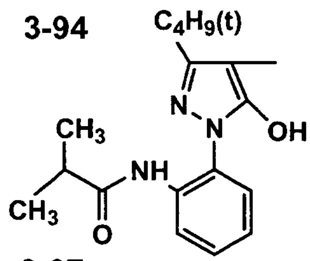

3-95

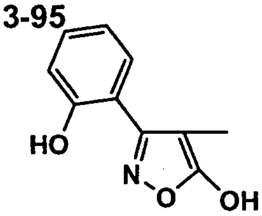

3-96

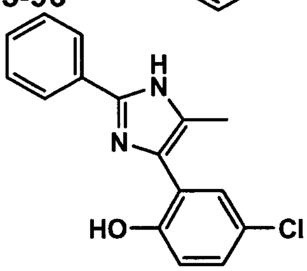

3-97

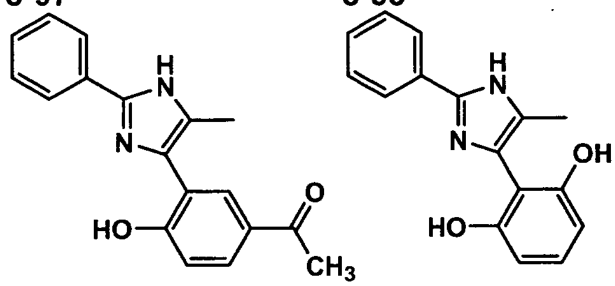

3-98

3-99

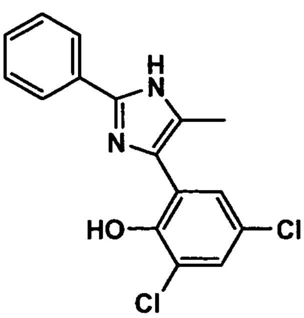

3-100

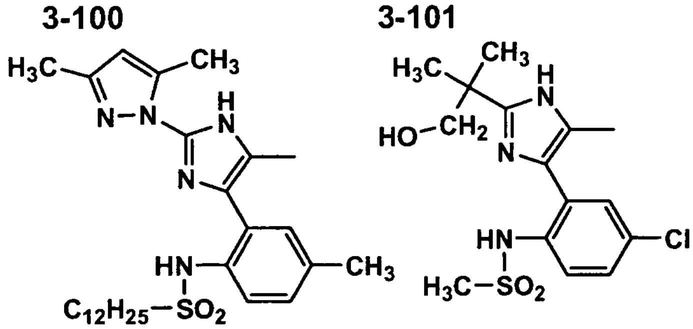

3-101

3-102

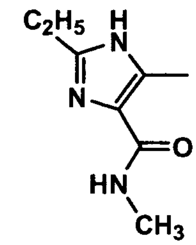

3-103

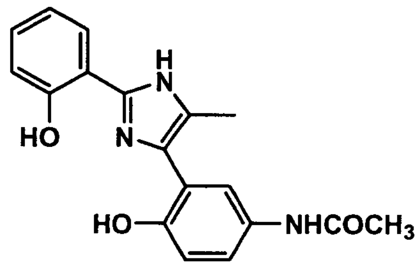

3-104

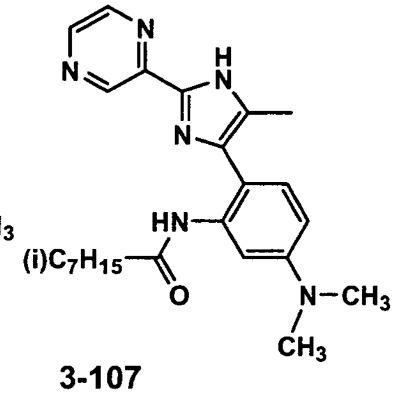

3-105

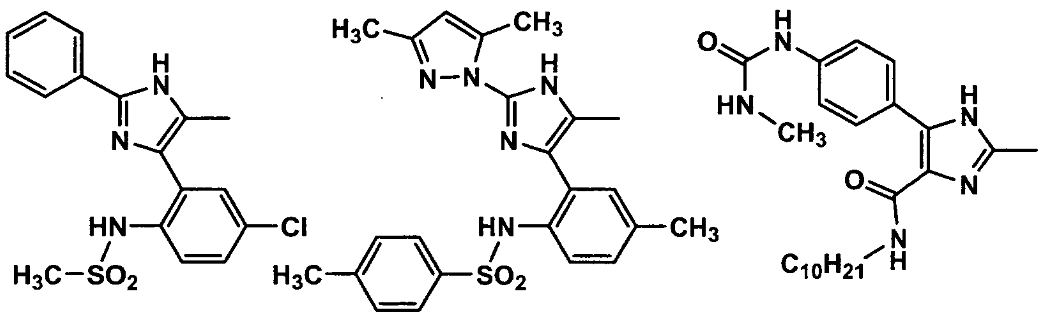

3-106

3-107

3-108

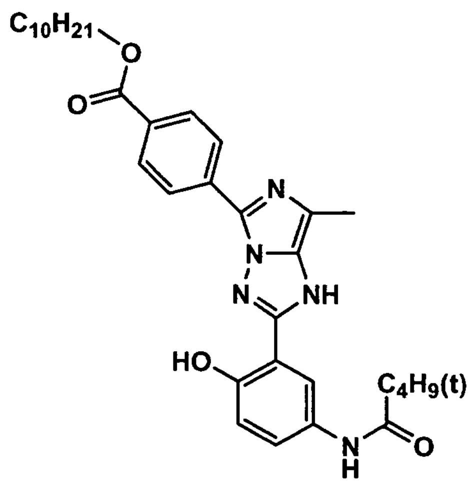

3-109

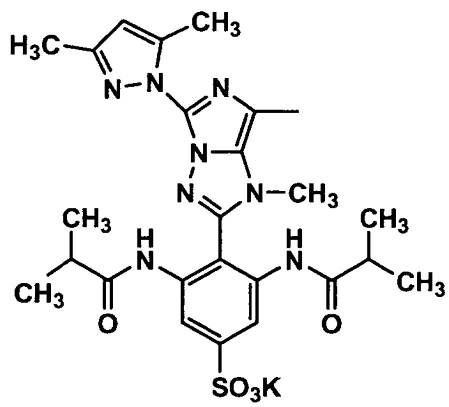

3-110

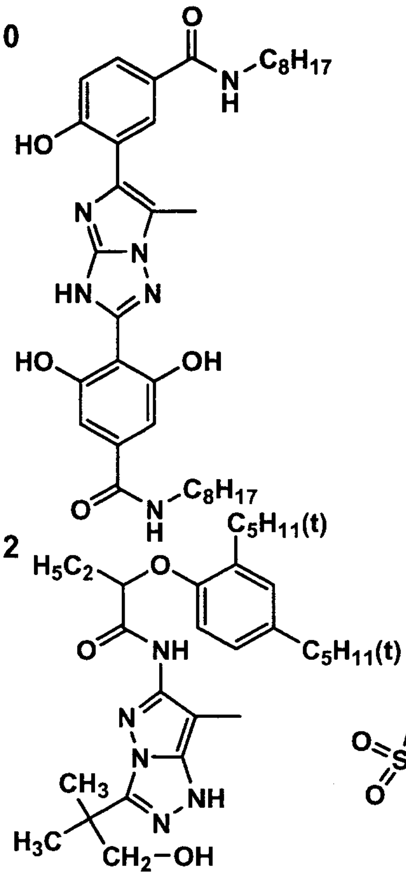

3-112

3-111

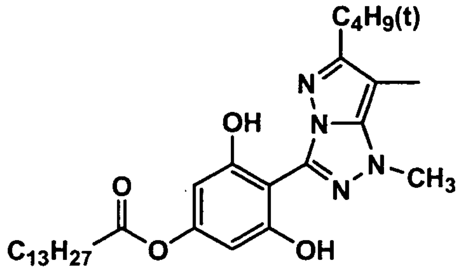

3-113

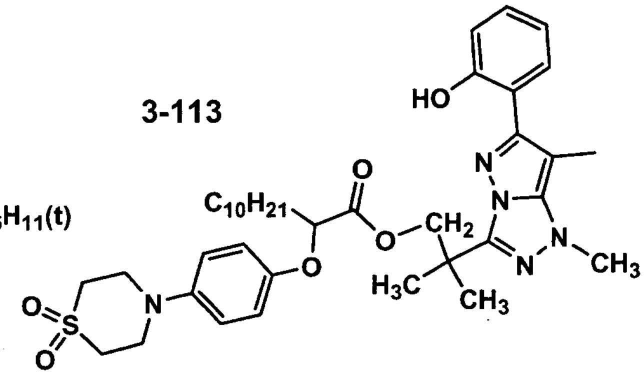

3-114

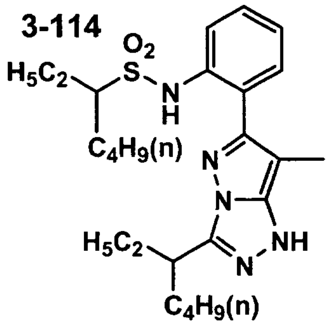

3-115

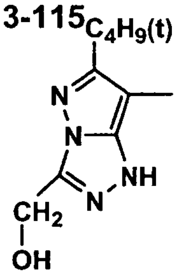

3-116

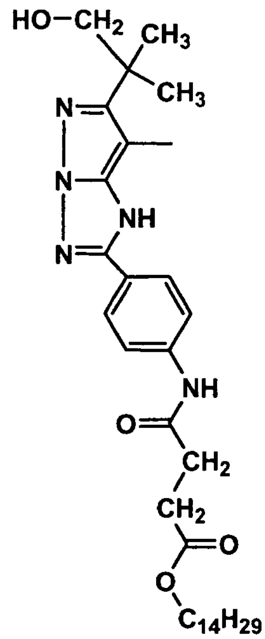

3-117

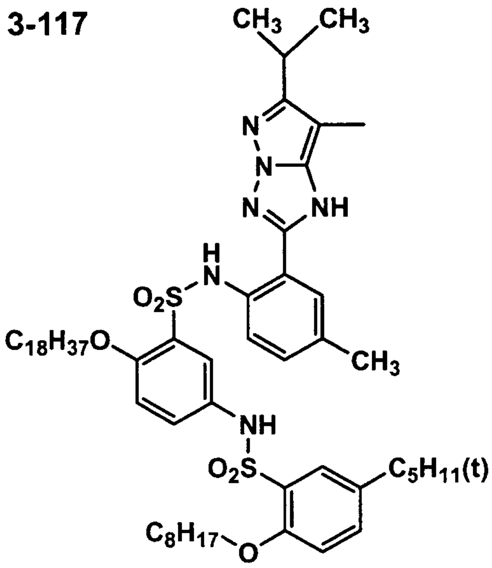

3-118

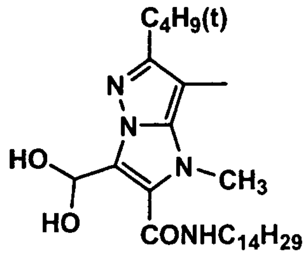

3-119

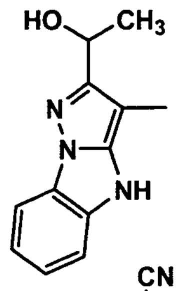

3-120

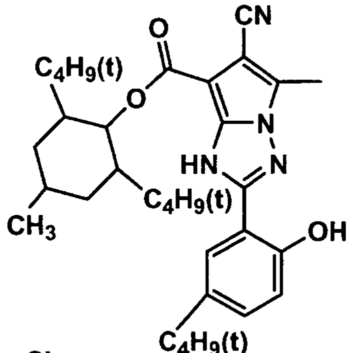

3-121

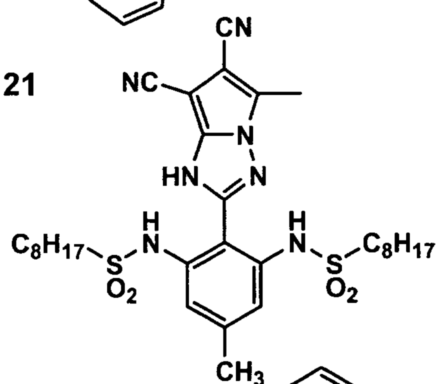

3-122

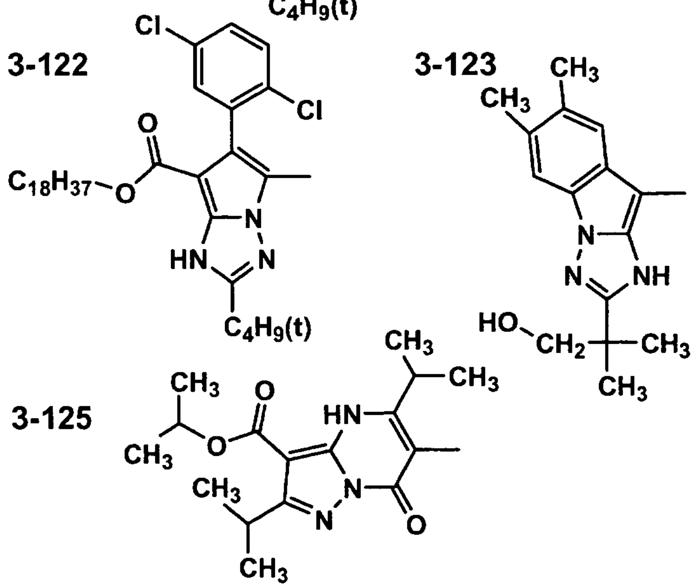

3-123

3-125

3-124

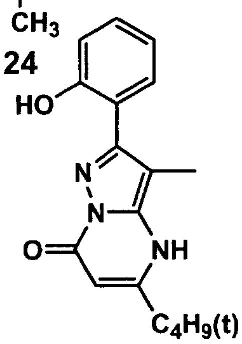

3-126

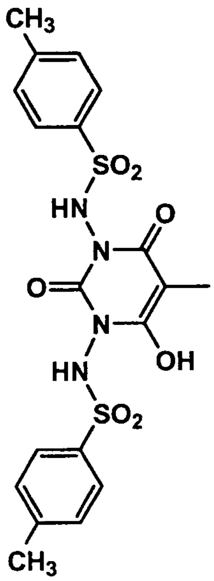

3-127

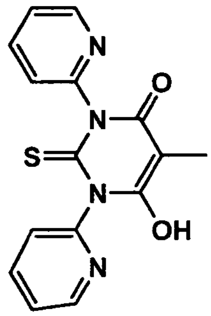

3-128

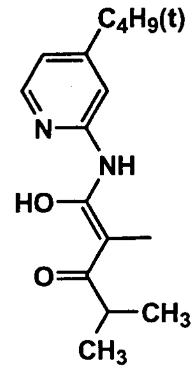

3-129

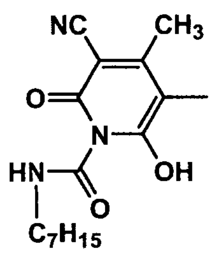

3-130

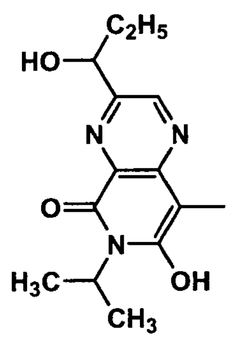

3-131

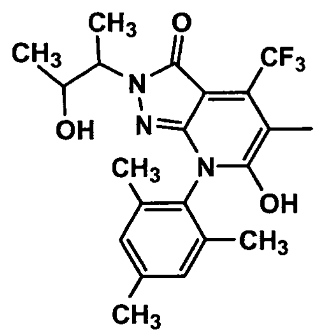

3-132

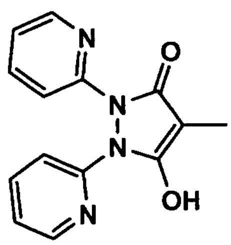

3-133

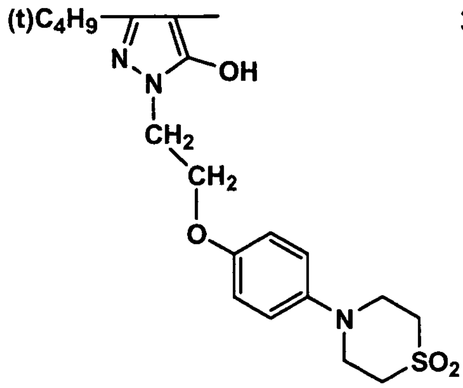

3-134

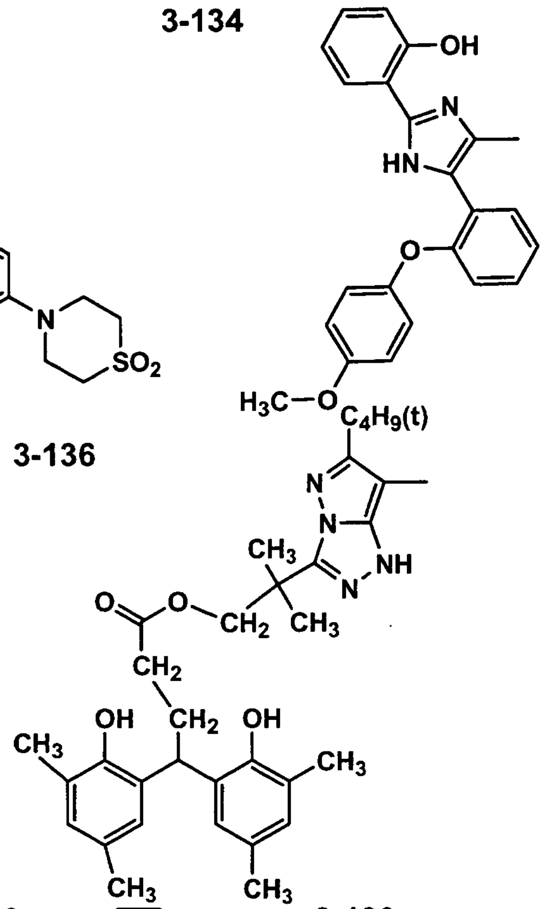

3-136

3-135

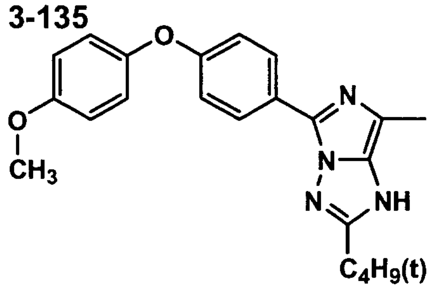

3-137

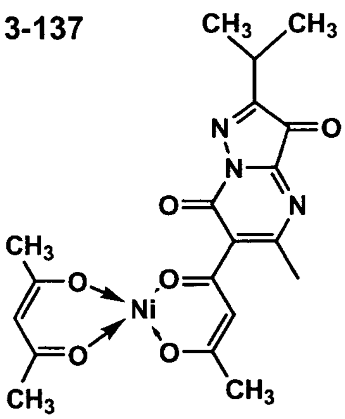

3-138

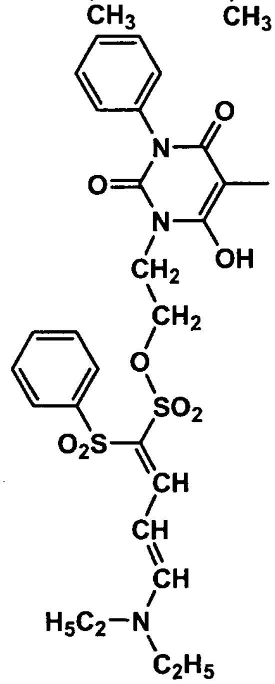

3-139

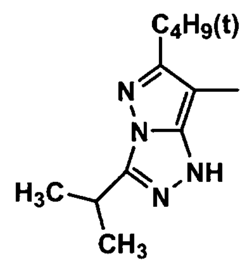

**3-140**

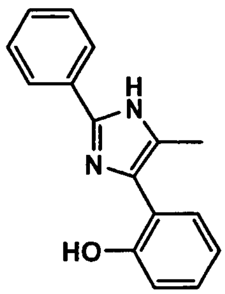

**3-141**

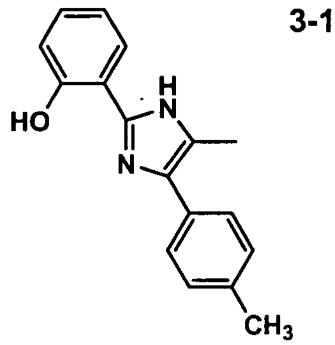

**3-142**

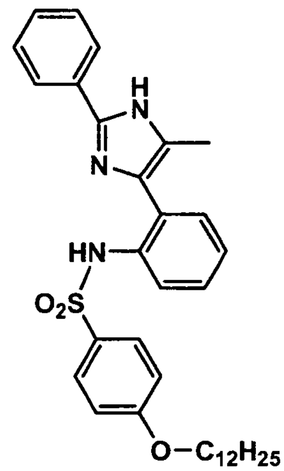

**3-143**

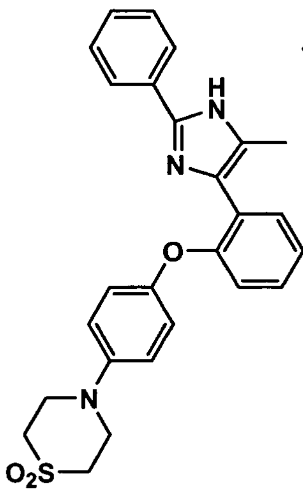

**3-144**

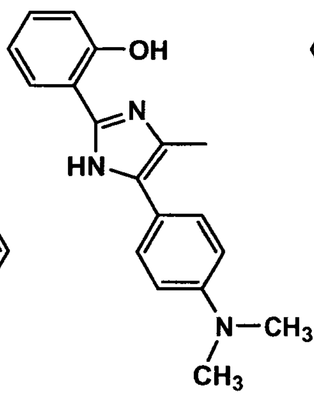

**3-145**

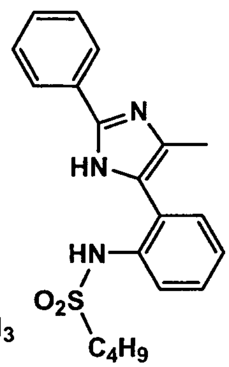

**3-146**

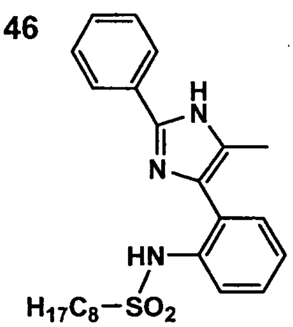

**3-147**

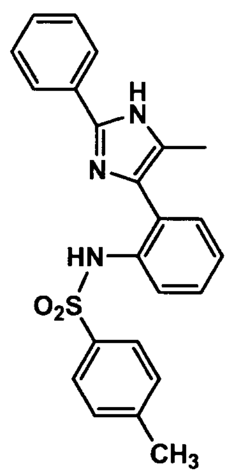

3-148

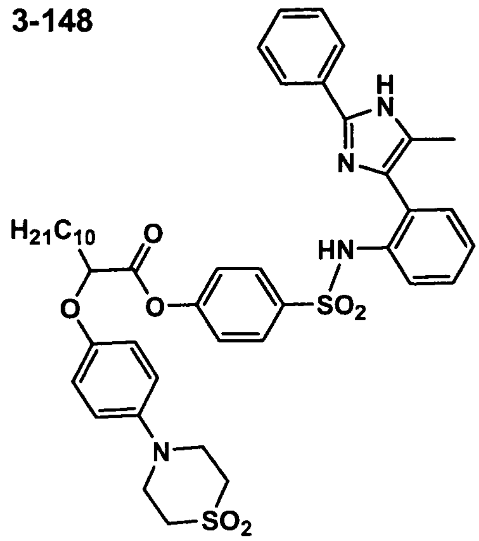

3-149

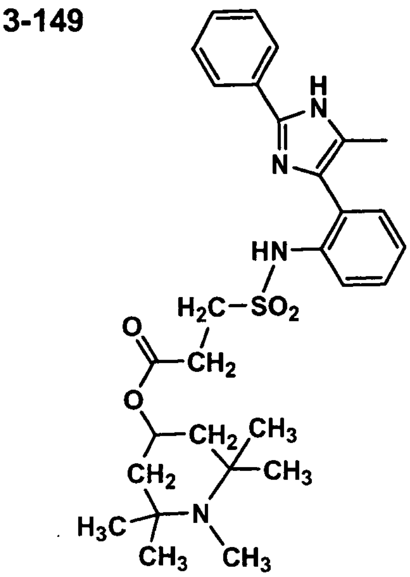

3-150

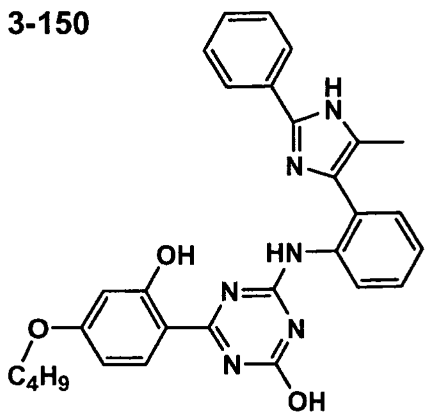

Synthesis Example 1 (Synthesis of Exemplified Compound D-13)

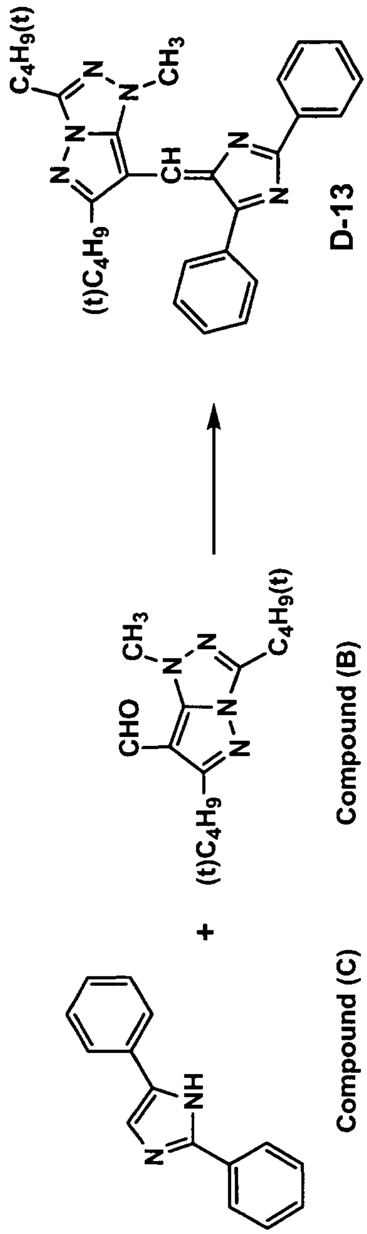

D-13

Compound (B)

Compound (C)

Charged into a 500 ml eggplant type flask were 10 g of Compound (C), 12 g of Compound (B), 7.2 g of morpholine, and 300 ml of toluene, and the resulting mixture was fluxed for 8 hours under applied heat. After completion of the reaction, the reaction composition was concentrated. The resulting concentrate was purified employing column chromatography. The resulting crude crystals were recrystallized employing hexane, whereby 8.0 g of target product D-13 were prepared (resulting in a yield of 43 percent).

Employing NMR and mass spectrograph, the resulting product was identified as the target product.

Synthesis Example 2 (Synthesis of Exemplified Compound D-46)

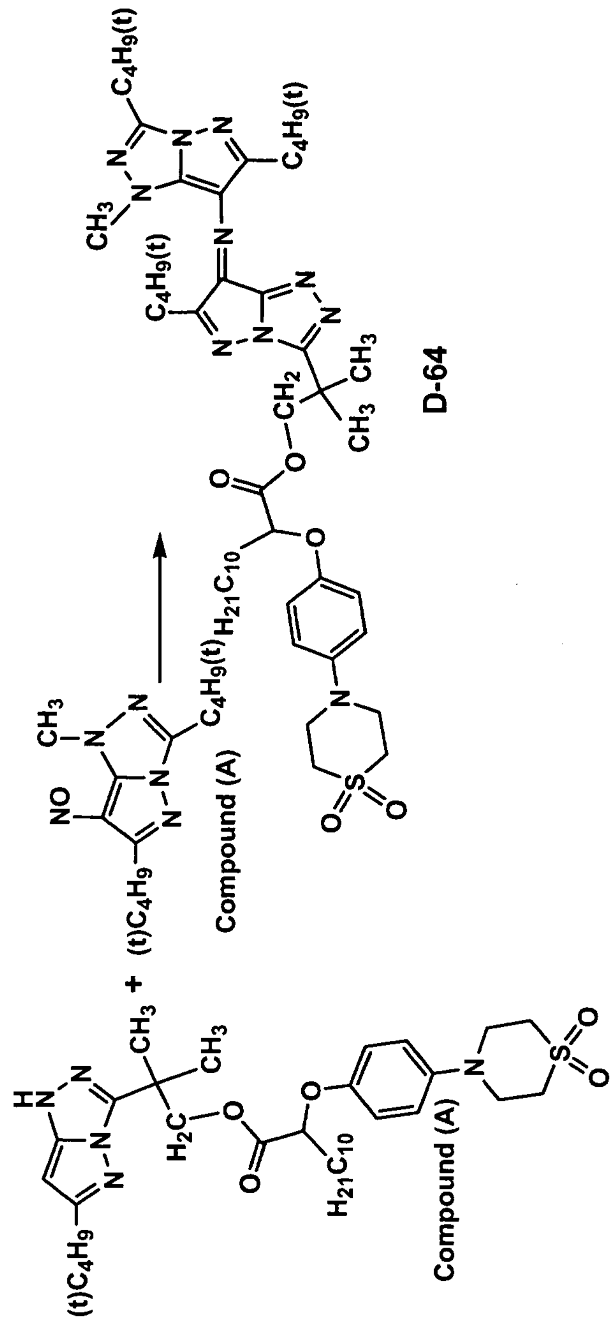

Compound (A)

Compound (A)

D-64

Charged into a 500 ml eggplant type flask were 10 g of Compound (A), 3.7 g of Compound (B), 350 ml of toluene, and 3.0 g of p-toluenesulfonic acid, and the resulting mixture was thermally fluxed for 24 hours, while removing water, employing an ester pipe. After completion of the reaction, the reaction composition was allowed to reach equilibrium at room temperature, and insoluble substances were removed. The filtrate was concentrated followed by purification employing column chromatography. The resulting crystals were recrystallized employing hexane, whereby 7.1 g of target product D-64 were prepared (resulting in a yield of 52 percent).

Employing NMR and mass spectrograph, the resulting product was identified as the target product.

Synthesis Example 3 (Synthesis of Exemplified Compound D-97)

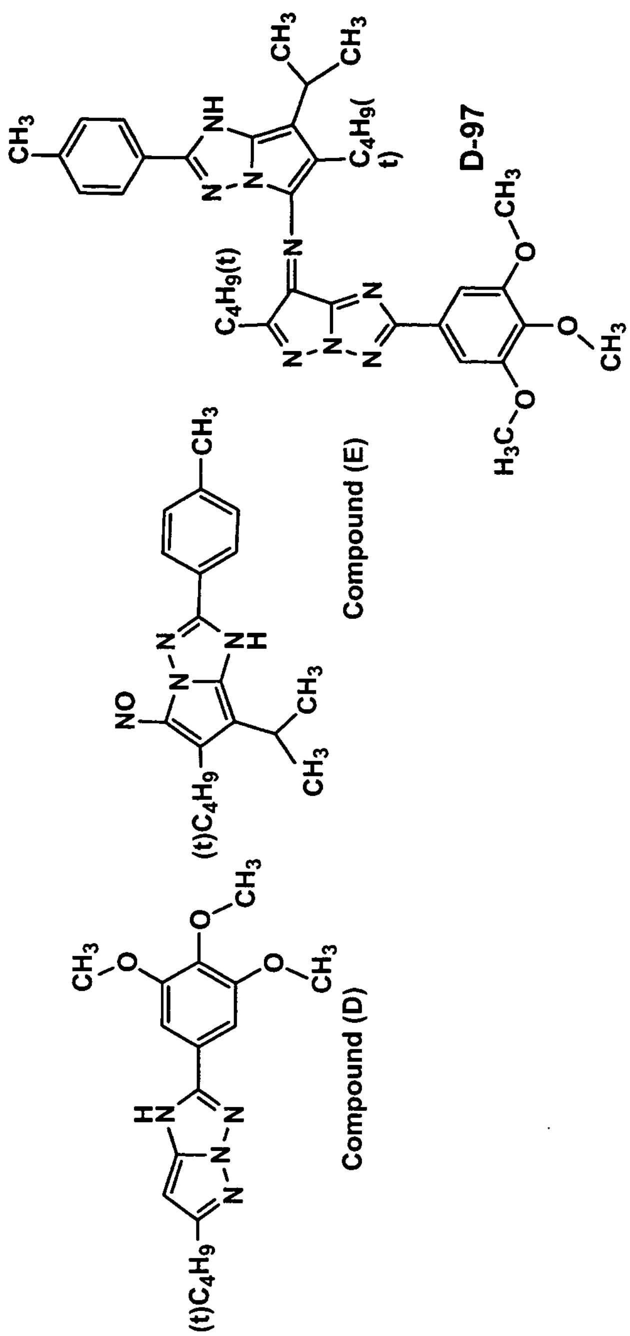

D-97

Compound (E)

Compound (D)

Charged into a 300 ml eggplant type flask were 5.0 g of Compound (D), 6.0 g of Compound (E), 3.1 g of DCC, and 180 ml of toluene, and the resulting mixture was fluxed for 12 hours while heated. After completion of the reaction, the reaction composition was allowed to reach equilibrium at room temperature and insoluble substances were removed. The filtrate was concentrated, followed by purification employing column chromatography. The resulting crystals were dissolved in 5 percent aqueous KOH solution, followed by salting out. Subsequently, crystal deposits were collected through filtration, whereby 5.1 g of target product D-97 were prepared (resulting in a yield of 58 percent).

Employing NMR and mass spectrograph, the resulting product was identified as the target product.

Synthesis Example 4 (Synthesis of Exemplified Compound D-195)

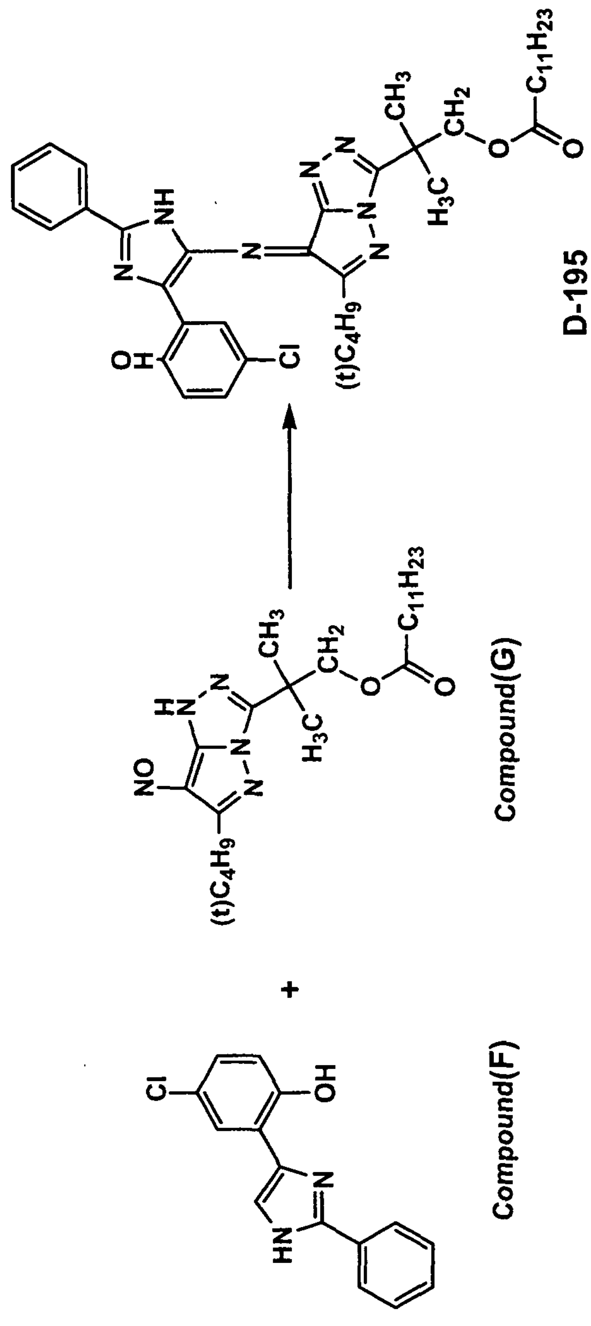

D-195

Compound(G)

Compound(F)

Charged into a 300 ml eggplant type flask were 5.0 g of Compound (F), 9.1 g of Compound (G), 3.1 g of DCC, and 180 ml of toluene, and the resulting mixture was fluxed for 6 hours while heated. After completion of the reaction, the reaction composition was allowed to reach equilibrium at room temperature, and insoluble substances were removed. The filtrate was concentrated, followed by purification employing column chromatography. The resulting crude crystals were crystallized employing hexane, whereby 9.2 g of target product D-195 was prepared (resulting in a yield of 71.3 percent).

Employing NMR and mass spectrograph, the resulting product was identified as the target product.

Synthesis Example 5 (Synthesis of Exemplified Compound D-208)

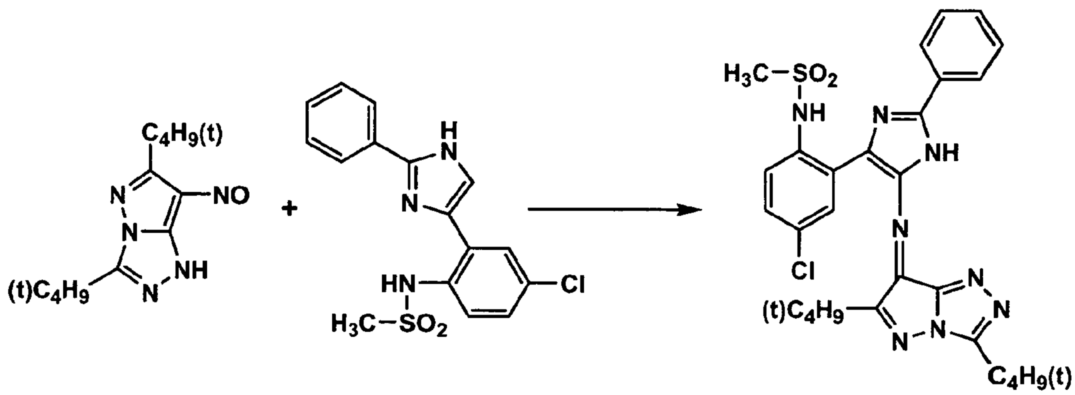

Compound(H) Compound(I) D-208

Charged into a 200 ml eggplant type flask were 5.0 g of Compound (H), 12.2 g of Compound (I), 4.4 g of DCC, and 180 ml of toluene, and the resulting mixture was fluxed for 12 hours while heated. After completion of the reaction, the reaction composition was allowed to reach equilibrium at room temperature, and insoluble substances were removed. The filtrate was concentrated, followed by purification employing column chromatography. The resulting crude crystals were recrystallized employing hexane, whereby 9.9 g of target product D-208 were prepared (resulting in a yield of 62.8 percent).

Employing NMR and mass spectrograph, the resulting product was identified as the target product.

Synthesis Example 6 (Synthesis of Exemplified Compound D-211)

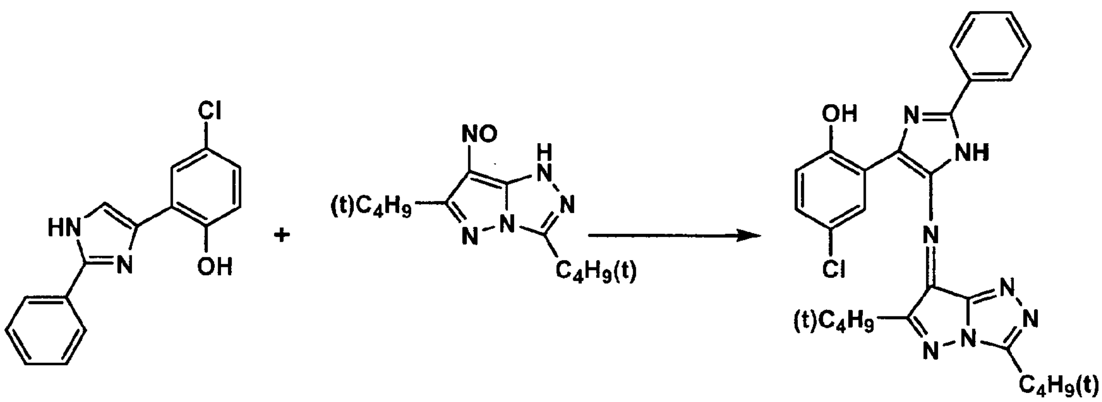

Compound(J) Compound(K) D-211

Charged into a 200 ml eggplant type flask were 3.5 g of Compound (J), 3.5 g of Compound (K), 2.7 g of DCC, and 120 ml of toluene, and the resulting mixture was fluxed for 9 hours while heated. After completion of the reaction, the reaction composition was allowed to reach equilibrium at room temperature, and insoluble substances were removed. The filtrate was concentrated, followed by purification employing column chromatography. The resulting crude crystals were recrystallized employing a mixed solution of hexane/ethyl acetate = 3/1, whereby 1.7 g of target product D-211 were prepared (resulting in a yield of 27.3 percent).

Employing NMR and mass spectrograph, the resulting product was identified as the target product.

The prepared target product D-211 was dissolved in acetone followed by determination of absorption, resulting in λmax of 535 nm and εof 35,240. Fig. 1 shows the absorption spectra in the visible range, while Fig. 2 shows the NMR spectra.
It is possible to synthesize other dyes in accordance with the aforesaid synthetic methods.

- Colored Compositions -

It is preferable that the colored compositions of the present invention are prepared by dissolving the dyes represented by aforesaid General Formula (1) in organic solvents or an aqueous medium, or dispersing the same into an aqueous medium. In the specification of the present invention, specific examples of organic solvents include toluene, ethyl acetate, methyl ethyl ketone, acetone, dichloromethane, dichloroethane, and tetrahydrofuran. The aqueous media, as described herein, refer to liquid comprising at least water, and in more detail refer to water or mixtures consisting of water and water compatible organic solvents, to which, if desired, additives such as surfactants, antidryers (lubricants), stabilizers, antiseptics are added.
Listed as embodiments of colored compositions which are prepared by dissolving or dispersing the dyes represented by aforesaid General Formula (1) in an aqueous medium are colored compositions prepared by dissolving the aforesaid dyes in an aqueous medium, colored compositions comprised of colored fine particle dispersion comprising oil-soluble polymers, or colored compositions comprising dye dispersion which is prepared by dispersing in an aqueous medium the aforesaid oil-soluble dyes dissolved in high-boiling point organic solvents having a boiling point of 150 to 400 °C and a dielectric constant of 3 to 12 at 25 °C.

- Colored fine particle dispersion -

Colored fine particle dispersions are comprised of the aforesaid oil-soluble dyes and oil-soluble polymers. In the aforesaid colored fine particle dispersions, it is preferable that the aforesaid oil-soluble dyes are dispersed in oil-soluble polymers.
Aqueous dispersion of colored fine particles, which are comprised of dyes and polymers of the present invention, will now be detailed. From the viewpoint of durability of the ink after printing and forming properties of suspension, the number average molecular weight of polymers of the present invention is preferably from 500 to 100,000. In the present invention, it is possible to use a plurality of polymers. However, it is preferable that at least one of the polymers employed has a glass transition temperature (Tg) of 10 to 200 °C.
The types and physical properties of the aforesaid polymers are described, for example, in Polymer Handbook, Fourth Edition (John Wiley & Sons, Inc.). Polymers are not particularly limited and those known in the art may be selected to suit the function and employed therefore. Listed as polymers are, for example, vinyl polymers and condensation based polymers (such as polyurethane, polyester, polyamide, polyurea, and polycarbonate). Specific examples include polyethylene, polypropylene, polystyrene, polyvinyl chloride, polyvinyl acetate, polyacrylic acid (methacrylic acid) esters, polyacrylonitrile, polyvinyl butyral, polyvinyl alcohol, polyethylene terephthalate, alkyd resins, maleic acid resins, urethane rubber, polycarbonates, nylon, polyurethane, polyethylene oxides, polypropylene oxides, polyformaldehyde, and epoxy resins. Of these, polyvinyl butyral is preferred. Polyvinyl butyral enhances the dispersion stability of aqueous dispersion of colored fine particles comprising dyes, resulting in one of the preferred embodiments of the present invention. These polymers may have a substituent which may be a straight, branched, or cyclic structure.
Various types of polymers, having a specified functional group, are available on the market. However, it is possible to synthesize them employing conventional methods. Further, the aforesaid copolymers may be prepared in such a way that, for example, an epoxy group is introduced into a single polymer molecule which is then subjected to condensation polymerization with another polymer, or graft polymerization is carried out employing light or radioactive rays.
Specific examples (PA-1 through -41) and (PC-1 through -16) are listed below. The ratio in the parenthesis shows the weight ratio. However, the present invention is not limited these specific examples.

(PA-1) methyl methacrylate-ethyl acrylate copolymer (50 : 50)
(PA-2) butyl acrylate-styrene copolymer (50 : 50)
(PA-3) poly-n-butyl methacrylate
(PA-4) polyisopropyl methacrylate
(PA-5) poly-4-tert-butyl phenyl acrylate
(PA-6) n-butyl methacrylate-N-vinyl-2-pyrrolidone copolymer (90 : 10)
(PA-7) methyl methacrylate-vinyl chloride copolymer (70 : 30)
(PA-8) isobutyl methacrylate-butyl acrylate copolymer (55 : 45)
(PA-9) vinyl acetate-acrylamide copolymer (85 : 15)

(PA-10) n-butyl acrylate-methyl methacrylate-n-butyl methacrylate copolymer (35 : 35 : 30)
(PA-11) ethyl methacrylate-n-butyl acrylate copolymer (70 : 30)
(PA-12) tert-butylmethacrylamide-methyl acrylate-acrylic acid copolymer (60 : 30 : 10)
(PA-13) n-butyl acrylate-acrylic acid copolymer (80 : 20)
(PA-14) sec-butyl acrylate-acrylic acid copolymer (85 : 15)
(PA-15) isopropyl acrylate-acrylic acid copolymer (90 : 10)
(PA-16) butyl methacrylate-2-hydroxyethyl methacrylate-acrylic acid copolymer (85 : 5 : 10)
(PA-17) isobutyl methacrylate-tetrahydrofurfuryl acrylate-acrylic acid copolymer (60 : 30 : 10)
(PA-18) n-butyl methacrylate-1H, 1H, 2H, 2H-perfluorodecyl acrylate-acrylic acid copolymer (75 : 20 : 5)
(PA-19) methyl methacrylate-n-butyl acrylate-acrylic acid (50 : 45 : 5)
(PA-20) 3-methoxybutyl methacrylate-styrene-acrylic acid copolymer (35 : 50 : 15)
(PA-21) ethyl acrylate-phenyl methacrylate-acrylic acid (72 : 25 : 13)
(PA-22) isobutyl methacrylate-methacrylate of polyethylene glycol monomethyl ether (having the number of repetitions of a ethyleneoxy chain)-acrylic acid (70 : 20 : 10)
(PA-23) ethyl methacrylate-acrylic acid copolymer (95 : 5)
(PA-24) isobutyl acrylate-methoxystyrene-acrylic avoid copolymer (75 : 15 :10)
(PA-25) isobutyl acrylate-N-vinylpyrrolidone-acrylic acid copolymer (60 : 30 : 10)
(PA-26) 2,2,2-tetrafluoroethyl methacrylate-methyl methacrylate-methacrylic acid copolymer (25 : 60 : 15)
(PA-27) ethyl methacrylate-2-ethoxyethyl methacrylate-methacrylic acid copolymer (75 : 65 : 15)
(PA-28) tert-octylacrylamide-propyl methacrylate-methacrylic acid (20 : 65 : 15)
(PA-29) n-butyl methacrylate-diphenyl-2-methacroyloxydiethyl phosphonate-methacrylic acid copolymer (80 : 5 : 15)
(PA-30) n-butyl methacrylate-phenylacrylamide-methacrylic acid copolymer (70 : 15 : 15)
(PA-31) n-butyl methacrylate-N-vinylpyrrolidone-methacrylic acid copolymer (70 : 15 : 15)
(PA-32) n-butyl methacrylate-styrenesulfonic acid copolymer (90 : 10)
(PA-33) isobutyl methacrylate-styrenesulfonic acid copolymer (90 : 10)
(PA-34) n-butyl methacrylate-2-acrylamide-2-methylethanesulfonic acid copolymer (90 : 10)
(PA-35) isobutyl acrylate-n-butyl acrylate-2-acrylamide-2-methylethanesulfonic acid copolymer (70 : 20 : 10)
(PA-36) ethyl acrylate-tert-butyl acrylate-2-acrylamide-2-methylpropanesulfonic acid copolymer (60 : 30 : 10)
(PA-37) tert-butyl acrylate-tetrahydrofurfuryl acrylate-2-methylpropanesulfonic acid copolymer (50 : 40 : 10)
(PA-38) tert-butyl acrylate-methacrylic ester of polyethylene glycol monomethyl ether (having a number of repetitions of ethyleneoxy chain of 23)-2-acrylamide-2-methylpropanesulfonic acid copolymer (60 : 30 : 10)
(PA-39) isobutyl acrylate-N-vinylpyrrolidone-2-acrylamide-2-methylpropanesulfonic acid (60 : 30 : 10)
(PA-40) n-butyl methacrylate-2-acrylamide-sodium 2-methylpropanesulfonate (98 : 12)
(PA-41) n-butyl methacrylate-tert-butyl methacrylate-sodium 2-acrylamide-2-methylbutanesulfonate (50 : 35 : 15)
(PA-42) styrene stearyl methacrylate - methacrylic acid copolymer
(PA-43) styrene acetoacetoxyethyl methacrylate - stearyl methacrylate copolymer
(PA-44) mixture of (PA-43) and (BL-S): 50/50
(PC-1) toluene diisocyanate/ethylene glycol/1,4-butanediol (50/15/35)
(PC-2) toluene diisocyanate/hexamethylene diisocyanate/ethylene glycol/polyethylene glycol (Mw = 600) 1,4-butanediol (40/20/10/20)
(PC-3) 4,4'-diphenylmethane diisocyanates/hexamethylene diisocyanate/tetraethylene glycol/ethylene glycol/2,2-bis(hydroxymethyl)propionic acid (40/10/20/20/10)
(PC-4) 1,5-naphthalene diisocyante/butanediol/4,4'-dihydroxydiphenyl-2,2'-propane/polypropylene glycol (Mw = 400)/2,2-bis(hydroxymethyl)propionic acid (50/20/5/10/15)
(PC-5) isophorone diisocyanate/diethylene glycol/neopentyl glycol/2,2-bis(hydroxymethyl)propionic acid (50/20/20/10)
(PC-6) diphenylmethane diisocyanate/hexamethylene diisocyanate/tetraethylene glycol/buntanediol/2,4-di(2-hydroxy)ethylcarbonylbenzenesulfonic acid (40/10/10/33/7)
(PC-7) terephthalic acid/isophthalic acid/cyclohexanedimethanol/1,4-butnaediol/ethylene glycol (25/25/25/15/10)
(PC-8) terephthalic acid/isophthalic acid/4,4'-dihydroxydiphenyl-2,2-propane/tetraethylene glycol/ethylene glycol (30/20/20/15/15)
(PC-9) terephthalic acid/isophthalic acid/4,4'-benzenedimethanol/ethylene glycol/neopentyl glycol (25/25/25/15/10)
(PC-10) terephthalic acid/isophthalic acid/5-sulfoisophthalic acid/ethylene glycol/neopentyl glycol (24/24/2/25/25)
(PC-11) 11-aminoundecanic acid (100)
(PC-12) reaction products of poly(12-aminododecanic acid) and maleic anhydride
(PC-13) hexamethylenediamine/adipic acid (50/50)

(PC-14) N,N-dimethylethylenediamine/adipic acid/cyclohexanedicarboxylic acid (50/20/30)
(PC-15) toluene diisocyanates/4,4'-diphenylmethane diisocyante/hexamethylenediamine (30/20/50)
(PC-16) hexamethylenediamine/nonamethylenediamine/urea (25/25/50)

The colored fine particle dispersions of the present invention are comprised of a suspension of polymers comprising dyes according to the present invention. It is possible to produce the aforesaid suspension employing various types of emulsification methods. Examples of such emulsiifcation methods are summarized, for example, on page 86 of "Kinosei Nyukazai·Nyuka Kijutsu no Shinpo to Oyo Tenkai (Progress and Application of Functional Emulsifiers and Emulsification Technology)", CMC. Specifically, it is preferable to use various types of homogenizers utilizing ultrasonic waves, high speed rotation shearing, or high pressure.
In emulsification dispersion utilizing ultrasonic waves, it is possible to employ two types, i.e. so-called batch and continuous types. The batch type is suitable for production of a relatively small amount, while the continuous type is suitable for large volume production. In the continuous type, it is possible to use apparatuses such as UH-600SR (produced by SMT Co.). In the case of such a continuous type, it is possible to determine an ultrasonic wave application period based on the capacity of the dispersion chamber/flow rate x circulation frequency. When a plurality of ultrasonic homogenizers is employed, the aforesaid ultrasonic wave application period is obtained by totaling all application periods. In practice, the ultrasonic wave application period is usually at least three seconds. If emulsification is completed within three seconds, it is unnecessary to use an ultrasonic homogenizer. Further, if at least 10,000 seconds are required for emulsification, it results in an increase in processing load. As a result, in practice, it is required to decrease the emulsification dispersion period to be at most 10,000 seconds, while selecting other emulsifiers. Accordingly, the emulsification dispersion period is preferably from 10 to 2,000 seconds.
Employed as homogenizers utilizing high speed rotation shearing may be disper mixers, described on pages 255 and 256 of the previously cited publication, "Kinosei Nyukazai·Nyuka Gijutsu no Shinpo to Oyo Tenkai (Progress and Application of Functional Emulsifiers and Emulsification Technology)", homomixers, described on page 251 of the same, and ultra-mixers, described on page 256 of the same. Each of these homogenizers may be selected to suit the function and used based on viscosity during emulsification and dispersion. In these homogenizers utilizing high speed rotation shearing, the rotation frequency of the stirring blade is critical. The clearance of the stator is commonly about 0.5 mm, and it is very difficult to make it much narrower. As a result, shearing force depends mainly upon the peripheral rate of the stirring blade. If a homogenizer has a peripheral rate of 5 to 150 m/second, it is possible to use it as an emulsification dispersion means in the present invention. When the peripheral rate is less than the lower limit, it is often impossible to decrease the particle size to the desired value, even though the emulsification period is extended. On the other hand, in order to increase the peripheral rate to at least 150 m/second, it requires markedly enhanced performance of the motor. The peripheral rate is more preferably from 20 to 100 m/second.
In emulsification and dispersion utilizing high pressure, it is possible to use LAB2000 (produced by SMT Co.). Its emulsification dispersion capability depends on pressure applied to the dispersion composition. The pressure is preferably from $9.8 \times 10^6$ to $4.9 \times 3\ 10^8$ Pa. Further, if desired, it is possible to obtain the desired particle size through repeated emulsification dispersion. When the pressure is excessively low, it is often impossible to achieve the desired particle size, even though emulsification dispersion is repeated. On the other hand, in order to increase the pressure to at least 4.9 x 108 Pa, the apparatus is subjected to excessive loading. As a result, an increase in the pressure is not practical. The applied pressure is more preferably from $4.9 \times 10^7$ to $2.0 \times 10^8$ Pa.
These homogenizers may be employed individually, but if desired, whey may be employed in combination. For example, it is impossible to achieve the targeted particle size of the present invention by only employing a colloid mill or a flow jet mixer. However, a combination of the various types of homogenizers cited above ensures emulsification and dispersion within a shorter period, whereby it is possible to enhance the effects of the present invention.
Further, other than employing the above apparatuses, it is possible to prepare the colored fine particle dispersion of the present invention utilizing a so-called phase inversion emulsification. Phase inversion emulsification, as described herein, involves the following steps. The polymers according to the present invention are dissolved in organic solvents such as ester and ketone together with dyes according to the present invention. If desired, a neutralizer can be added to the resulting mixture so that the carboxyl groups of the polymers are ionized. Subsequently after being subjected to a water phase, the aforesaid organic solvents are distilled away so that the phase of the resulting mixture is inverted to an aqueous phase. After completing the aforesaid phase inversion, the system is heated under reduced pressure whereby the aforesaid ester and ketone based solvents are eliminated along with water in the specified amount. Thus, it is possible to obtain an aqueous colored fine particle dispersion of the present invention, having the desired concentration.
When the volume average particle diameter of polymer particles according to the present invention is at most 5 nm, the surface area per unit volume becomes excessively large. As a result, desired effects, which are exhibited by sealing dyes in polymers, decrease. On the other hand, in the larger particles having a diameter of at least 500 nm, the stability of aqueous dispersion during production is degraded. Accordingly, in the embodiments of the present

invention, the average diameter of polymer particles is preferably from 5 to 500 nm, and is more preferably from 20 to 200 nm.

The volume average particle diameter is determined as follows. By using a transmission type electron microscope (TEM), particles (at least 100) are photographed. Subsequently, based on the resulting particle projection photographs, the average circle equivalent particle diameter is determined as a sphere equivalent diameter. The volume average particle diameter and its standard deviation are determined. A variation coefficient is obtained by dividing the standard deviation by the volume average particle diameter. Alternatively, it is possible to obtain the variation coefficient, utilizing a dynamic light scattering method. For example, it is possible to obtain the variation coefficient, employing a laser particle diameter analysis system, produced by Otsuka Denshi Co., and a Zeta Sizer, produced by Malvern Inc.

In the present invention, considered below two cases are for colored fine particles: (1) a case in which all the aforesaid fine particles are comprised of a single composition and have no shells (may also be designated as a case in which the fine particles are comprised of only the shell), and (2) a case in which each of the aforesaid fine particles is comprised of a core/shell structure in such a manner that the fine particle has a core comprised of a first composition and the aforesaid core is covered with a shell comprised of a second composition. However, from the viewpoint of the performance of aqueous ink, especially ink jet ink, fine particles are preferably formed to result in a core/shell structure.

The inventors of the present invention conducted diligent investigations. As a result, the following was discovered. The polymer cores mainly include dyes and contribute to enhance the durability of dyes and to maintain the resulting color tone, while the polymer shell contributes enhancement of the stability of the aqueous dispersion of colored fine particles and aqueous ink jet ink (hereinafter occasionally referred to simply as ink) comprised of the aforesaid dispersion. In addition, the polymer shells promote fixing of dyes on the recording media, minimize dye aggregation, and contribute to enhance image quality. Further, contribution for enhancement of dye fastness as well as for retaining of color tone was also discovered.

One of the preferred embodiments is that polymers incorporated in polymer particles, which form cores, include those comprising acetal as a functional group. Specific examples of polymers comprising acetal as a functional group are polyvinyl butyral resins. These are available on the market and include, for example, #2000-L, #3000-1, #3000-2, #3000-K, #4000-1, #4000-2, #5000-A, #6000-C, and #6000-EP, produced by Denki Kagaku Kogyo Co., BL-1, BL-1H, BL-2, BL-5, BL-10, BL-S, BL-SH, BX-10, BX-L, BM-1, BM-2, BM-5, BM-S, BM-SH, BH-3, BH-6, BH-S, BX-1, BX-3, BX-5, KS-10, KS-1, KS-3, and Ks-5, produced by Sekisui Kagaku Kogyo Co., and Iupital Series, produced by Mitsubishi Engineering-Plastics Corporation.

In the present invention, the amount of polymer employed in the shell is preferably from 5 to 95 percent by weight with respect to the total polymers. When the amount is at most 5 percent by weight, a portion of the core, which comprises a large amount of dyes, tends to appear on the surface of particles. On the other hand, when the polymers of the shell are excessive, the dye protecting capability of the core tends to decrease. The amount of the aforesaid polymer is more preferably from 0 to 90 percent.

The total amount of dyes is preferably from 20 to 1,000 percent by weight with respect to the total polymers. When the dye amount is excessively small, image density after ejection does not increase, while when the aforesaid amount is excessively large, the protection capability of the polymers is not sufficiently exhibited.

Aqueous colored fine particle dispersion, having the core/shell structure of the present invention, is preferably prepared by employing a method in which initially polymer cores comprising dyes are prepared and subsequently polymer shells are provided, or alternatively a method in which the core and the shell are simultaneously provided.

(A case in which shells are provided after preparing cores)

It is possible to prepare dye containing polymers, which are employed as a core, employing various methods. For example, there are a method in which after dissolving oil-soluble dyes in monomers, the resulting mixture is emulsified in water and dyes are incorporated into polymers utilizing polymerization, a method in which polymers and dyes are dissolved in organic solvents and after emulsifying the resulting mixture in water, the aforesaid organic solvents are removed, or a method in which porous polymer particles are added to a dye solution, and dyes are adsorbed onto and impregnated into the aforesaid particles.

Methods to provide polymer shells onto the aforesaid core particles include a method in which water-soluble polymer dispersing agents are added to and adsorbed onto a aqueous dispersion comprised of polymers which form cores, a method in which monomers are gradually dripped and deposited onto the surface of cores while simultaneously being polymerized, or a method in which polymers dissolved in organic solvents are gradually dripped and adsorbed onto the surface of cores while being simultaneously deposited.

Further, pigments and polymers are kneaded. Subsequently the resulting mixture is dispersed in an aqueous system to form pigment cores covered with the polymers and shells can be formed employing any of the aforesaid methods.

(Methods in which the core and the shell are simultaneously provided)

There is a method in which after polymerizing dyes with polymers to form cores, the resulting polymerized product is dissolved in or dispersed in monomers which form shells and the resulting solution or dispersion is suspended in water followed by polymerization, or a method in which the resulting liquid composition undergoes emulsion polymerization while gradually being dripped into water.

When the volume average particle diameter of polymer particles, having the core/shell structure according to the present invention, is at most 5 nm, effects of incorporated dyes into polymers decrease due to a marked increase in the surface area per unit volume. On the other hand, aqueous dispersion comprised of particles, having a size of at least 500 nm, results in degradation of its standing stability. As a result, in the embodiments of the present invention, the volume average particle diameter is preferably from 5 to 500 nm, and is more preferably from 20 to 200 nm.

In order to reach the desired particle diameter, it is important to optimize compositions as well as to select a suitable emulsification method. The preferred composition differs depending on the used dyes and polymers. Since an aqueous dispersion is employed, it is necessary that polymers which form shells are more hydrophilic than polymers which form cores. Further, it is preferable that the amount of dyes incorporated in polymers, which form shells, is less than that of dyes incorporated in polymers which form cores, as described above. In addition, it is necessary that dyes are less hydrophilic than the polymers which form shells. It is possible to estimate hydrophilicity as well as hydrophobicity utilizing, for example, solubility parameters (SP). Utilized as a reference of solubility parameters, those values, measurement methods, and calculation methods, are descriptions starting on page 675 of "POLYMER HANDBOOK", Fourth Edition (John Wiley & Sons, Inc.).

Further, from the viewpoint of ink filming properties after printing, durability of formed images and dispersion forming properties, the number average molecular weight of polymers employed in polymer particles having a core/shell structure according to the present invention is preferably from 500 to 100,000, and is more preferably from 1,000 to 30,000. It is possible to use polymers having various glass transition temperatures (Tg), but it is preferable that the Tg of at least one of the employed polymers is at least 10 °C.

Ink jet ink of the present invention will now be detailed.

The ink jet ink of the present invention is comprised of a colored fine particle dispersion. If desired, other components may be selected and incorporated in the aforesaid ink. Examples of other components include addenda known in the art such as humectants, penetration enhancing agents, UV absorbers, antioxidants, fungicides, pH regulators, surface tension regulators, antifoaming agents, viscosity regulating agents, dispersing agents, dispersion stabilizers, rust inhibiting agents, and chelating agents.

Humectants are suitably employed to minimize clogging due to ink drying at the ink ejection opening of ink nozzles employed in the ink jet recording method. Preferably employed as humectants are water-compatible organic solvents having a vapor pressure lower than water. Listed as specific example of the aforesaid humectants are polyhydric alcohols represented by ethylene glycol, propylene glycol, diethylene glycol, polyethylene glycol, thiodiglycol, dithioglycol, 2-methyl-1,3-propanediol, 1,2,3-hexatriol, acetylene glycol derivatives, glycerin, and trimethylolpropane; lower alkyl ether of polyhydric alcohols such as ethylene glycol monomethyl (or ethyl) ether and triethylene glycol monoethyl (or butyl) ether; heterocycles such as 2-pyrrolidone, N-methyl-2-pyrrolidone, 1,3-dimethyl-2-imidazolidinone, and N-ethylmorpholine; sulfur containing compounds such as sulfolane, dimethylsulfoxide, and 3-sulforene; polyfunctional compounds such as diacetone alcohol and diethanolamine; and urea derivatives. Of these, more preferred are polyhydric alcohols such as glycerin and diethylene glycol. These may be employed individually or in combination of at least two types. These humectants are preferably incorporated in ink in an amount of 10 to 50 parts by weight.

Examples of the aforesaid penetration enhancing agents include alcohols such as ethanol, i-propanol, butanol, diethylene glycol monobutyl ether, triethylene glycol monobutyl ether, and 1,2-hexanediol, sodium laurylsulfate, sodium oleate, as well as nonionic surfactants as emulsification dispersion surfactants. When these compounds are added to ink jet ink in an amount of 10 to 30 percent by weight, sufficient desired effects are exhibited. The addition is carried out in a range in which neither bleeding of printed text nor print-through occurs.

The aforesaid UV absorbers are employed to enhance the storage stability of images and include, for example, benzotriazole based compounds described in Japanese Patent Application Open to Public Inspection Nos. 58-185677, 61-190537, 2-782, 5-197075, and 9-34087; benzophenone based compounds described in Japanese Patent Application Open to Public Inspection Nos. 46-2784 and 5-194483, and U.S. Patent No. 3,214,463; cinnamic acid based compounds described in Japanese Patent Publication Nos. 48-30492 and 56-21141, and Japanese Patent Application Open to Public Inspection No. 10-88106; triazine based compounds described in Japanese Patent Application Open to Public Inspection No. 4-298503, 8-53427, 8-239368, and 10-182621, and Japanese Patent No. 8-501291; compounds described in Research Disclosure (hereinafter referred to as RD) Item 24239; and compounds or so-called optical brightening agents represented by stilbene based and benzoxazole based compounds which absorb ultraviolet radiation and fluoresce.

The aforesaid antioxidants are employed to enhance the storage stability of images. Suitably listed are, for

example, various organic based and metal complex based anti-discoloring agents. Examples of organic based anti-discoloring agents include hydroquinones, alkoxyphenols, dialkoxyphenols, phenols, anilines, amines, indans, chromans, alkoxyanilines, and heterocycles. Listed as metal complex based anti-discoloring agents are nickel complexes and zinc complexes. Suitably listed as compounds described in patents cited in RD Items 17643 Section VII I to J, Item 15162, the left column on page 650 of Item 18716, on page 527 of Item 36544, on page 872 of Item 307105, and Item 15162, and compounds represented by the general formula of represented compounds and compounds included in exemplified compounds described on pages 127 through 137 of Japanese Patent Application Open to Public Inspection No. 62-215273.

Listed as aforesaid fungicides are, for example, sodium dehydroacetate, sodium benzoate, sodium pyridinethion-1-oxide, ethyl p-hydroxybenzoate, and 1,2-benzoisothiazoline-3-one and salts thereof. These are employed in ink preferably in an amount ranging from 0.02 to 1.00 percent by weight.

Listed as aforesaid pH regulators are, for example, hydroxides of alkaline metals such as lithium hydroxide and potassium hydroxide, carbonates such as sodium carbonate and sodium hydrogencarbonate, inorganic bases such as potassium acetate, sodium silicate, and disodium phosphate, and organic bases such as N-methyldiethanolamine and triethanolamine.

Listed as aforesaid surface tension regulators are, for example, nonionic, cationic, and anionic surfactants. For example, it is possible to use surfactants which are employed for aforesaid emulsification dispersion. However, solubility of surfactants, which are employed herein, is preferably at least 0.5 percent.

Suitably listed as aforesaid dispersing agents as well as dispersion stabilizers are various types of cation, anion, and nonion based surfactants. Listed as aforesaid antifoaming agents are fluorine and silicon based compounds and chelating agents represented by EDTA (ethylenediaminetetraacetic acid).

From the viewpoint of enhancement of storage stability, the pH of ink jet inks is preferably from 6 to 10, and is more preferably from 7 to 10. Further, the surface tension of ink jet inks is preferably from 20 to 60 mN/m, and is more preferably from 25 to 45 mN/m. The viscosity of ink jet inks is preferably at most 30 mPa·s, and is more preferably at most 20 mPa·s.

Polymer particles having a core/shell structure, in which a polymer particle comprised of dyes and polymers according to the present invention is used as a core around which a shell is formed, is incorporated in the ink jet ink in the present invention to result preferably in 0.5 to 50 percent by weight in terms of total solids, and more preferably in 0.5 to 30 percent by weight. When the amount of the total solids is less than 0.5 percent by weight, these dyes are not sufficiently protected. On the other hand, when it exceeds 50 percent by weight, storage stability of ink in the form of a dispersion may be degraded and clogging of the printing head occasionally occurs due to an increase in viscosity of the ink resulting evaporation of solvents and aggregation of dispersed materials at the leading edge of nozzles. As a result, it is preferable to maintain the total solids in the aforesaid range.

The production method of the ink jet ink of the present invention will now be detailed.

In the production method of the ink of the present invention, one of the preferred embodiments is that low-boiling point organic solvents are used together with other materials. Low-boiling point organic solvents, as described in the present invention, refer to organic solvents having a boiling point of less than 150 °C (commonly at least about 30 °C) at normal pressure, and include, for example, ketone based solvents such as acetone, methyl ethyl ketone, diethyl ketone, and cyclohexanone; alcohol based solvents such as methanol, ethanol, 2-propanol, 1-propanol, 1-butanol, and t-butanol; chlorine based solvents such as chloroform and methylene chloride; aromatic solvents such benzene and toluene; ester based solvents such as ethyl acetate, butyl acetate, and isopropyl acetate; ether based solvents such as diethyl ether, tetrahydrofuran, and dioxane; as well as glycol based solvents such as ethylene glycol monomethyl ether and ethylene glycol dimethyl ether. Of these, preferred are ester based solvents such as ethyl acetate, butyl acetate, and i-propyl acetate. The aforesaid low-boiling point organic solvents may be employed individually or in combination of at least two types, and may be compatible with water.

The inventors of the present invention discovered that by employing low-boiling point organic solvents, it was possible to enhance the compatibility between the dyes and the polymers according to the present invention, as well as the standing stability of the ink jet ink of the present invention, resulting in preferred tone and high fastness of color images after printing.

The amount of aforesaid low-boiling point organic solvents used is not particularly limited as long as the amount is in a range in which the effects of the present invention are not adversely affected. The used amount is preferably from 10 to 2,000 parts by weight with respect to 100 parts by weight of the polymers, and is more preferably from 100 to 1,000 parts by weight. When the amount of low-boiling point organic solvents used is less than 10 parts by weight, stable production of ink jet inks tends to become difficult. On the other hand, when it exceeds 2,000 parts by weight, a solvent removal process to remove the low-boiling point organic solvents and a concentration process are not avoided, resulting in more complex processing. As a result, more limits tend to be applied to the designs of ink formulation.

In the production method of ink of the present invention, one of the preferred embodiments is that an oil phase

prepared by dissolving polymers and dyes in low-boiling point solvents is subjected to emulsification dispersion in a aqueous medium, and thereafter is subjected to a low-boiling point organic solvent removal process. A preferred emulsification dispersion process is one in which low-boiling point organic solvents are emulsified to form fine particles, employing a process in which water is added to low-boiling point organic solvents comprising polymers as well as dyes, or low-boiling point organic solvents are added to water.

When the solubility of aforesaid low-boiling point organic solvents in water is at most 10 percent or when the vapor pressure of the same is greater than that of water, from the viewpoint of stability of ink of the present invention, removal of such solvents is one of the preferred embodiments. Removal of low-boiling point organic solvents may be carried out from 10 to 100 °C under normal pressure or reduced pressure. The aforesaid removal may preferably be carried out from 40 to 100 °C under normal pressure, and from 10 to 50 °C under reduced pressure.

It is also possible to use the ink jet ink of the present as ink for other writing means such as common fountain pens, ball-point pens, and felt pens. By drying the ink of the present invention, it is possible to prepare powders comprised of minute particles. The resulting powders are available for toners employed for electrophotography.

## EXAMPLES

The present invention will now be specifically described with reference to examples. However, the present invention is not limited to embodiments in these examples.

Example 1

Preparation of Colored Fine Particle Dispersion A-1

Charged into a separable flask were 5 g of polyvinyl butyral (BL-S having an average degree of polymerization of 350, produced by Sekisui Kagaku Co., Ltd.) as an oil-soluble polymer, 5 g of the dye (Dye D-4) of the present invention, and 50 g of ethyl acetate. After replacing air in the flask with $N_2$, while stirring, the aforesaid polymer and dye were completely dissolved. Subsequently 100 g of an aqueous solution containing 3 g of sodium laurylsulfate was added by dripping while stirring, and the resulting mixture was emulsified for 300 seconds, employing an ultrasonic homogenizer (UH-150 Type, produced by SMT Co., Ltd.). Thereafter, ethyl acetate was removed under reduced pressure, whereby Colored Fine Particle Dispersion A-1 was prepared.

Preparation of Colored Fine Particle Dispersion A-2

Charged into a separable flask were a mixture consisting of 4 g of a PMMA resin (Delpet 560F, produced by Asahi Kasei Corporation) and 6 g of BL-S as oil-soluble polymers, 5 g of the dye (Dye D-8) of the present invention, 40 g of ethyl acetate, and 10 g of isopropyl alcohol. After replacing air in the flask with $N_2$, the aforesaid polymers and dye were completely dissolved while stirring. Subsequently 100 g of an aqueous solution containing 3 g of sodium laurylsulfate was added by dripping while stirring and the resulting mixture was emulsified over 20 minutes employing a high speed stirring type homogenizer TK Robomix AG-03 Type (produced by Tokushu Kika Kogyo Co.), while rotating the stirring section having a stator and a turbine at 15,000 rpm. Thereafter, ethyl acetate and isopropyl alcohol were removed under reduced pressure, whereby Colored Fine Particle Dispersion A-2 was prepared.

Preparation of Colored Fine Particle Dispersions A-3 to A-47, A-56 to A-66 and B-1 to B-5

Colored Fine Particle Dispersions A-3 to A-47, A-56 to A-66 and B-1 to B-5 were prepared in the same manner as aforesaid Colored Fine Particle Dispersions A-1, except that types of oil-soluble polymers, the types of dyes, and the ratio thereof were varied as described in Table 1.

Preparation of Colored Fine Particle Dispersions A-48 to A-55

Colored Fine Particle Dispersions A-48 to A-55 were prepared in the same manner as aforesaid Colored Fine Particle Dispersion A-2, except that the types of oil-soluble polymers, the types of dyes, and the ratio thereof were varied as described in Table 1.

Each of the colored fine particle dispersion prepared as above is detailed in Tables 7 and 8.

Particle diameters, described in Tables 7 and 8, refer to the volume average particle diameter determined by employing a laser particle diameter analysis system, produced by Otsuka Denshi Co.

Table 7

| Dispersion | Oil-Soluble Polymer (1) | Dye (2) | (1) : (2) | Particle Diameter (nm) | Remarks |
|---|---|---|---|---|---|
| A-1 | BL-S | D-4 | 5:5 | 89 | Inv. |
| A-2 | PMMA | D-8 | 10:5 | 91 | Inv. |
| A-3 | S-3000 | D-12 | 2.5:5 | 101 | Inv. |
| A-4 | PA-26 | D-15 | 5:5 | 92 | Inv. |
| A-5 | BL-S | D-17 | 5:5 | 110 | Inv. |
| A-6 | KS-3 | D-21 | 5:5 | 102 | Inv. |
| A-7 | BX-10 | D-26 | 5:5 | 117 | Inv. |
| A-8 | BL-S | D-34 | 5:5 | 81 | Inv. |
| A-9 | BL-1 | D-39 | 5:5 | 72 | Inv. |
| A-10 | PMMA+BL-S | D-45 | 5:5 | 101 | Inv. |
| A-11 | PC-2 | D-50 | 5:5 | 71 | Inv. |
| A-12 | PA-18 | D-56 | 5:5 | 82 | Inv. |
| A-13 | #6000-EP | D-61 | 5 : 5 | 101 | Inv. |
| A-14 | PA-13 | D-67 | 5:5 | 82 | Inv. |
| A-15 | BM-1 | D-74 | 5:5 | 80 | Inv. |
| A-16 | PC-15 | D-83 | 5:5 | 111 | Inv. |
| A-17 | BX-L | D-94 | 5:5 | 113 | Inv. |
| A-18 | BL-S | D-95 | 5:5 | 118 | Inv. |
| A-19 | PA-39 | D-105 | 10:5 | 93 | Inv. |
| A-20 | PA-24 | D-118 | 10:5 | 88 | Inv. |
| A-21 | BL-S | D-119 | 10:5 | 96 | Inv. |
| A-22 | PA-11 | D-125 | 10:5 | 91 | Inv. |
| A-23 | BX-1 | D-140 | 10:5 | 102 | Inv. |
| A-24 | KS-10 | D-148 | 2.5:5 | 98 | Inv. |
| A-25 | BL-S | D-154 | 2.5:5 | 89 | Inv. |
| A-26 | BL-S | D-170 | 2.5:5 | 85 | Inv. |
| A-27 | PA-24 | D-184 | 2.5:5 | 91 | Inv. |
| A-28 | S-3000 | D-192 | 5:5 | 93 | Inv. |
| A-29 | BL-S | D-195 | 5:5 | 79 | Inv. |
| A-30 | PA-18 | D-200 | 10:5 | 82 | Inv. |
| A-31 | PA-24 | D-206 | 8:5 | 67 | Inv. |
| A-32 | BX-1 | D-208 | 5:5 | 69 | Inv. |
| A-33 | BL-S | D-210 | 10:8 | 82 | Inv. |
| A-34 | BL-S | D-211 | 7:5 | 74 | Inv. |
| A-35 | BL-S | D-213 | 7:5 | 89 | Inv. |

Inv.; Present Invention

Table 8

| Dispersion | Soluble Polymer (1) | Dye (2) | (1) : (2) | Particle Diameter (nm) | Remarks |
|---|---|---|---|---|---|
| A-36 | BX-L | D-216 | 5:5 | 72 | Inv. |
| A-37 | BL-S | D-219 | 10:5 | 70 | Inv. |
| A-38 | KS-3 | D-223 | 5:5 | 91 | Inv. |
| A-39 | #6000-EP | D-228 | 10:5 | 92 | Inv. |
| A-40 | BL-S | D-231 | 8:5 | 73 | Inv. |
| A-41 | PA-11 | D-237 | 5:5 | 68 | Inv. |
| A-42 | PC-8 | D-240 | 10:5 | 92 | Inv. |
| A-43 | PA-26 | D-243 | 5:5 | 89 | Inv. |
| A-44 | PC-2 | D-247 | 8:10 | 86 | Inv. |
| A-45 | BL-S | D-253 | 12:10 | 82 | Inv. |
| A-46 | BX-1 | D-257 | 5:5 | 90 | Inv. |
| A-47 | S-3000 | D-260 | 5:3 | 76 | Inv. |
| A-48 | PMMA | D-30 | 6:4 | 72 | Inv. |
| A-49 | BL-S | D-70 | 10:5 | 79 | Inv. |
| A-50 | BX-1 | D-87 | 5:5 | 82 | Inv. |
| A-51 | PA-26 | D-111 | 5:5 | 84 | Inv. |
| A-52 | KS-3 | D-129 | 5:5 | 91 | Inv. |
| A-53 | BL-S | D-176 | 7:5 | 70 | Inv. |
| A-54 | S-3000 | D-202 | 8:6 | 82 | Inv. |
| A-55 | BM-1 | D-246 | 10:5 | 80 | Inv. |
| A-56 | PA-44 | D-261 | 10:10 | 72 | Inv. |
| A-57 | PC-3 | D-262 | 10:15 | 65 | Inv. |
| A-58 | PA-42 | D-264 | 10:10 | 55 | Inv. |
| A-59 | S-3000 | D-266 | 15:10 | 69 | Inv. |
| A-60 | PA-42 | D-268 | 12:10 | 76 | Inv. |
| A-61 | PA-12 | D-269 | 10:8 | 59 | Inv. |
| A-62 | PC-16 | D-270 | 12:8 | 80 | Inv. |
| A-63 | PC-43 | D-271 | 10:10 | 62 | Inv. |
| A-64 | BL-S | D-272 | 10:6 | 70 | Inv. |
| A-65 | PA-44 | D-273 | 10:10 | 68 | Inv. |
| A-66 | PA-44 | D-275 | 10:10 | 62 | Inv. |
| B-1 | PA-8 | Solvent Yellow 145 | 5:5 | 411 | Comp. |
| B-2 | BX-1 | Solvent Red 49 | 10:5 | 425 | Comp. |
| B-3 | PC-8 | Blue 35 | 2.5:5 | 563 | Comp. |
| B-4 | BL-S | Comparative Dye A | 5:5 | 89 | Comp. |

Table 8 (continued)

| Dispersion | Soluble Polymer (1) | Dye (2) | (1) : (2) | Particle Diameter (nm) | Remarks |
|---|---|---|---|---|---|
| B-5 | BX-1 | Comparative Dye B | 10:5 | 89 | Comp. |
| Inv.; Present Invention | Comp.; Comparative Example | | | | |

Comparative Dye A

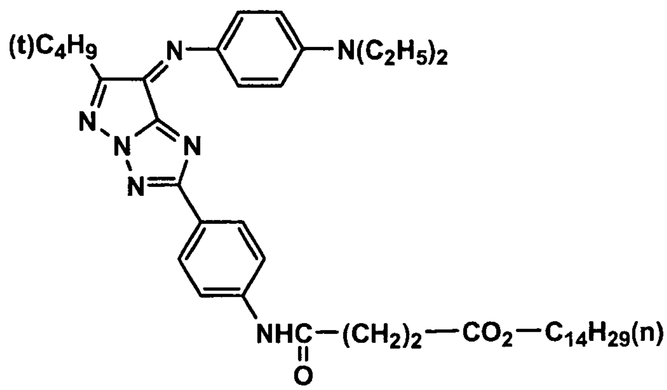

Comparative Dye B

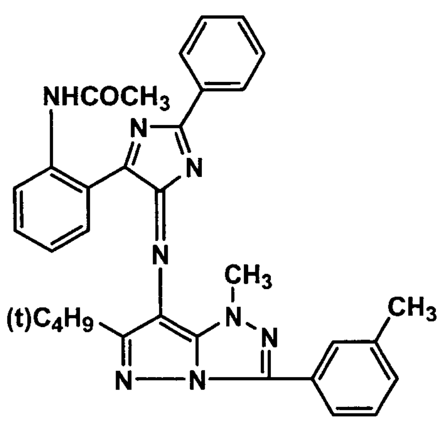

Evaluation of Colored Fine Particle Dispersions

The dispersion stability of each of the colored fine particle dispersions prepared as above was evaluated employing the method described below.

Dispersion Stability

Prior to and after storing each of the colored fine particle dispersion at 60 °C for 7 days, the average particle diameter was measured employing a laser particle diameter analysis system, produced by Otsuka Denshi Co. Subsequently the dispersion stability was evaluated based on the criteria described below. Tables 9 and 10 show the results. When ranked as A or B, dispersion stability was judged to be commercially viable.

A: The variation ratio of the particle diameter prior to and after the storage was less than 5 percent
B: The variation ratio of the particle diameter prior to and after the storage was between 5 and 10 percent
C: The variation ratio of the particle diameter prior to and after the storage was between 10 and 20 percent
D: The variation ratio of the particle diameter prior to and after the storage was at least 20 percent

Preparation of Ink Jet Ink Comprising Colored Composition

Inks A-1 through A-65 of the present invention, as well as Comparative Inks B-1 through B-6, which were constituted as described in Tables 9 and 10, were prepared as described below.

A portion of each colored fine particle dispersion, prepared and shown in Tables 7 and 8, was sampled. In this portion was included an amount of the dye being 2 percent by weight of the final object ink. Subsequently added were ethylene glycol resulting in an amount of 15 percent by weight, glycerin resulting in an amount of 15 percent by weight, Surfinol 465 (produced by Nisshin Kagaku Kogyo Co.) resulting in an amount of 0.3 percent by weight and water in an amount to make the total 100 percent by weight. The resulting mixture was filtered employing a membrane filter to remove dust and coarse particles to yield the final ink.

Image Printing and Evaluation

Each ink prepared as above was loaded in a commercially available ink jet printer (PM800), produced by Epson Corp., and printing was carried out employing Konica Photo Jet Paper Photolike QP Glossy Paper (produced by Konica Corp.). Light fastness as well as tone of the resulting images was evaluated employing the method described below. In addition, ejection stability was evaluated employing the method described below.

(Evaluation of Light fastness)

The resulting samples were subjected to continuous light irradiation over 120 hours employing a xenon fade meter and the light fastness was evaluated based on the remaining dye ratio of each image. The remaining dye ratio was represented by the following formula:

$$\text{Remaining dye ratio (percent)} = D/D_0 \times 100$$

wherein $D_0$ is the density prior to light irradiation and D is the density after light irradiation.

A four-rank evaluation was carried out based on the criteria below. When ranked in A or B, the light fastness was judged to result in no practical problems.

A: The light fastness was at least 90 percent
B: The light fastness was between 80 and 90 percent
C: The light fastness was between 70 and 80
D: The light fastness was less than 70 percent

(Evaluation of Color Tone)

Each of the coating samples was visually evaluated by 10 monitors based on the four-rank criteria, and the resultant points were averaged. Point 2.3 or higher was judged to result in no practical problems.

Point 3: Sensed as a dense and bright color
Point 2: Sensed as a bright color
Point 1: Sensed as a not so bright color
Point 0: Sensed as a dirty color

(Ejection Stability)

Ink was continually ejected employing the aforesaid printer and ejection stability was evaluated based on the criteria described below. Rank A and B were judged to result in no practical problems.

A: During continuous ejection of at least 20 minutes, no nozzle clogging occurred
B: During continuous ejection between 10 and 20 minutes, no nozzle clogging occurred

C: During continuous ejection of less than 10 minutes, nozzle clogging occurred

Tables 9 and 10 shows the evaluation results.

Table 9

| Ink | Dispersion/Dye | Dispersion Stability | Light fastness | Tone | Ejection Stability | Remarks |
|---|---|---|---|---|---|---|
| A-1 | A-1 | A | A | 2.4 | A | Inv. |
| A-2 | A-2 | A | B | 2.4 | A | Inv. |
| A-3 | A-3 | B | A | 2.4 | A | Inv. |
| A-4 | A-4 | A | A | 2.5 | B | Inv. |
| A-5 | A-5 | A | A | 2.4 | A | Inv. |
| A-6 | A-6 | A | B | 2.3 | A | Inv. |
| A-7 | A-7 | B | A | 2.4 | A | Inv. |
| A-8 | A-8 | B | B | 2.4 | B | Inv. |
| A-9 | A-9 | A | B | 2.4 | B | Inv. |
| A-10 | A-10 | A | A | 2.5 | A | Inv. |
| A-11 | A-11 | A | A | 2.4 | A | Inv. |
| A-12 | A-12 | B | A | 2.5 | A | Inv. |
| A-13 | A-13 | A | B | 2.4 | B | Inv. |
| A-14 | A-14 | A | A | 2.5 | A | Inv. |
| A-15 | A-15 | A | B | 2.5 | A | Inv. |
| A-16 | A-16 | B | B | 2.5 | A | Inv. |
| A-17 | A-17 | B | A | 2.5 | B | Inv. |
| A-18 | A-18 | A | A | 2.7 | B | Inv. |
| A-19 | A-19 | A | A | 2.4 | A | Inv. |
| A-20 | A-20 | A | B | 2.6 | A | Inv. |
| A-21 | A-21 | B | A | 2.4 | A | Inv. |
| A-22 | A-22 | A | B | 2.7 | B | Inv. |
| A-23 | A-23 | A | B | 2.4 | A | Inv. |
| A-24 | A-24 | A | A | 2.5 | A | Inv. |
| A-25 | A-25 | A | A | 2.6 | A | Inv. |
| A-26 | A-26 | B | A | 2.4 | A | Inv. |
| A-27 | A-27 | A | A | 2.4 | B | Inv. |
| A-28 | A-28 | B | A | 2.8 | A | Inv. |
| A-29 | A-29 | A | A | 2.8 | A | Inv. |
| A-30 | A-30 | A | A | 2.6 | A | Inv. |
| A-31 | A-31 | A | A | 2.5 | A | Inv. |
| A-32 | A-32 | A | A | 2.7 | A | Inv. |
| A-33 | A-33 | A | A | 2.7 | A | Inv. |
| A-34 | A-34 | A | A | 2.8 | A | Inv. |
| A-35 | A-35 | A | A | 2.8 | A | Inv. |

Table 9 (continued)

| Ink | Dispersion/Dye | Dispersion Stability | Light fastness | Tone | Ejection Stability | Remarks |
|---|---|---|---|---|---|---|
| A-36 | A-36 | A | A | 2.6 | B | Inv. |
| A-37 | A-37 | A | A | 2.6 | A | Inv. |
| A-38 | A-38 | B | A | 2.4 | B | Inv. |
| A-39 | A-39 | A | A | 2.6 | B | Inv. |
| Inv.; Present Invention | | | | | | |

Table 10

| Ink | Dispersion/Dye | Dispersion Stability | Light fastness | Tone | Ejection Stability | Remarks |
|---|---|---|---|---|---|---|
| A-33 | A-33 | A | A | 2.7 | A | Inv. |
| A-34 | A-34 | A | A | 2.8 | A | Inv. |
| A-35 | A-35 | A | A | 2.8 | A | Inv. |
| A-36 | A-36 | A | A | 2.6 | B | Inv. |
| A-37 | A-37 | A | A | 2.6 | A | Inv. |
| A-38 | A-38 | B | A | 2.4 | B | Inv. |
| A-39 | A-39 | A | A | 2.6 | B | Inv. |
| A-40 | A-40 | A | A | 2.8 | A | Inv. |
| A-41 | A-41 | A | A | 2.7 | A | Inv. |
| A-42 | A-42 | A | A | 2.6 | A | Inv. |
| A-43 | A-43 | A | A | 2.4 | B | Inv. |
| A-44 | A-44 | B | A | 2.6 | A | Inv. |
| A-45 | A-45 | A | A | 2.7 | A | Inv. |
| A-46 | A-46 | A | A | 2.6 | A | Inv. |
| A-47 | A-47 | A | A | 2.4 | B | Inv. |
| A-48 | A-48 | A | A | 2.5 | A | Inv. |
| A-49 | A-49 | A | A | 2.8 | A | Inv. |
| A-50 | A-50 | A | A | 2.7 | A | Inv. |
| A-51 | A-51 | A | A | 2.6 | A | Inv. |
| A-52 | A-52 | A | A | 2.7 | A | Inv. |
| A-53 | A-53 | A | A | 2.5 | A | Inv. |
| A-54 | A-54 | A | A | 2.6 | A | Inv. |
| A-55 | A-55 | A | A | 2.7 | B | Inv. |
| A-56 | A-56 | A | A | 2.6 | B | Inv. |
| A-57 | A-57 | A | A | 2.6 | A | Inv. |
| A-58 | A-58 | A | A | 2.7 | A | Inv. |
| A-59 | A-59 | A | A | 2.6 | B | Inv. |
| A-60 | A-60 | A | A | 2.8 | A | Inv. |
| A-61 | A-61 | B | A | 2.7 | B | Inv. |
| A-62 | A-62 | A | B | 2.8 | A | Inv. |

Table 10 (continued)

| Ink | Dispersion/Dye | Dispersion Stability | Light fastness | Tone | Ejection Stability | Remarks |
|---|---|---|---|---|---|---|
| A-63 | A-63 | A | A | 2.8 | A | Inv. |
| A-64 | A-64 | B | A | 2.7 | A | Inv. |
| A-65 | A-65 | A | A | 2.8 | A | Inv. |
| A-66 | A-66 | A | A | 2.8 | A | Inv. |
| B-1 | B-1 | C | B | 1.5 | D | Comp. |
| B-2 | B-2 | B | D | 1.2 | B | Comp. |
| B-3 | B-3 | D | B | 1.6 | D | Comp. |
| B-4 | B-4 | A | C | 2.6 | A | Comp. |
| B-5 | B-5 | A | C | 2.7 | A | Comp. |
| B-6 | Comp. Dye C | - | D | 2.5 | A | Comp. |
| Inv.; Present Invention Comp.; Comparative Example | | | | | | |

Comparative Dye C

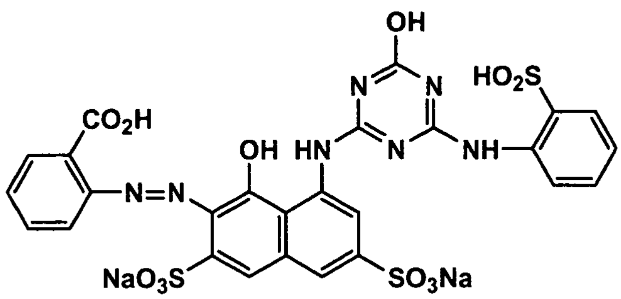

As can clearly be seen from Tables 9 and 10, the colored fine particle dispersions prepared by employing dyes according to the present invention, as well as inks prepared by employing colored fine particle dispersions of the present invention, exhibited excellent dispersion stability as well as excellent ejection stability, and images formed employing the aforesaid inks exhibited excellent light fastness and bright tone compared to the comparative examples.

Example 2

Preparation of Colored Fine Particle Dispersion A-59

Charged into a separable flask were 15 g of polyvinyl butyral (BL-S, produced by Sekisui Kagaku Co., Ltd.) as an oil-soluble polymer, 15 g of the dye (Dye D-1) of the present invention, and 150 g of ethyl acetate. After replacing air in the flask with $N_2$, while stirring, the aforesaid polymer and dye were completely dissolved. Subsequently 200 g of an aqueous solution containing 6 g of sodium laurylsulfate was added by dripping while stirring and the resulting mixture was emulsified for 300 seconds, employing an ultrasonic homogenizer (Type UH-150, produced by SMT Co., Ltd.). Thereafter, ethyl acetate was removed under reduced pressure, whereby a colored fine particle dispersion was prepared in which the aforesaid dye was impregnated. Added to the resulting dispersion was 0.45 g of potassium persulfate and dissolved. The resulting mixture was heated to 70 °C, while fitted with a heater, and underwent reaction for 7 hours while dripping a mixed solution consisting of 6 g of styrene and 3 g of 2-hydroxyethyl methacrylate, whereby a core/shell type Colored Fine Particle Dispersion A-59 was prepared. The diameter of colored fine particles in the resulting colored fine particle dispersion was determined employing a laser particle size analysis system, produced by Otsuka Denshi Co., resulting in a volume average particle diameter of 92 nm.

Preparation of Colored Fine Particle Dispersion A-60

Charged into a separable flask were a mixture of 3 g of a PMMA resin (Delpet 560 F, produced by Asahi Kasei Corporation) and 7 g of a polycarbonate resin (Iupiron S-3000, produced by Mitsubishi Engineering Plastic Co.) as oil-soluble polymers, 10 g of the dye (Dye D-2) of the present invention, and 150 g of ethyl acetate. After replacing air in the flask with $N_2$, while stirring, the aforesaid polymer and dye were completely dissolved. Subsequently 270 g of an aqueous solution containing 6 g of sodium laurylsulfate was added by dripping while stirring and the resulting mixture was emulsified for 300 seconds, employing an ultrasonic homogenizer (Type UH-150, produced by SMT Co., Ltd.). Thereafter, ethyl acetate was removed under reduced pressure, whereby a colored fine particle dispersion was prepared in which the aforesaid dye was impregnated. Added to the resulting dispersion was 0.45 g of potassium persulfate and dissolved. The resulting mixture was heated to 70 °C, while fitted with a heater, and underwent reaction for 7 hours while dripping a mixed solution consisting of 6 g of styrene and 1.5 g of polyethylene glycol methacrylate (having a number of average addition units of 4, whereby a core/shell type colored fine particle dispersion (A-60) was prepared, resulting in the volume average particle diameter of 89 nm.

Preparation of Colored Fine Particle Dispersion A-61

Charged into a separable flask were 8 g of polyurethane (CA118, produced by Morton Chemical Co.) and 2 g of polyvinyl butyral (BL-S, having an average degree of polymerization of 350, produced by Sekisui Kagaku Kogyo Co., Ltd.) as oil-soluble polymers, 7 g of the dye (Dye D-9) of the present invention, and 150 g of ethyl acetate. After replacing air in the flask with $N_2$, while stirring, the aforesaid polymer and dye were completely dissolved. Subsequently 200 g of an aqueous solution containing 6 g of sodium laurylsulfate was added by dripping and the resulting mixture was emulsified for 300 seconds, employing an ultrasonic homogenizer (Type UH-150, produced by SMT Co., Ltd.). Thereafter, ethyl acetate was removed under reduced pressure, whereby a colored fine particle dispersion was prepared in which the aforesaid dye was impregnated. Added to the resulting dispersion was 0.45 g of potassium persulfate and dissolved. The resulting mixture was heated to 70 °C, while fitted with a heater, and underwent reaction for 7 hours while dripping a mixed solution consisting of 3 g of styrene, 1 g of n-butyl methacrylate, 0.5 g of acrylic acid, and 0.5 g of 2-hydroxyethyl methacrylate, whereby a core/shell type colored fine particle dispersion (A-61) was prepared, resulting in the volume average particle diameter of 83 nm.

Compounds employed to form shells are represented as follows:

P: styrene/2-hydroxyethyl methacrylate
Q: styrenes/polyethylene glycol methacrylate
R: styrene/n-butyl methacrylate/acrylic acid/2-hydroxyethyl methacrylate

Tables 11 and 12 show the compositions of colored fine particle dispersions prepared in the same manner.

Table 11

| Dispersion | Dye (1) | Oil-Soluble Polymer (2) | Shell (3) | Composition Ratio (1) : (2) : (3) | Particle Diameter (nm) | Remarks |
|---|---|---|---|---|---|---|
| A-59 | D-1 | BL-S | P | 15:15:9 | 92 | Inv. |
| A-60 | D-2 | PMMA/S-3000 | Q | 10:10:7.5 | 89 | Inv. |
| A-61 | D-9 | CA118/BL-S | R | 7:10:5 | 83 | Inv. |
| A-62 | D-13 | BX-1 | P | 15:10:5 | 102 | Inv. |
| A-63 | D-17 | PA-13 | P | 10:10:10 | 105 | Inv. |
| A-64 | D-19 | PC-9 | Q | 12:10:3 | 92 | Inv. |
| A-65 | D-28 | BX-1 | P | 12:10:5 | 80 | Inv. |
| A-66 | D-36 | BL-10 | P | 15:15:5 | 94 | Inv. |
| A-67 | D-42 | #2000-L | R | 12:10:6 | 99 | Inv. |
| A-68 | D-49 | BL-S | P | 12:10:8 | 102 | Inv. |
| A-69 | D-57 | BL-1 | R | 12:12:2 | 103 | Inv. |
| A-70 | D-70 | BX-1 | P | 10:12:3 | 105 | Inv. |

Table 11 (continued)

| Dispersion | Dye (1) | Oil-Soluble Polymer (2) | Shell (3) | Composition Ratio (1) : (2) : (3) | Particle Diameter (nm) | Remarks |
|---|---|---|---|---|---|---|
| A-71 | D-80 | KS-10 | Q | 12:15:3 | 83 | Inv. |
| A-72 | D-94 | S-2000 | Q | 15:10:5 | 95 | Inv. |
| A-73 | D-118 | PA-26 | P | 12:10:2 | 108 | Inv. |
| A-74 | D-119 | BL-S | Q | 10:10:7 | 112 | Inv. |
| A-75 | D-133 | PA-11 | R | 12:10:8 | 120 | Inv. |
| A-76 | D-144 | BL-S | Q | 10:12:5 | 98 | Inv. |
| A-77 | D-153 | PMMA/S-3000 | P | 10:10:7 | 79 | Inv. |
| A-78 | D-164 | PA-9 | P | 8:8:5 | 99 | Inv. |
| A-79 | D-176 | PA-11 | R | 15:10:4 | 102 | Inv. |
| A-80 | D-179 | PC-15 | P | 10:10:5 | 107 | Inv. |
| A-81 | D-188 | PA-11 | P | 10:10:2 | 89 | Inv. |
| A-82 | D-191 | PMMA/S-3000 | Q | 10:10:2 | 78 | Inv. |
| A-83 | D-195 | BL-S | R | 10:10:2 | 9093 | Inv. |
| A-84 | D-204 | PC-15 | P | 10:10:7 | 89 | Inv. |
| A-85 | D-208 | BL-S | P | 12:10:2 | 82 | Inv. |
| A-86 | D-210 | BX-1 | Q | 10:10:3 | 72 | Inv. |
| A-87 | D-211 | BL-10 | P | 8:10:2 | 80 | Inv. |
| A-88 | D-213 | BL-S | P | 12:10:2 | 98 | Inv. |
| A-89 | D-215 | #2000-L | R | 15:10:5 | 92 | Inv. |
| A-90 | D-219 | BL-S | P | 10:10:5 | 89 | Inv. |
| Inv.; Present Invention | | | | | | |

Table 12

| Dispersion | Dye (1) | Oil-Soluble Polymer (2) | Shell (3) | Composition Ratio (1) : (2) : (3) | Particle Diameter (nm) | Remarks |
|---|---|---|---|---|---|---|
| A-91 | D-226 | S-2000 | R | 10:10:5 | 84 | Inv. |
| A-92 | D-231 | KS-10 | P | 12:10:5 | 88 | Inv. |
| A-93 | D-237 | BL-S | Q | 10:10:7.5 | 93 | Inv. |
| A-94 | D-241 | PA-11 | Q | 7:10:5 | 90 | Inv. |
| A-95 | D-248 | PA-9 | P | 15:10:5 | 82 | Inv. |
| A-96 | D-255 | BL-S | P | 10:10:10 | 79 | Inv. |
| A-97 | D-259 | BX-1 | Q | 12:10:3 | 90 | Inv. |
| A-98 | D-261 | PA-44 | P | 10:10:2 | 90 | Inv. |
| A-99 | D-262 | PC-3 | Q | 10:12:5 | 83 | Inv. |
| A-100 | D-264 | PA-42 | R | 10:15:7 | 79 | Inv. |
| A-101 | D-266 | S-3000 | P | 15:15:3 | 93 | Inv. |
| A-102 | D-268 | PA-42 | P | 10:10:10 | 90 | Inv. |

Table 12 (continued)

| Dispersion | Dye (1) | Oil-Soluble Polymer (2) | Shell (3) | Composition Ratio (1) : (2) : (3) | Particle Diameter (nm) | Remarks |
|---|---|---|---|---|---|---|
| A-103 | D-269 | PA-12 | Q | 12:10:4 | 91 | Inv. |
| A-104 | D-270 | PC-16 | P | 12:10:6 | 93 | Inv. |
| A-105 | D-271 | PC-43 | P | 15:15:5 | 93 | Inv. |
| A-106 | D-272 | BL-S | R | 12:10:6 | 78 | Inv. |
| A-107 | D-273 | PA-44 | P | 12:10:6 | 70 | Inv. |
| A-108 | D-275 | PA-44 | R | 12:12:4 | 75 | Inv. |
| B-7 B-7 | Solvent Yellow 2 | PC-2 | P | 15:12:8 | 120 | Comp. |
| B-8 | Solvent Red 180 | PA-18 | Q | 12:10:7 | 429 | Comp. |
| B-9 | Basic 7 Blue | #6000-EP | R | 12:10:8 | 190 | Comp. |
| B-10 - | Comparative Dye A | BL-S | p | 15:10:2 | 85 | Comp. |
| B-11 | Comparative Dye B | BX-1 | Q | 12:10:8 | 91 | Comp. |
| Inv.; Present Invention<br>Comp.; Comparative Example | | | | | | |

Evaluation of Colored Fine Particle Dispersions

Dispersion stability of each of the colored fine particle dispersions prepared as above was evaluated employing the method described in Example 1. Tables 13 and 14 show the results.

Preparation of Ink Jet Ink A-59

Colored Fine Particle Dispersion A-59 prepared as above was sampled so that the dye containing amount in the ink was 2 percent by weight. Subsequently added were ethylene glycol in an amount resulting in 15 percent by weight, glycerin in an amount resulting in 15 percent by weight, Surfinol 465 (produced by Nisshin Kagaku Kogyo Co.) in an amount resulting in 0.3 percent by weight and water in an amount to make the total 100 percent by weight. The resulting mixture was filtered employing a membrane filter to remove dust and coarse particles, whereby Inks A-59 through A-97 of the present invention and comparative inks B-7 through B-11, as shown in Tables 13 and 14, were prepared.

Image Printing and Evaluation

Each of the inks prepared as above was loaded in a commercially available ink jet printer (PM800), produced by Epson Corp., and printing was carried out employing Konica Photo Jet Paper Photolike QP Glossy Paper (produced by Konica Corp.). Light fastness as well as color tone of the resulting images and the ejection stability were evaluated in the same manner as above. Tables 13 and 14 show the evaluation results.

Table 13

| Ink Ink | Dispersion | Dispersion Stability | Color Tone | Light fastness | Ejection Stability | Remarks |
|---|---|---|---|---|---|---|
| A-59 | A-59 | A | 2.5 | A | A | Inv. |
| A-60 | A-60 | A | 2.4 | B | A | Inv. |
| A-61 | A-61 | A | 2.4 | A | A | Inv. |
| A-62 | A-62 | B | 2.5 | A | B | Inv. |
| A-63 | A-63 | A | 2.6 | A | A | Inv. |

Table 13 (continued)

| Ink Ink | Dispersion | Dispersion Stability | Color Tone | Light fastness | Ejection Stability | Remarks |
|---|---|---|---|---|---|---|
| A-64 | A-64 | A | 2.5 | A | A | Inv. |
| A-65 | A-65 | B | 2.6 | A | A | Inv. |
| A-66 | A-66 | A | 2.3 | A | B | Inv. |
| A-67 | A-67 | A | 2.4 | A | B | Inv. |
| A-68 | A-68 | A | 2.4 | A | A | Inv. |
| A-69 | A-69 | A | 2.4 | A | A | Inv. |
| A-70 | A-70 | A | 2.4 | A | A | Inv. |
| A-71 | A-71 | A | 2.6 | A | A | Inv. |
| A-72 | A-72 | A | 2.5 | A | A | Inv. |
| A-73 | A-73 | A | 2.5 | A | A | Inv. |
| A-74 | A-74 | A | 2.4 | A | A | Inv. |
| A-75 | A-75 | A | 2.3 | A | A | Inv. |
| A-76 | A-76 | A | 2.6 | A | A | Inv. |
| A-77 | A-77 | A | 2.5 | A | A | Inv. |
| A-78 | A-78 | A | 2.6 | A | A | Inv. |
| A-79 | A-79 | A | 2.4 | A | A | Inv. |
| A-80 | A-80 | A | 2.6 | B | A | Inv. |
| A-81 | A-81 | A | 2.7 | A | A | Inv. |
| A-82 | A-82 | B | 2.6 | A | A | Inv. |
| A-83 | A-83 | A | 2.5 | A | A | Inv. |
| A-84 | A-84 | B | 2.6 | A | A | Inv. |
| A-85 | A-85 | A | 2.7 | A | A | Inv. |
| A-86 | A-86 | A | 2.8 | A | A | Inv. |
| A-87 | A-87 | A | 2.8 | A | A | Inv. |
| A-88 | A-88 | A | 2.7 | A | A | Inv. |
| A-89 | A-89 | A | 2.5 | B | A | Inv. |
| A-90 | A-90 | A | 2.7 | A | A | Inv. |
| A-91 | A-91 | B | 2.6 | A | A | Inv. |
| Inv.; Present Invention | | | | | | |

Table 14

| Ink | Dispersion | Dispersion Stability | Color Tone | Light fastness | Ejection Stability | Remarks |
|---|---|---|---|---|---|---|
| A-92 | A-92 | A | 2.7 | A | A | Inv. |
| A-93 | A-93 | A | 2.8 | A | B | Inv. |
| A-94 | A-94 | A | 2.5 | A | B | Inv. |
| A-95 | A-95 | A | 2.4 | A | A | Inv. |
| A-96 | A-96 | B | 2.6 | A | A | Inv. |
| A-97 | A-97 | A | 2.7 | B | A | Inv. |

Table 14 (continued)

| Ink | Dispersion | Dispersion Stability | Color Tone | Light fastness | Ejection Stability | Remarks |
|---|---|---|---|---|---|---|
| A-98 | A-98 | A | 2.6 | A | A | Inv. |
| A-99 | A-99 | A | 2.6 | A | A | Inv. |
| A-100 | A-100 | A | 2.7 | A | A | Inv. |
| A-101 | A-101 | A | 2.7 | A | A | Inv. |
| A-102 | A-102 | A | 2.8 | A | A | Inv. |
| A-103 | A-103 | A | 2.7 | A | A | Inv. |
| A-104 | A-104 | B | 2.8 | B | A | Inv. |
| A-105 | A-105 | A | 2.8 | A | A | Inv. |
| A-106 | A-106 | A | 2.8 | A | A | Inv. |
| A-107 | A-107 | A | 2.8 | A | A | Inv. |
| A-108 | A-108 | A | 2.8 | A | A | Inv. |
| B-7 | B-7 | B | 1.4 | B | B | Comp. |
| B-8 | B-8 | D | 1.8 | B | D | Comp. |
| B-9 | B-9 | B | 2.0 | D | B | Comp. |
| B-10 | B-10 | A | 2.7 | C | A | Comp. |
| B-11 | B-11 | A | 2.6 | C | A | Comp. |
| Inv.; Present Invention,<br>Comp.; Comparative Example | | | | | | |

As can clearly be seen from Tables 13 and 14, core/shell type colored fine particle dispersions comprising dyes according to the present invention, as well as colored fine particle dispersions which were prepared by adding high-boiling point organic solvents during preparation, exhibited excellent ejection stability, and images formed by employing these dispersions exhibited high image density, excellent light fastness and bright tone compared to the comparative examples.

In accordance with the present invention, it is possible to provide a colored composition and a colored fine particle dispersion which result in excellent light fastness of color images, high density, and desired color reproduction (tone) and an ink jet ink using the same, and an ink jet recording method which exhibit excellent color reproduction and various types of stability.

## Claims

**1.** A colored dispersion comprising a polymer and a dye represented by General Formula (1):

General Formula (1)

X = D-B

wherein X is a group represented by General Formulas (1-1) to (1-15) ; D is a nitrogen atom or $=CR_1-$, $R_1$ being a hydrogen atom or a substituent; and B is a group represented by General Formulas (2-1) to (2-16):

General Formula (1-1)

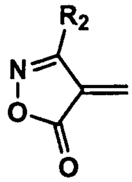

General Formula (1-2)

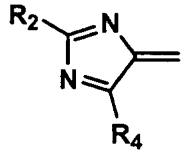

General Formula (1-3)

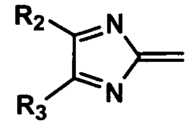

General Formula (1-4)

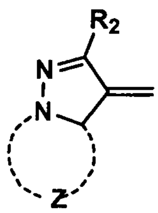

General Formula (1-5)

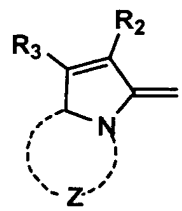

General Formula (1-6)

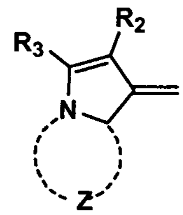

General Formula (1-7)

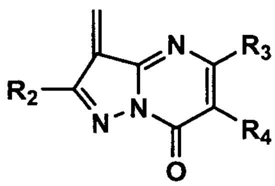

General Formula (1-8)

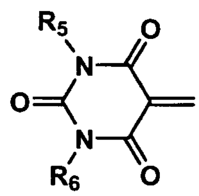

General Formula (1-9)

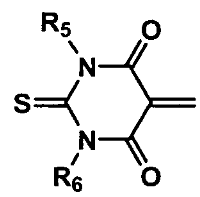

General Formula (1-10)

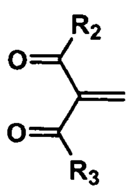

General Formula (1-11)

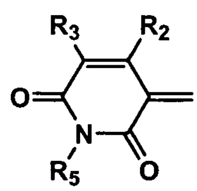

General Formula (1-12)

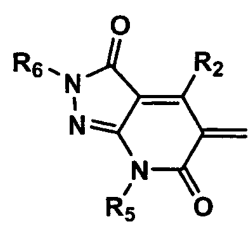

General Formula (1-13)

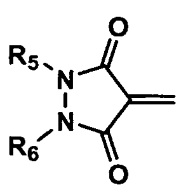

General Formula (1-14)

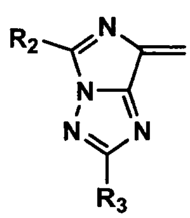

General Formula (1-15)

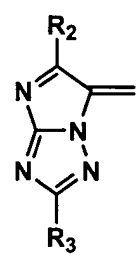

General Formula (2-1)

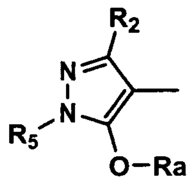

General Formula (2-2)

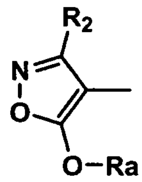

General Formula (2-3)

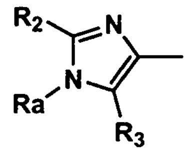

General Formula (2-4)

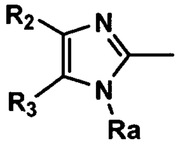

General Formula (2-5)

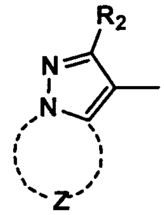

General Formula (2-6)

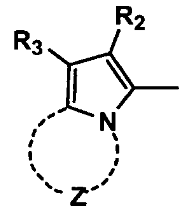

General Formula (2-7)

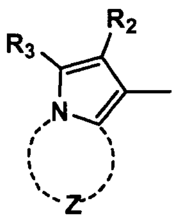

General Formula (2-8)

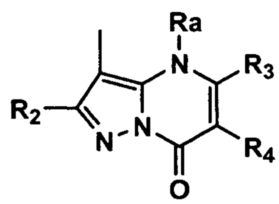

General Formula (2-9)

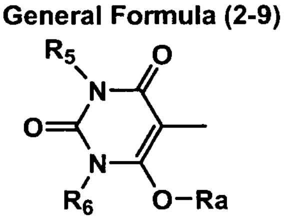

General Formula (2-10)

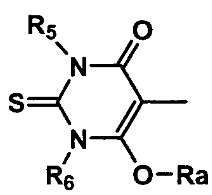

General Formula (2-11)

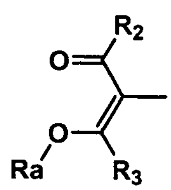

General Formula (2-12)

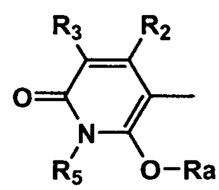

General Formula (2-13)

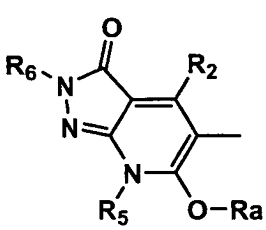

General Formula (2-14)

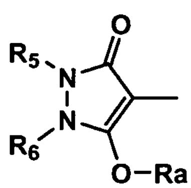

General Formula (2-15)

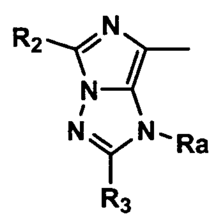

General Formula (2-16)

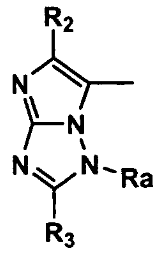

wherein $R_2$, $R_3$, $R_4$, $R_5$, $R_6$, and $R_a$ each is a hydrogen atom or a substituent, provided that $R_2$, $R_3$, $R_4$, $R_5$, $R_6$, or $R_a$ may be jointed together to form a ring; and Z is a group of atoms which forms a 5- or 6-membered heterocyclic ring containing a nitrogen atom in the heterocyclic ring, provided that the heterocyclic ring may have a substituent or may be further condensed with a ring.

**2.** The colored dispersion of claim 1, wherein X in General Formula (1) is represented by General Formula (1-2), General Formula (1-4), General Formula (1-5) or General Formula (1-6).

**3.** The colored dispersion of claim 1, wherein B in General Formula (1) is represented by General Formula (2-3), General Formula (2-4), General Formula (2-5), General Formula (2-6), or General Formula (2-7).

**4.** The colored dispersion of claim 1 or claim 3, wherein X in General Formula (1) is represented by General Formula (1-2) or General Formula (1-4).

**5.** The colored dispersion of claim 1 or claim 2, wherein B in General Formula (1) is represented by General Formula (2-3) or General Formula (2-5).

**6.** The colored dispersion of claim 1, 3 or 5, wherein X in General Formula (1) is represented by General Formula (1-4).

**7.** The colored dispersion of claim 1, 2 or 4, wherein B in General Formula (1) is represented by General Formula (2-3).

**8.** The colored dispersion of claim 1, wherein X in General Formula (1) is represented by General Formula (1-4) and B in General Formula (1) is represented by General Formula (2-3).

**9.** The colored dispersion of claim 1, wherein X or B in General Formula (1) is substituted with at least one hydrogen bonding group selected from the group consisting of -OH, $-NHSO_2Rb$, -NHCOORb, -NHCONHRb, or -NHCORc, Rb being a substituent, and Rc being an aryl group, a heterocyclic group, or a branched alkyl group.

**10.** The colored dispersion of claim 1, wherein X or by B in General Formula (1) is substituted with a hydrogen bonding group, and the hydrogen bonding group forms a hydrogen bond with either a nitrogen atom or an oxygen atom in the heterocyclic ring represented by General Formulas (1-1) to (1-15) or General Formulas (2-1) to (2-16).

**11.** The colored dispersion of claim 9 or claim 10, wherein X in General Formula (1) is represent by General Formula (1-4), General Formula (1-5) or General Formula (1-6).

**12.** The colored dispersion of claim 9 to 11, wherein B in General Formula (1) is represent by General Formula (2-3) or General Formula (2-4).

**13.** The colored dispersion of claim 9 to 12, wherein the hydrogen bonding group is -OH or $-NHSO_2Rb$, Rb being a substituent.

**14.** The colored dispersion of claim 1, wherein the dye is represented by General Formula (2):

General Formula (2)

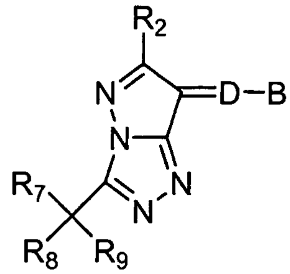

wherein $R_2$ is a hydrogen atom or a substituent; D is a nitrogen atom or $=CR_1-$, $R_1$ being a hydrogen atom or a substituent; B is a group represented by General Formulas (2-1) to (2-16) ; $R_7$ and $R_8$ each being a substituent; and $R_9$ being a hydrogen atom or a substituent.

**15.** The colored dispersion of claim 14, wherein B is represented by General Formulas (2-3), (2-4), (2-5), (2-6) or (2-7).

**16.** The colored dispersion of claim 14 or claim 15, wherein B is represented by General Formula (2-3), or General Formula (2-5).

**17.** The colored dispersion of claim 14 to 16, wherein B is represented by General Formula (2-3).

**18.** A colored dispersion comprising a polymer and a dye represented by General Formula (3):

General Formula (3)

$$A\{L\text{-}G)_q$$

wherein A is a residue of a dye represented by General Formula (1); L is a divalent linking group or a single bond; G is a group comprising a fade preventing group for the dye residue; and q is an integer of 1 or 2, provided that when q is 2, each -L-G may be the same or different.

**19.** The colored dispersion of claim 18, wherein G in General Formula (3) is a residue of a compound selected from the group consisting of General Formulas (4) to (9), the residue being a part of the compound which is eliminated a hydrogen atom from the compound:

**Genaral Formula (4)**

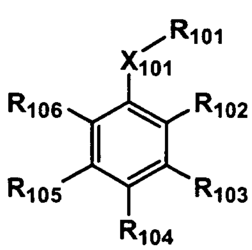

**Genaral Formula (5)**

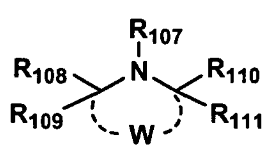

**Genaral Formula (6)**

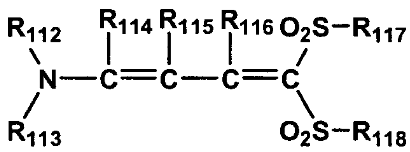

**Genaral Formula (7)**

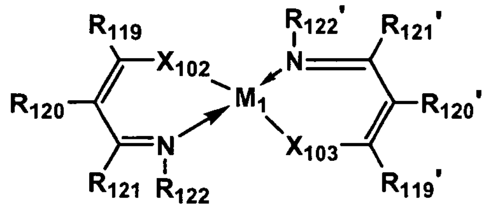

**Genaral Formula (8)**

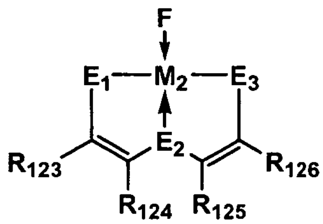

**Genaral Formula (9)**

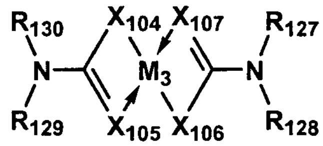

wherein $R_{101}$ represents a hydrogen atom, an alkyl group, an alkenyl group, an aryl group, a heterocyclic group, a silyl group, or a phosphino group; $X_{101}$ represents -O-, -S-, or -($NR_d$)-, wherein $R_d$ represents a hydrogen atom, an alkyl group, or an aryl group; $R_{102}$, $R_{103}$, $R_{104}$, $R_{105}$, and $R_{106}$ each represents a hydrogen atom or a non-metallic substituent and substituents at the ortho position of $R_{102}$ through $R_{106}$ can be joined together to form a 5- to 7-membered ring; $R_{107}$ represents a hydrogen atom, an alkyl group, an alkenyl group, an aryl group, a hydroxyl group, an acyl group, a sulfonyl group, or a sulfinyl group; W represents a group of non-metallic atoms necessary to form a 5- to 7-membered ring having either an oxygen atom or a nitrogen atom; $R_{108}$, $R_{109}$, $R_{110}$, and $R_{111}$ each represents a hydrogen atom or a non-metallic substituent; $R_{112}$, $R_{113}$, $R_{114}$, $R_{115}$, $R_{116}$, $R_{117}$, and $R_{118}$ each represents a non-metallic substituent exhibiting an ultraviolet ray absorbing function; $M_1$ and $M_2$ each represents copper, cobalt, nickel, palladium, or platinum; $M_3$ represents nickel, cobalt, or iron; $R_{119}$, $R_{120}$, $R_{121}$, $R_{119}'$ , $R_{120}'$, and $R_{121}'$ each represents a hydrogen atom, an alkyl group, or an aryl group; $R_{122}$ and $R_{122}'$ each represents a hydrogen atom, an alkyl group, an aryl group, a hydroxyl group, an alkoxy group, or an aryloxy group; $X_{102}$ and $X_{103}$ each represents -O-, or -S-; each substituent of $R_{119}$ through $R_{122}$ and $R_{119}'$ through $R_{122}'$ can be joined together with an adjacent group to form an aromatic ring or a 5- to 8-membered ring; $E_1$ and $E_3$ each independently represents -O-, -S-, or -N ($R_{131}$) -; an $E_1$-$M_2$ bond or an $E_3$-$M_2$ bond may be a coordinate bond and in such cases, $E_1$ and $E_2$ each represents a hydroxyl group, a mercapto group, an alkoxy group, an alkylthio group, or -N($R_{131}$) ($R_{132}$), wherein $R_{131}$ and $R_{132}$ each represents a hydrogen atom, an alkyl group, an aryl group, or a hydroxyl group; $E_2$ represents -O-, -S-, or -N($R_{133}$)-, wherein $R_{133}$ represents a hydrogen atom or an aryl group; $R_{123}$ through $R_{126}$ each independently represents a hydrogen atom, an alkyl group or an aryl group; herein at least two substituents selected from the group consisting of $R_{123}$ and $R_{124}$, $R_{125}$ and $R_{126}$, and $R_{124}$ and $R_{125}$ can be joined together to form a 5- to 8-membered ring; F represents a compound which is capable of coordinating to $M_2$, and the number of coordination positions of the compound is 1 to 5; $R_{127}$ through $R_{130}$ each independently represents a hydrogen atom, an alkyl group, an aryl group, or a heterocyclic group; $X_{104}$ through $X_{107}$ each represents -S-, or -O-; $M_3$ represents nickel, cobalt, or iron; $R_{127}$ and $R_{128}$ or $R_{129}$ and $R_{130}$, can be joined together to form a ring structure.

**20.** The colored dispersion of claim 1 to 19, wherein the dispersion comprises particles having a core/shell structure, and the dye and the polymer are incorporated in the core portion.

**21.** An ink-jet ink comprising the colored particle dispersion of claim 1 to 20.

**22.** A method for recording an image comprising a step of:

jetting a droplet of an ink-jet ink of claim 21 onto a surface of a recording sheet.

**23.** A dye represented by General Formula (1), wherein X or B in General Formula (1) is substituted with at least one hydrogen bonding group selected from the group consisting of -OH, -NHSO$_2$Rb, -NHCOORb, -NHCONHRb, or -NHCORc, Rb being a substituent and Rc being an aryl group, a heterocyclic group, or a branched alkyl group,

General Formula (1)

X = D-B

wherein X is a group represented by General Formulas (1-1) to (1-15); D is a nitrogen atom or =CR$_1$-, R$_1$ being a hydrogen atom or a substituent; and B is a group represented by General Formulas (2-1) to (2-16):

**General Formula (1-1)**

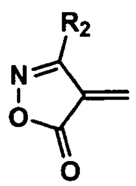

**General Formula (1-2)**

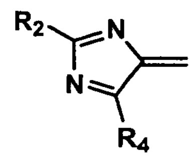

**General Formula (1-3)**

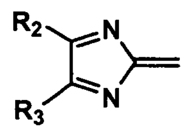

**General Formula (1-4)**

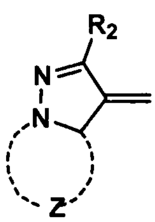

**General Formula (1-5)**

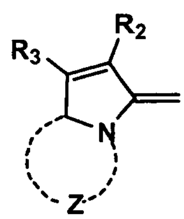

**General Formula (1-6)**

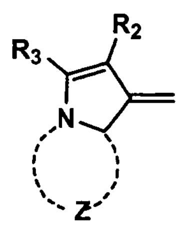

**General Formula (1-7)**

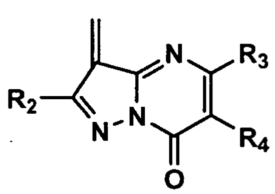

**General Formula (1-8)**

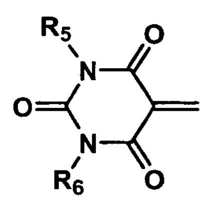

**General Formula (1-9)**

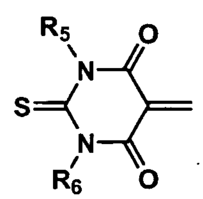

**General Formula (1-10)**

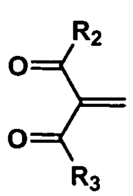

**General Formula (1-11)**

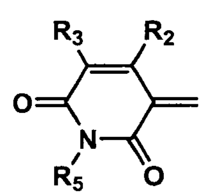

**General Formula (1-12)**

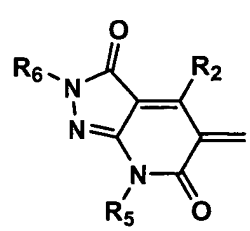

General Formula (1-13)

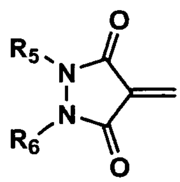

General Formula (1-14)

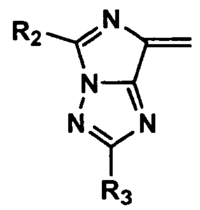

General Formula (1-15)

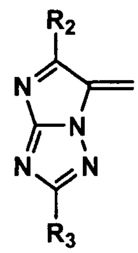

General Formula (2-1)

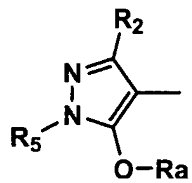

General Formula (2-2)

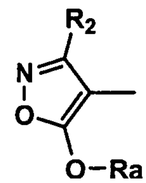

General Formula (2-3)

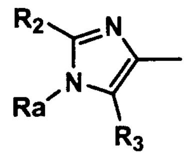

General Formula (2-4)

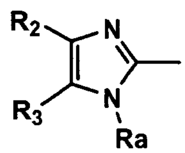

General Formula (2-5)

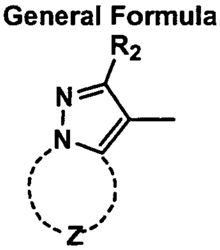

General Formula (2-6)

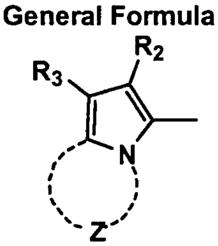

General Formula (2-7)

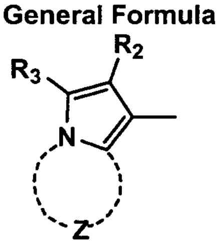

General Formula (2-8)

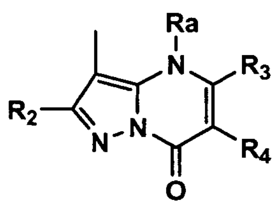

General Formula (2-9)

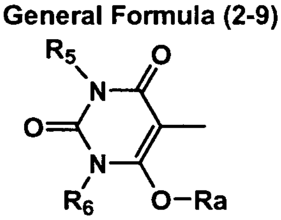

General Formula (2-10)

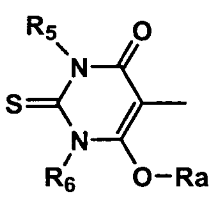

General Formula (2-11)

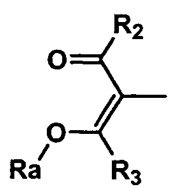

General Formula (2-12)

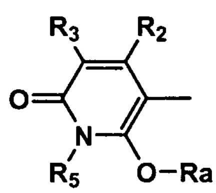

**General Formula (2-13)**

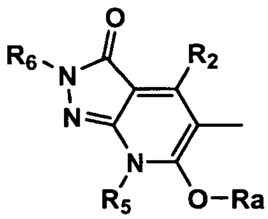

**General Formula (2-14)**

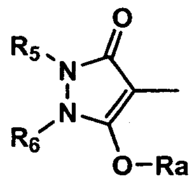

**General Formula (2-15)**

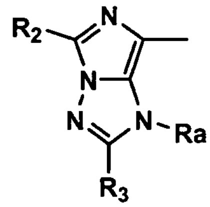

**General Formula (2-16)**

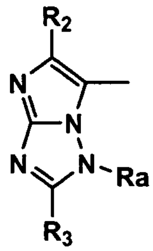

wherein $R_2$, $R_3$, $R_4$, $R_5$, $R_6$, and $R_a$ each is a hydrogen atom or a substituent, provided that $R_2$, $R_3$, $R_4$, $R_5$, $R_6$, or $R_a$ may be jointed together to form a ring; and Z is a group of atoms which forms a 5- or 6-membered heterocyclic ring containing a nitrogen atom in the heterocyclic ring, provided that the heterocyclic ring may have a substituent or may be further condensed with a ring.

**24.** The dye of claim 23, wherein X or B in General Formula (1) is substituted with a hydrogen bonding group, and the hydrogen bonding group forms a hydrogen bond with either a nitrogen atom or an oxygen atom in the heterocyclic ring represented by General Formulas (1-1) to (1-15) or General Formulas (2-1) to (2-16).

**25.** The dye of claim 23 or claim 24, wherein X in General Formula (1) is represent by General Formula (1-4), General Formula (1-5) or General Formula (1-6).

**26.** The dye of claim 23 to 25, wherein B in General Formula (1) is represent by General Formula (2-3) or General Formula (2-4).

**27.** The dye of claim 23 to 26, wherein the hydrogen bonding group is -OH or $-NHSO_2Rb$, Rb being a substituent.

**28.** The dye of claim 23, wherein the dye is represented by General Formula (2) :

General Formula (2)

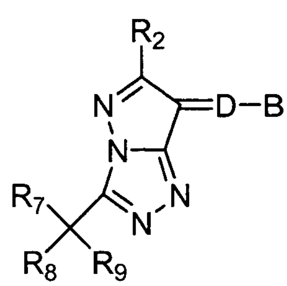

wherein $R_2$ is a hydrogen atom or a substituent; D is a nitrogen atom or $=CR_1-$, $R_1$ being a hydrogen atom or a substituent; B is a group represented by General Formulas (2-1) to (2-16); $R_7$ and $R_8$ each being a substituent;

and $R_9$ being a hydrogen atom or a substituent.

**29.** The dye of claim 28, wherein B in General Formula (2) is represented by General Formula (2-3), General Formula (2-4), General Formula (2-5), General Formula (2-6), or General Formula (2-7).

**30.** The dye of claim 28 or claim 29, wherein B in General Formula (2) is represented by General Formula (2-3) or General Formula (2-5).

**31.** The dye of claim 28 to 30, wherein B in General Formula (2) is represented by General Formula (2-3)

**32.** A dye represented by General Formula (3):

General Formula (3)

$$A\{L\text{-}G)_q$$

wherein A is a residue of a dye represented by General Formula (1); L is a divalent linking group or a single bond; G is a group comprising a light fade preventing group for the dye residue; and q is an integer of 1 or 2, provided that when q is 2, each -L-G may be the same or different.

**33.** The dye of claim 32, wherein G in General Formula (3) is selected from the group consisting of General Formulas (4) to (9):

**Genaral Formula (4)**

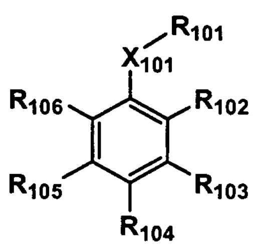

**Genaral Formula (5)**

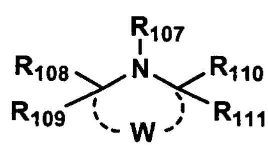

**Genaral Formula (6)**

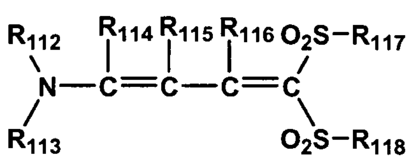

**Genaral Formula (7)**

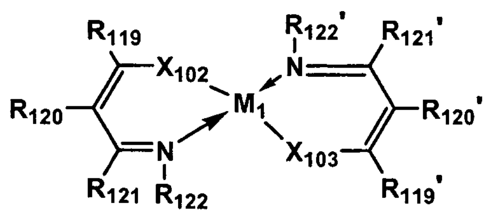

## Genaral Formula (8)

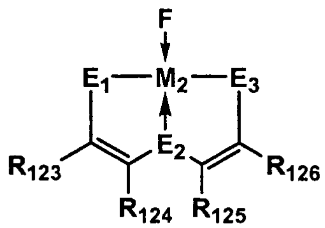

## Genaral Formula (9)

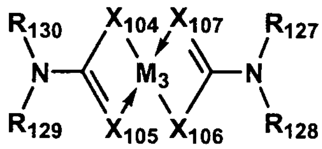

wherein $R_{101}$ represents a hydrogen atom, an alkyl group, an alkenyl group, an aryl group, a heterocyclic group, a silyl group, or a phosphino group; $X_{101}$ represents -O-, -S-, or-($NR_d$)-, wherein $R_d$ represents a hydrogen atom, an alkyl group, or an aryl group; $R_{102}$, $R_{103}$, $R_{104}$, $R_{105}$, and $R_{106}$ each represents a hydrogen atom or a non-metallic substituent and substituents at the ortho position of $R_{102}$ through $R_{106}$ can be joined together to form a 5- to 7-membered ring; $R_{107}$ represents a hydrogen atom, an alkyl group, an alkenyl group, an aryl group, a hydroxyl group, an acyl group, a sulfonyl group, or a sulfinyl group; W represents a group of non-metallic atoms necessary to form a 5- to 7-membered ring having either an oxygen atom or a nitrogen atom; $R_{108}$, $R_{109}$, $R_{110}$, and $R_{111}$ each represents a hydrogen atom or a non-metallic substituent; $R_{112}$, $R_{113}$, $R_{114}$, $R_{115}$, $R_{116}$, $R_{117}$, and $R_{118}$ each represents a non-metallic substituent exhibiting an ultraviolet ray absorbing function; $M_1$ and $M_2$ each represents copper, cobalt, nickel, palladium, or platinum; $M_3$ represents nickel, cobalt, or iron; $R_{119}$, $R_{120}$, $R_{121}$, $R_{119}'$ , $R_{120}'$, and $R_{121}'$ each represents a hydrogen atom, an alkyl group, or an aryl group; $R_{122}$ and $R_{122}'$ each represents a hydrogen atom, an alkyl group, an aryl group, a hydroxyl group, an alkoxy group, or an aryloxy group; $X_{102}$ and $X_{103}$ each represents -O-, or -S-; each substituent of $R_{119}$ through $R_{122}$ and $R_{119}'$ through $R_{122}'$ can be joined together with an adjacent group to form an aromatic ring or a 5- to 8-membered ring; $E_1$ and $E_3$ each independently represents -O-, -S-, or -N ($R_{131}$) -; an $E_1$-$M_2$ bond or an $E_3$-$M_2$ bond may be a coordinate bond and in such cases, $E_1$ and $E_2$ each represents a hydroxyl group, a mercapto group, an alkoxy group, an alkylthio group, or -N ($R_{131}$) ($R_{132}$) , wherein $R_{131}$ and $R_{132}$ each represents a hydrogen atom, an alkyl group, an aryl group, or a hydroxyl group; $E_2$ represents -O-, -S-, or -N($R_{133}$)-, wherein $R_{133}$ represents a hydrogen atom or an aryl group; $R_{123}$ through $R_{126}$ each independently represents a hydrogen atom, an alkyl group or an aryl group; herein at least two substituents selected from the group consisting of $R_{123}$ and $R_{124}$, $R_{125}$ and $R_{126}$, and $R_{124}$ and $R_{125}$ can be joined together to form a 5- to 8-membered ring; F represents a compound which is capable of coordinating to $M_2$, and the number of coordination positions of the compound is 1 to 5; $R_{127}$ through $R_{130}$ each independently represents a hydrogen atom, an alkyl group, an aryl group, or a heterocyclic group; $X_{104}$ through $X_{107}$ each represents -S-, or -O-; $M_3$ represents nickel, cobalt, or iron; $R_{127}$ and $R_{128}$ or $R_{129}$ and $R_{130}$, can be joined together to form a ring structure.

**34.** The dye of claim 32, wherein A in General Formula (3) is substituted with at least one hydrogen bonding group selected from the group consisting of -OH, -$NHSO_2$Rb, -NHCOORb, -NHCONHRb, or -NHCORc, Rb being a substituent, and Rc being an aryl group, a heterocyclic group, or a branched alkyl group.

**35.** The dye of claim 28, wherein X or B in General Formula (2) is substituted with at least one hydrogen bonding group selected from the group consisting of -OH, -$NHSO_2$Rb, -NHCOORb, -NHCONHRb, or -NHCORc, Rb being a substituent, and Rc being an aryl group, a heterocyclic group, or a branched alkyl group.

**36.** The dye of claim 34, wherein the hydrogen bonding group is -OH or -$NHSO_2$Rb, Rb being a substituent.

**37.** The dye of claim 35, wherein the hydrogen bonding group is -OH or -$NHSO_2$Rb, Rb being a substituent.

FIG. 1

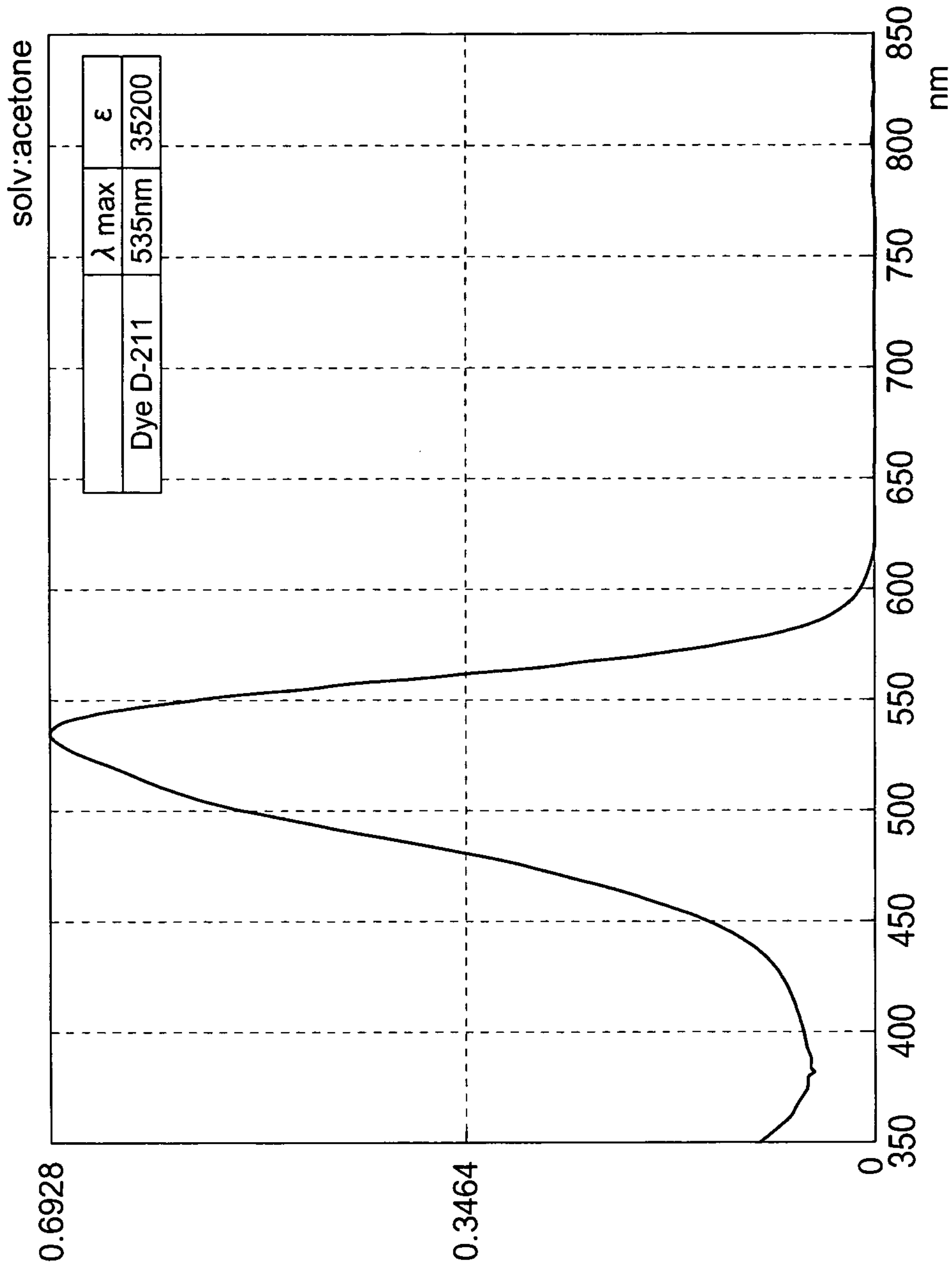
solv:acetone
λ max
ε
Dye D-211
535nm
35200
0.6928
0.3464
0
350
400
450
500
550
600
650
700
750
800
850
nm

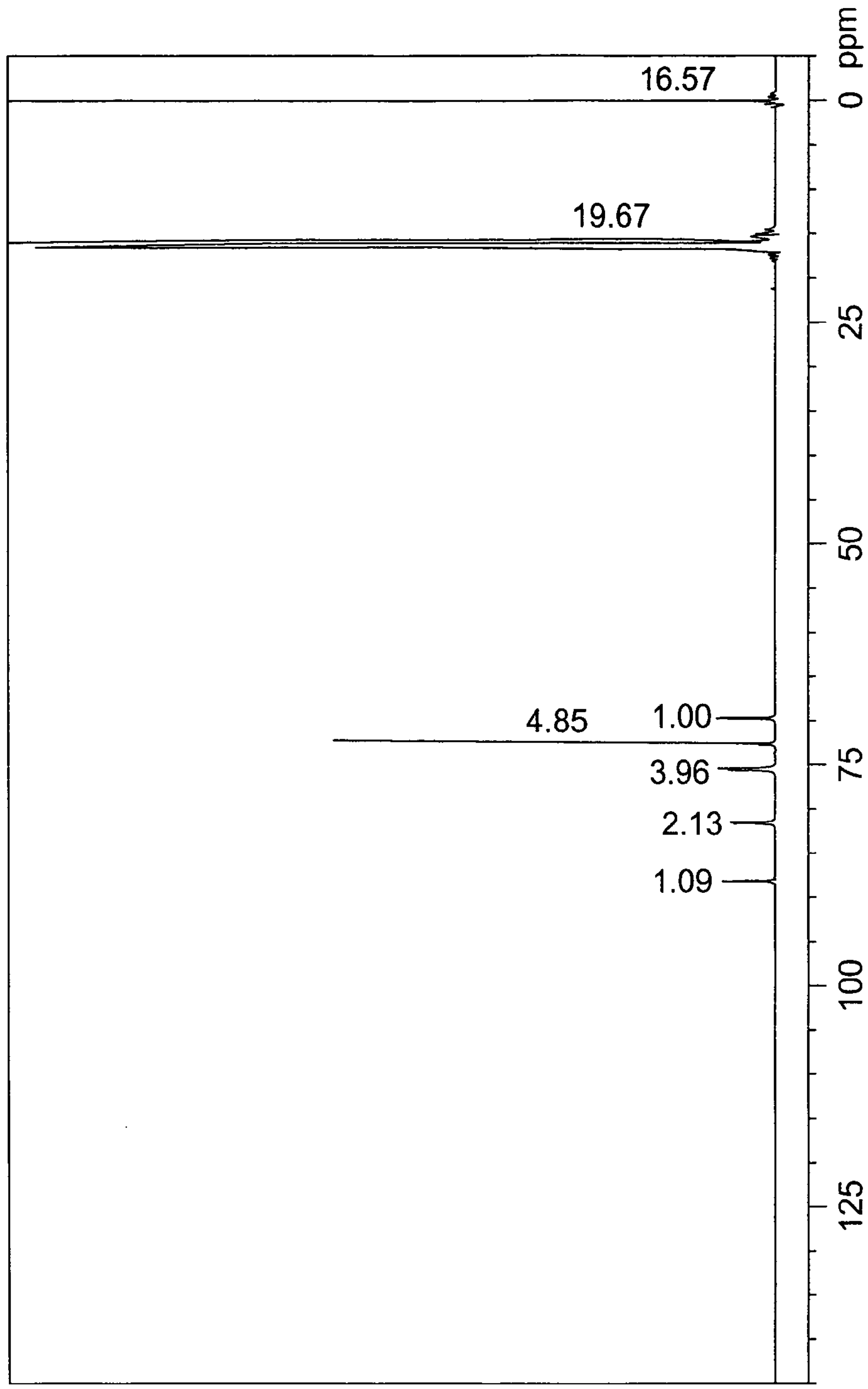


FIG. 2